# EUROPEAN PATENT SPECIFICATION

(11) **EP 4 428 521 B1**
(45) Date of publication and mention of the grant of the patent: **02.12.2026**
(21) Application number: 22898227.8
(22) Date of filing: 29.09.2022
(51) Int. Cl.: G03H 1/04, G01N 21/45, G03H 1/08, G03H 1/26, G03H 1/32, G03H 1/00

(54) **OBSERVATION DEVICE AND OBSERVATION METHOD**
BEOBACHTUNGSVORRICHTUNG UND BEOBACHTUNGSVERFAHREN
DISPOSITIF D'OBSERVATION ET PROCÉDÉ D'OBSERVATION

(30) Priority: 29.11.2021 JP 2021192929
(43) Date of publication of application: 11.09.2024
(73) Proprietor: Hamamatsu Photonics K.K., Hamamatsu-shi, Shizuoka 435-8558 (JP)
(72) Inventor: YASUHIKO, Osamu, Hamamatsu-shi, Shizuoka 435-8558 (JP); TAKEUCHI, Kozo, Hamamatsu-shi, Shizuoka 435-8558 (JP); YAMADA, Hidenao, Hamamatsu-shi, Shizuoka 435-8558 (JP)
(74) Representative: Hoffmann Eitle
(86) International application number: PCT/JP2022/036582
(87) International publication number: WO 2023/095442

(56) References cited:
- EP-A1- 4 421 550
- WO-A1-2013/065796
- WO-A1-2013/065796
- WO-A1-2016/208322
- WO-A1-2019/044336
- WO-A1-2021/256202
- JP-A- 2013 096 918
- JP-A- H0 942 925
- JP-B1- 6 918 395
- JP-B1- 7 058 901
- KR-B1- 101 855 366
- US-A1- 20250 003 873

## Description

### Technical Field

The present disclosure relates to an observation apparatus and an observation method.

### Background Art

An observation apparatus described in Patent Document 1 splits light output from a light source into object light and reference light, combines the object light passed through a moving observation object and the reference light obtained by shifting an optical frequency by a heterodyne frequency, and performs heterodyne interference between the object light and the reference light. Further, the observation apparatus can acquire time series data of a complex amplitude image of the object light on an imaging plane based on time series data of an intensity image of interference light reaching the imaging plane of a camera. The above observation apparatus can perform non-staining and non-invasive imaging of the moving observation object, and may be used for, for example, observing moving cells in a flow cytometer.

### Citation List

### Patent Literature

Patent Document 1: International Publication No. 2013/065796

### Summary of Invention

### Technical Problem

Although the observation apparatus described in Patent Document 1 can be applied to the observation of a single cell as the observation object, it is difficult to apply the observation apparatus to the observation of a multiple scattering object such as a three-dimensional cell tissue called a spheroid or an organoid. This is because, when a large amount of multiple scattered light occurs in the observation object, influence of the multiple scattered light significantly appears in the acquired image.

Light scattering refers to a phenomenon in which light interacts with an object to change a traveling direction of the light. In particular, when spatial non-uniformity of a refractive index in the object increases, the light interacts with the object many times in passing through the object. The light which interacts with the object many times as described above is referred to as the multiple scattered light. On the other hand, the light which interacts with the object only once is referred to as single scattered light. It is known that the multiple scattered light causes an increase in speckle and a deterioration in single-scattering to multi-scattering ratio (SMR), and thus, becomes a barrier for performing the measurement.

The speckle is generated by a large change in intensity or phase caused spatially by interference of the multiple scattered light when the light is temporally and spatially coherent. In order to suppress speckle generation, a light source which outputs temporally or spatially incoherent light may be used. For example, a general bright field microscope such as a phase contrast microscope acquires an image without speckles by using a spatially and temporally incoherent light source such as a halogen lamp, a light emitting diode, or the like.

The deterioration of the SMR is caused by that the multiple scattered light becomes dominant over the single scattered light, and the single scattered light is buried in the multiple scattered light. As the observation object becomes larger and an observation depth becomes deeper, a component of the single scattered light exponentially decreases, whereas a component of the multiple scattered light increases.

A scattering direction of the single scattered light has a direct correspondence relationship with a structure of the object, and thus, it is easily used to measure the structure of the object. On the other hand, the relationship between the multiple scattered light and the structure of the object is complex, and it is difficult to extract information on the structure of the object. Therefore, in the imaging technique using the single scattered light, it is known that the measurement fails when the single scattered light is buried in the multiple scattered light (that is, when the SMR deteriorates).

The suppression of the SMR deterioration is possible by a technique called gating for selectively detecting the single scattered light out of the single scattered light and the multiple scattered light. The multiple scattered light is suppressed by the gating, and thus, the speckles can be suppressed at the same time as the SMR deterioration is suppressed. The gating is achieved using degrees of freedom such as space, time, and polarization. A confocal microscope is an example of the spatial gating. Optical coherence tomography (OCT) is an example of the temporal and spatial gating.

The observation apparatus described in Patent Document 1 does not remove the influence of the multiple scattered light, and thus, the speckle increases in the acquired image and the SMR deteriorates, when the multiple scattered light generated in the observation object is large. Therefore, although the observation apparatus described in Patent Document 1 can be applied to the observation of a single cell in which the occurrence of the multiple scattered light is small, it is difficult to apply the observation apparatus to the observation of the multiple scattering object such as the three-dimensional cell tissue in which the occurrence of the multiple scattered light is large.

An object of an embodiment is to provide an observation apparatus and an observation method capable of observing a moving observation object while reducing influence of multiple scattered light even when the observation object is a multiple scattering object.

### Solution to Problem

An embodiment of a first aspect is an observation apparatus. The observation apparatus includes (1) an interference optical system for splitting light output from a light source into object light and reference light, irradiating an observation object moving along a first direction with the object light, and combining and outputting the object light passed through the observation object and the reference light; (2) a frequency shifter provided on an optical path of the object light or the reference light from splitting to combining in the interference optical system, and for setting respective optical frequencies of the object light and the reference light different from each other by a heterodyne frequency; (3) an imaging unit having an imaging plane for receiving the object light and the reference light output from the interference optical system, and for imaging an interference intensity image generated by interference between the object light and the reference light on the imaging plane, and outputting time series data of the interference intensity image; and (4) an analysis unit for performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane coaxially with each other, and the analysis unit generates a complex differential interference image of each of a plurality of positions and a plurality of light irradiation directions when performing focused irradiation of the object light on the observation object by the irradiation optical system based on the time series data of the interference intensity image, and generates a three-dimensional phase image of the observation object based on the complex differential interference image.

An embodiment of a second aspect is an observation apparatus. The observation apparatus includes (1) an interference optical system for splitting light output from a light source into object light and reference light, irradiating an observation object moving along a first direction with the object light, and combining and outputting the object light passed through the observation object and the reference light; (2) an imaging unit having an imaging plane for receiving the object light and the reference light output from the interference optical system, and for imaging an interference intensity image generated by interference between the object light and the reference light on the imaging plane, and outputting time series data of the interference intensity image; and (3) an analysis unit for performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane from directions different from each other, and the analysis unit generates a complex differential interference image of each of a plurality of positions and a plurality of light irradiation directions when performing focused irradiation of the object light on the observation object by the irradiation optical system based on the time series data of the interference intensity image, and generates a three-dimensional phase image of the observation object based on the complex differential interference image.

An embodiment of a first aspect is an observation method. The observation method includes (1) an interference step of causing object light and reference light to interfere with each other, by using an interference optical system for splitting light output from a light source into the object light and the reference light, irradiating an observation object moving along a first direction with the object light, and combining and outputting the object light passed through the observation object and the reference light; (2) a modulation step of setting respective optical frequencies of the object light and the reference light different from each other by a heterodyne frequency, by using a frequency shifter provided on an optical path of the object light or the reference light from splitting to combining in the interference optical system; (3) an imaging step of imaging an interference intensity image generated by interference between the object light and the reference light on an imaging plane, and outputting time series data of the interference intensity image, by using an imaging unit having the imaging plane for receiving the object light and the reference light output from the interference optical system; and (4) an analysis step of performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane coaxially with each other, and the analysis step includes generating a complex differential interference image of each of a plurality of positions and a plurality of light irradiation directions when performing focused irradiation of the object light on the observation object by the irradiation optical system based on the time series data of the interference intensity image, and generating a three-dimensional phase image of the observation object based on the complex differential interference image.

An embodiment of a second aspect is an observation method. The observation method includes (1) an interference step of causing object light and reference light to interfere with each other, by using an interference optical system for splitting light output from a light source into the object light and the reference light, irradiating an observation object moving along a first direction with the object light, and combining and outputting the object light passed through the observation object and the reference light; (2) an imaging step of imaging an interference intensity image generated by interference between the object light and the reference light on an imaging plane, and outputting time series data of the interference intensity image, by using an imaging unit having the imaging plane for receiving the object light and the reference light output from the interference optical system; and (3) an analysis step of performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane from directions different from each other, and the analysis step includes generating a complex differential interference image of each of a plurality of positions and a plurality of light irradiation directions when performing focused irradiation of the object light on the observation object by the irradiation optical system based on the time series data of the interference intensity image, and generating a three-dimensional phase image of the observation object based on the complex differential interference image.

An embodiment is a program. The program is a program for causing a computer to execute the steps of the observation method of the above configuration.

An embodiment is a recording medium. The recording medium is a computer readable recording medium recording the program of the above configuration.

### Advantageous Effects of Invention

According to the observation apparatus and the observation method of the embodiments, it is possible to observe a moving observation object while reducing influence of multiple scattered light even when the observation object is a multiple scattering object.

### Brief Description of Drawings

[FIG. 1] FIG. 1 is a diagram illustrating a configuration of an observation apparatus 1A.
[FIG. 2] FIG. 2 is a diagram illustrating a configuration of an observation apparatus 1B.
[FIG. 3] FIG. 3 includes diagrams illustrating an imaging optical system including a lens 25, a cylindrical lens 26, and a lens 28 in each of the configurations of the observation apparatus 1A (FIG. 1) and the observation apparatus 1B (FIG. 2), and shows (a) the diagram viewed in a y direction, and (b) the diagram viewed in an x direction.
[FIG. 4] FIG. 4 includes diagrams illustrating processing contents of a first complex amplitude image generation unit 52 of an analysis unit 50 of the observation apparatus 1A (FIG. 1), and shows (a) time series data I(kₓ, y, t) of an interference intensity image output from an imaging unit 40, and (b) data I(kₓ₀, y₀, t) in which a time t at a certain light irradiation direction kₓ₀ and a certain second direction position y₀ is a variable.
[FIG. 5] FIG. 5 includes diagrams illustrating the processing contents of the first complex amplitude image generation unit 52 of the analysis unit 50 of the observation apparatus 1A (FIG. 1), and shows (a) a result of Fourier transform of I(kₓ₀, y₀, t), (b) a result of cutting out a part of the result of Fourier transform of (a) and shifting it in parallel, and (c) a result of Fourier transform of the result of (b).
[FIG. 6] FIG. 6 includes diagrams illustrating the processing contents of the first complex amplitude image generation unit 52 of the analysis unit 50 of the observation apparatus 1B (FIG. 2), and shows (a) time series data I(kₓ, y, t) of the interference intensity image output from the imaging unit 40, and (b) data I(kₓ₀, y, t₀) in which a second direction position y at a certain light irradiation direction kₓ₀ and a certain time t₀ is a variable.
[FIG. 7] FIG. 7 includes diagrams illustrating the processing contents of the first complex amplitude image generation unit 52 of the analysis unit 50 of the observation apparatus 1B (FIG. 2), and shows (a) a result of Fourier transform of I(kₓ₀, y, t₀), (b) a result of cutting out a part of the result of Fourier transform of (a) and shifting it in parallel, and (c) a result of Fourier transform of the result of (b).
[FIG. 8] FIG. 8 includes (a), (b) diagrams for describing object light output from an observation object S in each of the configurations of the observation apparatus 1A (FIG. 1) and the observation apparatus 1B (FIG. 2).
[FIG. 9] FIG. 9 includes (a), (b) diagrams for describing the object light output from the observation object S in each of the configurations of the observation apparatus 1A (FIG. 1) and the observation apparatus 1B (FIG. 2).
[FIG. 10] FIG. 10 is a flowchart illustrating the processing contents of the first complex amplitude image generation unit 52 of the analysis unit 50.
[FIG. 11] FIG. 11 is a flowchart of an observation method according to a first embodiment.
[FIG. 12] FIG. 12 is a diagram showing a kernel function g.
[FIG. 13] FIG. 13 is a flowchart of a first configuration of a two-dimensional phase image generation step S4.
[FIG. 14] FIG. 14 is a flowchart of a second configuration of the two-dimensional phase image generation step S4.
[FIG. 15] FIG. 15 is a diagram showing the kernel function.
[FIG. 16] FIG. 16 is a flowchart of a third configuration of the two-dimensional phase image generation step S4.
[FIG. 17] FIG. 17 is a diagram illustrating a configuration of an observation apparatus 1C.
[FIG. 18] FIG. 18 is a diagram illustrating a configuration of an observation apparatus 1D.
[FIG. 19] FIG. 19 is a flowchart of an observation method according to a second embodiment.
[FIG. 20] FIG. 20 is a diagram illustrating images and an order of processing steps of a second complex amplitude image generation step S63 and a two-dimensional phase image generation step S65.
[FIG. 21] FIG. 21 is a diagram illustrating images and an order of processing steps of the second complex amplitude image generation step S63, a phase conjugate operation step S64, and the two-dimensional phase image generation step S65.
[FIG. 22] FIG. 22 is a diagram illustrating images and an order of processing steps of the second complex amplitude image generation step S63, the phase conjugate operation step S64, and the two-dimensional phase image generation step S65.
[FIG. 23] FIG. 23 is a diagram illustrating images and an order of processing steps of the second complex amplitude image generation step S63, the phase conjugate operation step S64, and the two-dimensional phase image generation step S65.
[FIG. 24] FIG. 24 is a diagram illustrating images and an order of processing steps of a three-dimensional phase image generation step S66 and a refractive index distribution calculation step S67.
[FIG. 25] FIG. 25 is a diagram for describing an outline of a phase conjugate operation, and is the diagram illustrating input light and output light when an interference intensity image is imaged by an imaging unit.
[FIG. 26] FIG. 26 is a diagram for describing the outline of the phase conjugate operation, and is the diagram illustrating input light and output light in a case in which a relationship between light irradiation and imaging is reversed.
[FIG. 27] FIG. 27 is a diagram illustrating image dividing, the phase conjugate operation, and image combining in the phase conjugate operation step S64.
[FIG. 28] FIG. 28 is a diagram illustrating a configuration of an observation apparatus 1E.
[FIG. 29] FIG. 29 is a diagram illustrating a configuration of an observation apparatus 1F.
[FIG. 30] FIG. 30 is a flowchart of an observation method according to a third embodiment.
[FIG. 31] FIG. 31 is a flowchart of the observation method according to the third embodiment.
[FIG. 32] FIG. 32 is a diagram illustrating a relationship between a region including an observation object and first to J-th blocks.
[FIG. 33] FIG. 33 is a diagram illustrating a processing procedure for the first to J-th blocks.
[FIG. 34] FIG. 34 is a diagram illustrating processing contents of a BPM.
[FIG. 35] FIG. 35 is a flowchart of a third complex amplitude image generation step S77.

### Description of Embodiments

Hereinafter, embodiments of an observation apparatus and an observation method will be described in detail with reference to the accompanying drawings. In the description of the drawings, the same elements will be denoted by the same reference signs, and redundant description will be omitted. The present invention is not limited to these examples, and the Claims and all the changes within their scope are intended as would fall within the scope of the present invention.

### (First embodiment)

As a configuration of an apparatus according to a first embodiment, an observation apparatus 1A and an observation apparatus 1B will be described.

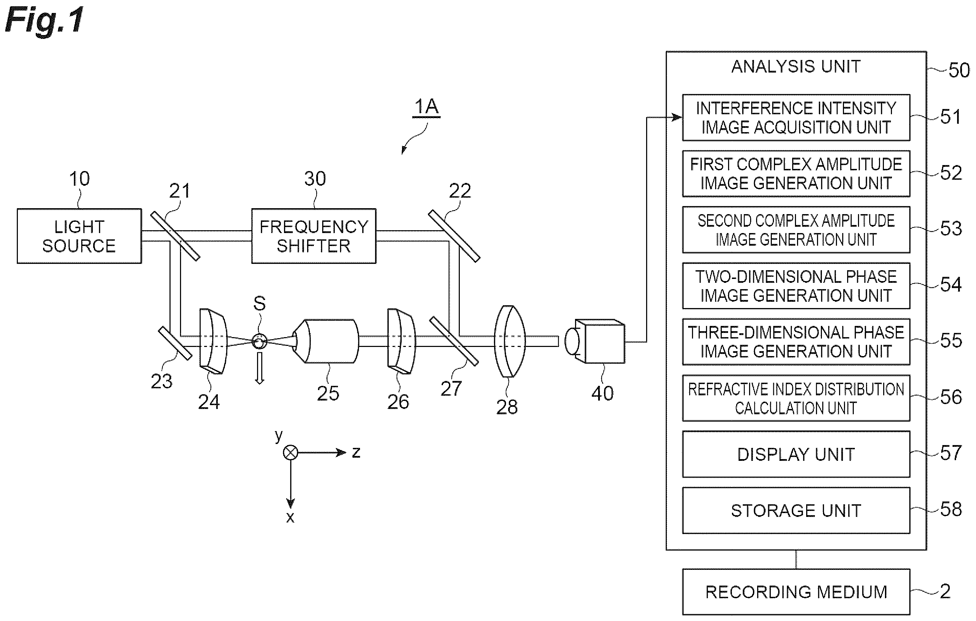

FIG. 1 is a diagram illustrating a configuration of an observation apparatus 1A. The observation apparatus 1A includes a light source 10, a beam splitter 21, a mirror 22, a mirror 23, a cylindrical lens 24, a lens 25, a cylindrical lens 26, a beam splitter 27, a lens 28, a frequency shifter 30, an imaging unit 40, and an analysis unit 50.

The observation apparatus 1A is an apparatus for observing an observation object S moving along a first direction between the cylindrical lens 24 and the lens 25. For example, the observation object S is a cell flowing along a flow path in a flow cytometer. In this diagram, an xyz orthogonal coordinate system is illustrated for convenience of explanation. A moving direction (direction of an arrow in the diagram) of the observation object S is set to an x direction (first direction). An optical axis direction of the cylindrical lens 24 and the lens 25 is set to a z direction. A direction orthogonal to both the x direction and the z direction is set to a y direction (second direction).

The light source 10 outputs spatially and temporally coherent light, and is preferably a laser light source. The beam splitter 21 is optically coupled to the light source 10, and splits the light output from the light source 10 into object light and reference light. The beam splitter 21 outputs the object light to the mirror 23, and outputs the reference light to the frequency shifter 30.

The frequency shifter 30 is optically coupled to the beam splitter 21, and inputs the reference light arriving from the beam splitter 21. The frequency shifter 30 shifts an optical frequency of the reference light by a heterodyne frequency, and outputs the reference light after the shift. The mirror 22 is optically coupled to the frequency shifter 30, and reflects the reference light arriving from the frequency shifter 30 to the beam splitter 27.

The mirror 23 is optically coupled to the beam splitter 21, and reflects the object light arriving from the beam splitter 21 to the cylindrical lens 24. The cylindrical lens 24 is optically coupled to the mirror 23, and is an irradiation optical system for irradiating the observation object S with the object light arriving from the mirror 23. The cylindrical lens 24 focuses the object light and irradiates a line-shaped region extending in the y direction (second direction) in the observation object S with the object light. A value of an x component kₓ of a wavenumber vector of the light with which the observation object S is irradiated is within a certain range, and a value of a y component k_{y} is a certain constant value.

The object light with which the observation object S is irradiated by the cylindrical lens 24 and passed through the observation object S reaches an imaging plane of the imaging unit 40 sequentially through the lens 25, the cylindrical lens 26, and the lens 28 constituting an imaging optical system.

The beam splitter 27 is provided between the cylindrical lens 26 and the lens 28. The beam splitter 27 inputs the object light arriving from the cylindrical lens 26, and inputs the reference light arriving from the mirror 22, and further, combines and outputs the object light and the reference light. In this case, the beam splitter 27 outputs the object light and the reference light coaxially with each other.

The optical system from the light source 10 to the imaging unit 40 constitutes an interference optical system, and causes the object light passed through the observation object S and the reference light to interfere with each other (an interference step). The frequency shifter 30 sets the respective optical frequencies of the object light and the reference light different from each other by the heterodyne frequency (a modulation step). The frequency shifter 30 may be configured using, for example, an acousto-optic element. The frequency shifter 30 may be provided on the optical path of the reference light, or may be provided on the optical path of the object light.

The imaging unit 40 has the imaging plane for receiving the object light and the reference light output from the interference optical system, images an interference intensity image generated by interference between the object light and the reference light on the imaging plane, and outputs time series data of the interference intensity image obtained by the imaging to the analysis unit 50 (an imaging step).

The analysis unit 50 is electrically connected to the imaging unit 40, and inputs the time series data of the interference intensity image output from the imaging unit 40 to perform a required analysis (an analysis step). The analysis unit 50 generates a complex amplitude image of each of a plurality of light irradiation directions of the object light based on the time series data of the interference intensity image, and generates a three-dimensional complex differential interference image of the observation object S based on the complex amplitude image of each of the plurality of light irradiation directions. In addition, the analysis unit 50 obtains a three-dimensional refractive index distribution of the observation object S based on the three-dimensional complex differential interference image. The details of the analysis unit 50 will be described later.

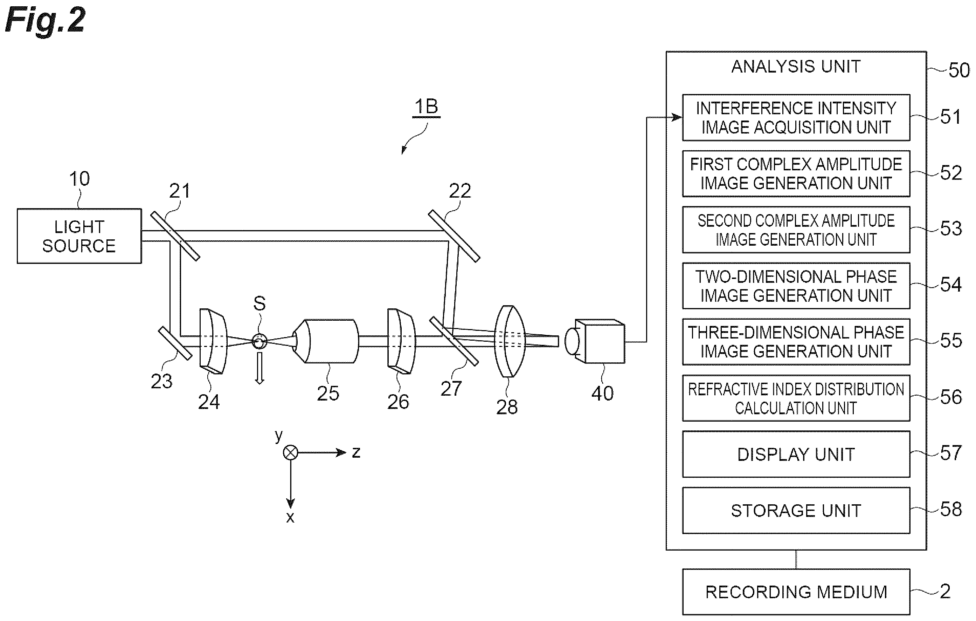

FIG. 2 is a diagram illustrating a configuration of an observation apparatus 1B. The observation apparatus 1B (FIG. 2) is different compared with the configuration of the observation apparatus 1A (FIG. 1) in that the frequency shifter 30 is not provided, and different in that the object light and the reference light are incident on the imaging plane of the imaging unit 40 from directions different from each other. According to the above differences, a part of the processing contents of the analysis unit 50 is different.

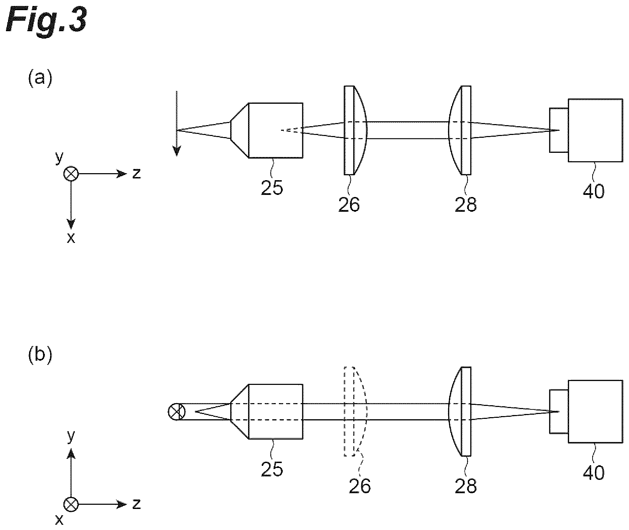

FIG. 3 includes diagrams illustrating the imaging optical system including the lens 25, the cylindrical lens 26, and the lens 28 in each of the configurations of the observation apparatus 1A (FIG. 1) and the observation apparatus 1B (FIG. 2). (a) in FIG. 3 is a diagram viewed in the y direction, and (b) in FIG. 3 is a diagram viewed in the x direction.

In the x direction, a pupil plane of the lens 25 and the imaging plane of the imaging unit 40 are in a positional relationship conjugate to each other, that is, the observation object S and the imaging plane of the imaging unit 40 are in a positional relationship of Fourier transform. In the y direction, the observation object S and the imaging plane of the imaging unit 40 are in a positional relationship conjugate to each other.

The analysis unit 50 of each of the observation apparatus 1A (FIG. 1) and the observation apparatus 1B (FIG. 2) performs a required operation based on the time series data of the interference intensity image output from the imaging unit 40. The analysis unit 50 may be a computer. The analysis unit 50 includes an interference intensity image acquisition unit 51, a first complex amplitude image generation unit 52, a second complex amplitude image generation unit 53, a two-dimensional phase image generation unit 54, a three-dimensional phase image generation unit 55, a refractive index distribution calculation unit 56, a display unit 57, and a storage unit 58.

The interference intensity image acquisition unit 51 acquires the time series data of the interference intensity image output from the imaging unit 40. The interference intensity image acquisition unit 51 includes a CPU, and has an input port for inputting the data of the interference intensity image output from the imaging unit 40.

The first complex amplitude image generation unit 52, the second complex amplitude image generation unit 53, the two-dimensional phase image generation unit 54, the three-dimensional phase image generation unit 55, and the refractive index distribution calculation unit 56 perform processing based on the time series data of the interference intensity image, and include a processing device such as a CPU, a GPU, a DSP, an FPGA, or the like. The display unit 57 displays an image to be processed, an image in the middle of the processing, an image after the processing, and the like, and includes, for example, a liquid crystal display.

The storage unit 58 stores data of various images, and includes a hard disk drive, a flash memory, a RAM, a ROM, and the like. The first complex amplitude image generation unit 52, the second complex amplitude image generation unit 53, the two-dimensional phase image generation unit 54, the three-dimensional phase image generation unit 55, the refractive index distribution calculation unit 56, and the storage unit 58 may be constituted by a cloud computing.

The storage unit 58 also stores a program for causing the interference intensity image acquisition unit 51, the first complex amplitude image generation unit 52, the second complex amplitude image generation unit 53, the two-dimensional phase image generation unit 54, the three-dimensional phase image generation unit 55, and the refractive index distribution calculation unit 56 to execute respective steps of the processing.

The program may be stored in the storage unit 58 at the time of manufacture or shipment of the observation apparatus, may be acquired via a communication line after shipment and then stored in the storage unit 58, or may be recorded in a computer readable recording medium 2 and then stored in the storage unit 58. The recording medium 2 may be an arbitrary medium such as a flexible disk, a CD-ROM, a DVD-ROM, a BD-ROM, a USB memory, or the like.

The details of the processing of each of the interference intensity image acquisition unit 51, the first complex amplitude image generation unit 52, the second complex amplitude image generation unit 53, the two-dimensional phase image generation unit 54, the three-dimensional phase image generation unit 55, and the refractive index distribution calculation unit 56 will be described later.

The observation apparatus 1A (FIG. 1) acquires the interference intensity image by temporal modulation by providing the frequency shifter 30. On the other hand, the observation apparatus 1B (FIG. 2) acquires the interference intensity image by spatial modulation by causing the object light and the reference light to be incident on the imaging plane of the imaging unit 40 from directions different from each other. In the observation apparatus 1A (FIG. 1) and the observation apparatus 1B (FIG. 2), the processing of the first complex amplitude image generation unit 52 of the analysis unit 50 is different according to the above difference of the optical system.

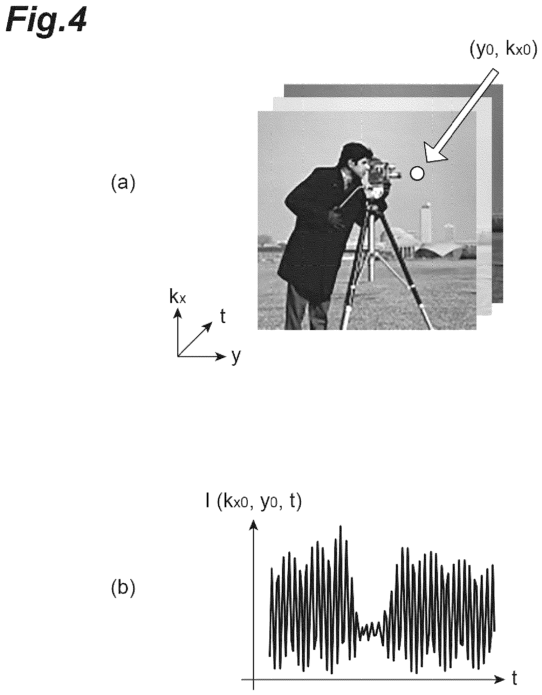

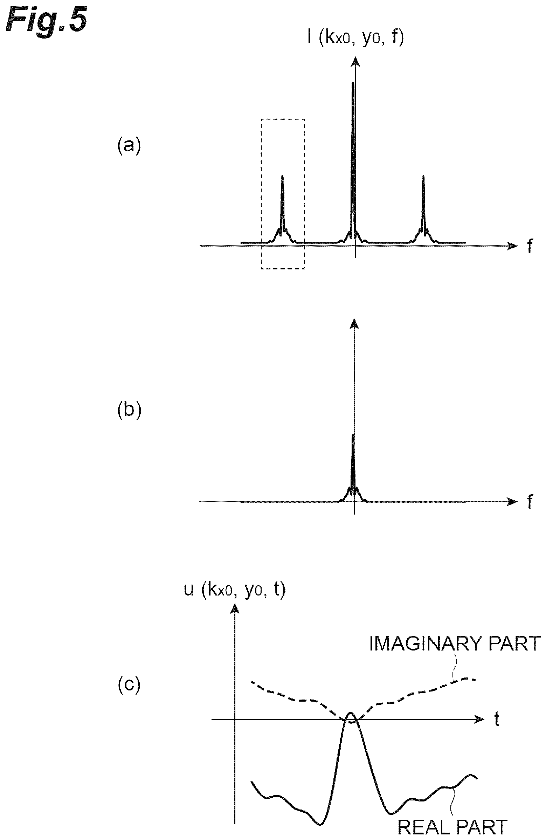

FIG. 4 and FIG. 5 include diagrams illustrating the processing contents of the first complex amplitude image generation unit 52 of the analysis unit 50 of the observation apparatus 1A (FIG. 1). The time series data ((a) in FIG. 4) of the interference intensity image output from the imaging unit 40 is the interference intensity image at each time t on a plane with a light irradiation direction kₓ and a second direction position y, and is represented by I(kₓ, y, t) of the following Formula (1). u(kₓ, y, t) is a complex amplitude of the object light, and u_{ref} is a complex amplitude of the reference light. When data I(kₓ₀, y₀, t) ((b) in FIG. 4) in which a time t at a certain light irradiation direction kₓ₀ and a certain second direction position y₀ is a variable is Fourier transformed with respect to t, a frequency spectrum I(kₓ₀, y₀, f) ((a) in FIG. 5) at the light irradiation direction kₓ₀ and the second direction position y₀ is obtained. f is a frequency.
[Formula 1] $I \left({k}_{x}, y, t\right) = {\left|u\left({k}_{x}, y, t\right)+{u}_{ref}\right|}^{2} = {\left|u\right|}^{2} + {\left|{u}_{ref}\right|}^{2} + {u}^{*} ⋅ {u}_{ref} + u ⋅ {u}_{ref}^{*}$ (1)

Three peaks separated by the heterodyne frequency appear in the above frequency spectrum. In the three peaks, the center peak is due to a first term and a second term in the rightmost side of Formula (1), and the left and right two peaks are due to a third term or a fourth term in the rightmost side of Formula (1).

A certain range including any one peak out of the left and right two peaks in the frequency spectrum (a range indicated by a rectangle with a dashed line in (a) in FIG. 5) is cut out, and shifted in parallel such that the peak frequency is set to 0 ((b) in FIG. 5). Further, when the result is Fourier transformed with respect to the frequency f, a complex amplitude u(kₓ₀, y₀, t) of the object light at the certain light irradiation direction kₓ₀ and the second direction position y₀ is obtained ((c) in FIG. 5). By performing the similar processing for all the light irradiation directions kₓ and the second direction positions y, the time series data u(kₓ, y, t) of the complex amplitude image of the object light is obtained.

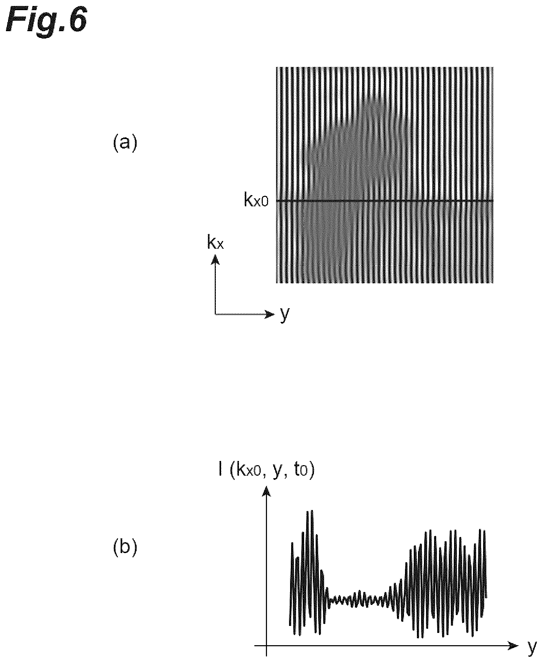

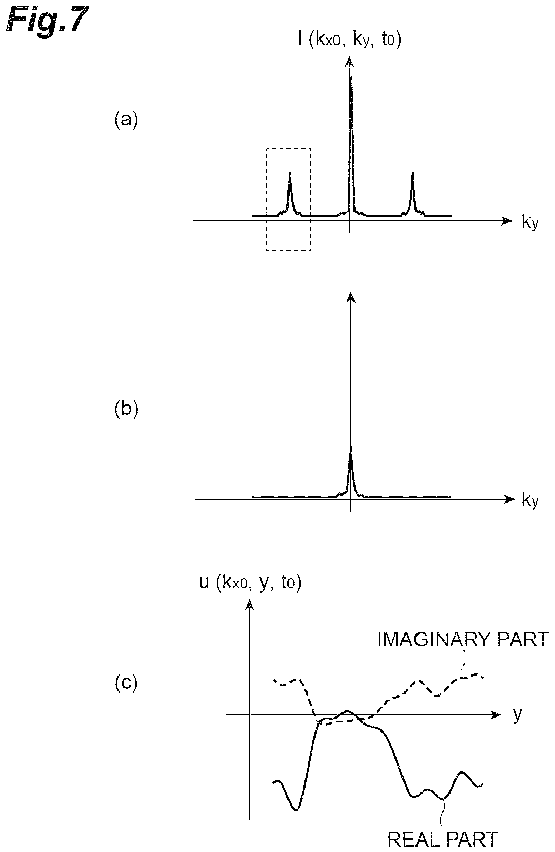

FIG. 6 and FIG. 7 include diagrams illustrating the processing contents of the first complex amplitude image generation unit 52 of the analysis unit 50 of the observation apparatus 1B (FIG. 2). The time series data ((a) in FIG. 6) of the interference intensity image output from the imaging unit 40 is the interference intensity image at each time t on a plane with a light irradiation direction kₓ and a second direction position y, and is represented by I(kₓ, y, t) of the above Formula (1). When data I(kₓ₀, y, t₀) ((b) in FIG. 6) in which a second direction position y at a certain light irradiation direction kₓ₀ and a certain time t₀ is a variable is Fourier transformed with respect to y, a spatial wavenumber spectrum I(kₓ₀, k_{y}, t₀) ((a) in FIG. 7) at the light irradiation direction kₓ₀ and the time t₀ is obtained. k_{y} is a spatial wavenumber in the y direction.

Three peaks separated by a wavenumber difference according to an angle between the object light and the reference light incident on the imaging plane of the imaging unit 40 appear in the above spatial wavenumber spectrum. In the three peaks, the center peak is due to the first term and the second term in the rightmost side of Formula (1), and the left and right two peaks are due to the third term or the fourth term in the rightmost side of Formula (1).

A certain range including any one peak out of the left and right two peaks in the spatial wavenumber spectrum (a range indicated by a rectangle with a dashed line in (a) in FIG. 7) is cut out, and shifted in parallel such that the peak frequency is set to 0 ((b) in FIG. 7). Further, when the result is Fourier transformed with respect to the spatial wavenumber k_{y}, a complex amplitude u(kₓ₀, y, t₀) of the object light at the certain light irradiation direction kₓ₀ and the certain time t₀ is obtained ((c) in FIG. 7). By performing the similar processing for all the light irradiation directions kₓ and the times t, the time series data u(kₓ, y, t) of the complex amplitude image of the object light is obtained.

As described above, in each of the configurations of the observation apparatus 1A (FIG. 1) and the observation apparatus 1B (FIG. 2), the first complex amplitude image generation unit 52 of the analysis unit 50 can obtain the time series data u(kₓ, y, t) of the complex amplitude image of the object light reaching the imaging plane of the imaging unit 40 based on the time series data I(kₓ, y, t) of the interference intensity image output from the imaging unit 40. In addition, the first complex amplitude image generation unit 52 of the analysis unit 50 generates the complex amplitude image of each of the plurality of light irradiation directions based on the time series data u(kₓ, y, t) of the complex amplitude image of the object light as described as follows.

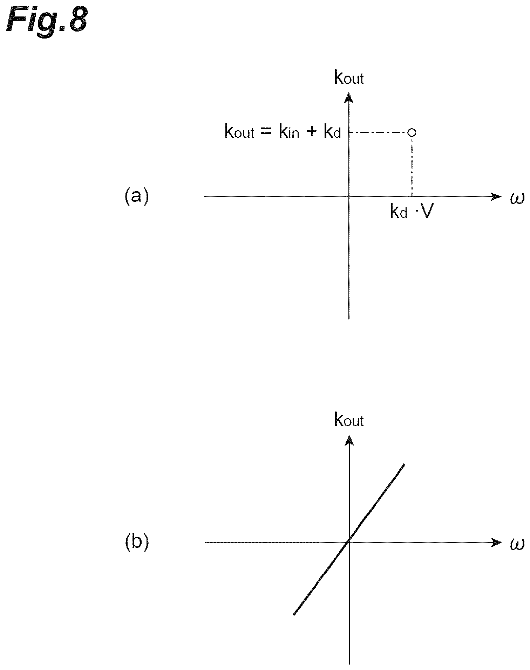

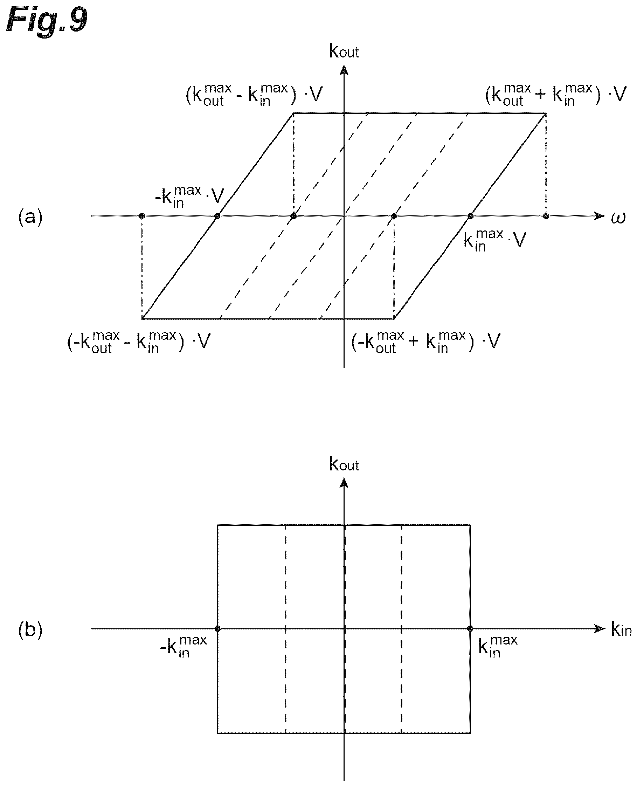

FIG. 8 and FIG. 9 includes diagrams for describing the object light output from the observation object S in each of the configurations of the observation apparatus 1A (FIG. 1) and the observation apparatus 1B (FIG. 2).

It is assumed that the observation object is stationary, the observation object has a single spatial wavenumber represented by a wavenumber vector k_{d}, and an incident wave on the observation object is a plane wave having a single wavenumber represented by a wavenumber vector kᵢₙ. In this case, a wavenumber vector kₒᵤₜ of the object light output from the observation object is represented by a sum of the vector kₐ and the vector kᵢₙ as shown in the following Formula (2).
[Formula 2] ${k}_{out} = {k}_{in} + {k}_{d}$ (2)

It is assumed that the observation object moves with a constant velocity vector V, the observation object has a single spatial wavenumber represented by the wavenumber vector k_{d}, and the incident wave on the observation object is a plane wave having a single wavenumber represented by the wavenumber vector kᵢₙ. In this case, the wavenumber vector kₒᵤₜ of the object light output from the observation object is represented by the sum of the vector kₐ and the vector kᵢₙ as shown in the above Formula (2).

Further, a Doppler shift occurs in the object light output from the observation object, and a Doppler frequency ω thereof is represented by an inner product of the vector k_{d} and the vector V as shown in the following Formula (3). That is, as shown in (a) in FIG. 8, on a plane in which the horizontal axis is the Doppler frequency ω and the vertical axis is a magnitude of the wavenumber vector kₒᵤₜ of the output object light, ω and kₒᵤₜ of the object light output from the observation object are represented by one point.
[Formula 3] $ω = {k}_{d} ⋅ V = \left({k}_{out}-{k}_{in}\right) ⋅ V$ (3)

It is assumed that the observation object moves with the constant velocity vector V, the observation object has various spatial wavenumbers, and the incident wave on the observation object is a plane wave having a single wavenumber represented by the wavenumber vector kᵢₙ. In this case, the wavenumber vector kₒᵤₜ of the object light output from the observation object is represented by the above Formula (2), and further, the Doppler frequency ω is represented by the above Formula (3).

However, the observation object has the various spatial wavenumbers k_{d}, and thus, as shown in (b) in FIG. 8, on the plane in which the horizontal axis is the Doppler frequency ω and the vertical axis is the magnitude of the wavenumber vector kₒᵤₜ of the output object light, ω and kₒᵤₜ of the object light output from the observation object are provided on one straight line.

It is assumed that the observation object moves with the constant velocity vector V, the observation object has the various spatial wavenumbers, and the incident wave on the observation object has various wavenumber vectors. In this case, the observation object has the various spatial wavenumbers k_{d} and the incident wave has the various wavenumber vector kᵢₙ, and thus, as shown in (a) in FIG. 9, on the plane in which the horizontal axis is the Doppler frequency ω and the vertical axis is the magnitude of the wavenumber vector kₒᵤₜ of the output object light, ω and kₒᵤₜ of the object light output from the observation object are provided within a parallelogram region.

ω and kₒᵤₜ of the object light output from the observation object S in each of the configurations of the observation apparatus 1A (FIG. 1) and the observation apparatus 1B (FIG. 2) are within the parallelogram region on the ω-kₒᵤₜ plane as shown in (a) in FIG. 9. kₒᵤₜ^{max}, kₒᵤₜ^{min}, kᵢₙ^{max}, and kᵢₙ^{min} shown in (a) in FIG. 9 are values determined by NA of the optical system before or after the observation object.

On each of oblique dashed lines shown in (a) in FIG. 9 (three lines shown in the diagram), kᵢₙ is constant. By using the relationship of the above Formula (3), the ω-kₒᵤₜ plane shown in (a) in FIG. 9 can be converted into the kᵢₙ-kₒᵤₜ plane shown in (b) in FIG. 9. The first complex amplitude image generation unit 52 of the analysis unit 50 generates the complex amplitude image of each of the plurality of light irradiation directions based on the complex amplitude image u(kₓ, y, t) of the object light using the above fact.

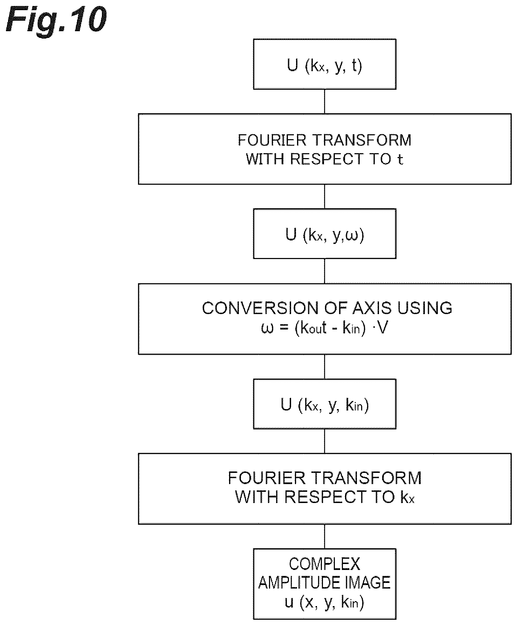

That is, as illustrated in FIG. 10, the first complex amplitude image generation unit 52 performs Fourier transform on u(kₓ, y, t) with respect to t to obtain U(kₓ, y, ω). Subsequently, by using the relationship of the above Formula (3), U(kₓ, y, ω) is converted into U(kₓ, y, kᵢₙ). In this case, kₒᵤₜ is kₓ. Further subsequently, U(kₓ, y, kᵢₙ) is Fourier transformed with respect to kₓ to obtain u(x, y, kᵢₙ).

As described above, the first complex amplitude image generation unit 52 of the analysis unit 50 can obtain the time series data u(kₓ, y, t) of the complex amplitude image of the object light reaching the imaging plane of the imaging unit 40 based on the time series data I(kₓ, y, t) of the interference intensity image output from the imaging unit 40, and further, can generate the complex amplitude image u(x, y) of each of the plurality of light irradiation directions kᵢₙ based on the time series data u(kₓ, y, t) of the complex amplitude image of the object light.

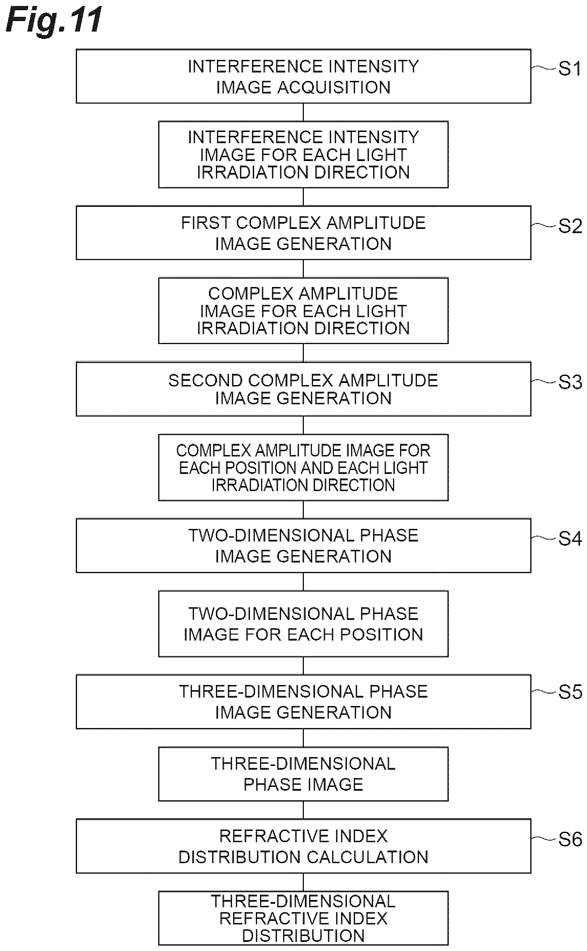

FIG.11 is a flowchart of an observation method according to the first embodiment. This observation method can be applied to each of the observation apparatus 1A and the observation apparatus 1B. The observation method includes an interference intensity image acquisition step S1, a first complex amplitude image generation step S2, a second complex amplitude image generation step S3, a two-dimensional phase image generation step S4, a three-dimensional phase image generation step S5, and a refractive index distribution calculation step S6.

The processing step of the interference intensity image acquisition step S1 is performed by the interference intensity image acquisition unit 51. The processing step of the first complex amplitude image generation step S2 is performed by the first complex amplitude image generation unit 52. The processing step of the second complex amplitude image generation step S3 is performed by the second complex amplitude image generation unit 53.

The processing step of the two-dimensional phase image generation step S4 is performed by the two-dimensional phase image generation unit 54. The processing step of the three-dimensional phase image generation step S5 is performed by the three-dimensional phase image generation unit 55. The processing step of the refractive index distribution calculation step S6 is performed by the refractive index distribution calculation unit 56.

In the interference intensity image acquisition step S1, the interference intensity image acquisition unit 51 acquires the time series data of the interference intensity image output from the imaging unit 40. In the first complex amplitude image generation step S2, the first complex amplitude image generation unit 52 obtains the time series data u(kₓ, y, t) of the complex amplitude image of the object light reaching the imaging plane of the imaging unit 40 based on the time series data I(kₓ, y, t) acquired by the interference intensity image acquisition unit 51 as described above, and in addition, generates the complex amplitude image u(x, y) of each of the plurality of light irradiation directions kᵢₙ based on the time series data u(kₓ, y, t) of the complex amplitude image of the object light.

In the second complex amplitude image generation step S3, the second complex amplitude image generation unit 53 generates, for each of the plurality of light irradiation directions, a complex amplitude image of each of a plurality of z direction positions based on the complex amplitude image at the reference position (z = 0) generated by the first complex amplitude image generation unit 52.

Assuming that a two-dimensional Fourier transform of the complex amplitude image u(x, y, 0) at the reference position is U(kₓ, k_{y}, 0), the complex amplitude image u(x, y, d) at the position of z = d and the two-dimensional Fourier transform U(kₓ, k_{y}, d) of the complex amplitude image u(x, y, d) are represented by the following Formulas. i is an imaginary unit, and k₀ is a wavenumber of the light in the observation object.
[Formula 4] $U \left({k}_{x}, {k}_{y}, d\right) = U \left({k}_{x}, {k}_{y}, 0\right) exp \left(i\sqrt{{k}_{0}^{2} - {k}_{x}^{2} - {k}_{y}^{2}}d\right)$ (4) [Formula 5] $u \left(x, y, d\right) = \int U \left({k}_{x}, {k}_{y}, d\right) exp \left(-{ik}_{x}x-{ik}_{y}y\right) {dk}_{x} {dk}_{y}$ (5)

In the two-dimensional phase image generation step S4, the two-dimensional phase image generation unit 54 generates, for each of the plurality of positions, a two-dimensional phase image based on the complex amplitude image of each of the plurality of light irradiation directions generated by the second complex amplitude image generation unit 53. The two-dimensional phase image generated in this step corresponds to a phase image centered on the focused z direction position. The details of the two-dimensional phase image generation step S4 will be described later.

In addition, the two-dimensional phase image generation step S4 and the subsequent steps may be performed after all the complex amplitude images at the plurality of positions are generated for each of the plurality of light irradiation directions in the second complex amplitude image generation step S3. Further, processes of generating the complex amplitude image at one certain z direction position for each of the plurality of light irradiation directions in the second complex amplitude image generation step S3 and generating the two-dimensional phase image at the position in the two-dimensional phase image generation step S4 may be set as a unit, and the unit process may be repeatedly performed while scanning the z direction position. The latter case is preferable in that a capacity of image data to be stored in the storage unit 58 can be reduced.

In the three-dimensional phase image generation step S5, the three-dimensional phase image generation unit 55 generates a three-dimensional phase image based on the two-dimensional phase image at each of the plurality of positions generated by the two-dimensional phase image generation unit 54. The three-dimensional phase image generated in this step is an image in which the positions x and y in the two-dimensional phase image and the position z of the two-dimensional phase image are variables.

In the refractive index distribution calculation step S6, the refractive index distribution calculation unit 56 obtains a three-dimensional refractive index distribution of the observation object by deconvolution based on the three-dimensional phase image generated by the three-dimensional phase image generation unit 55.

Assuming that the refractive index distribution of the observation object is n(x, y, z), an electric susceptibility distribution is f(x, y, z), and a refractive index of a background medium is nₘ, there is a relationship of the following Formula (6) between them. The three-dimensional phase image Φ(x, y, z) generated by the three-dimensional phase image generation unit 55 is represented by convolution of a kernel function g(x, y, z) and the electric susceptibility distribution f(x, y, z) as shown in the following Formula (7). Therefore, the three-dimensional refractive index distribution n(x, y, z) of the observation object can be obtained by deconvolution based on the three-dimensional phase image y, z).
[Formula 6] $f \left(x, y, z\right) = {k}_{0}^{2} \left[{\left(n\left(x, y, z\right)/{n}_{m}\right)}^{2}-1\right]$ (6) [Formula 7] $Φ \left(x, y, z\right) = \int g \left(x-x′,y-y′,z-z′\right) f \left(x′,y′,z′\right) dx ′ dy ′ dz ′$ (7)

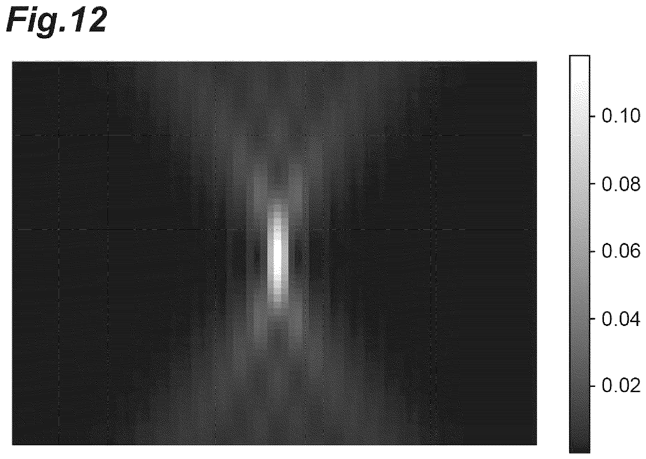

In addition, the kernel function g is a function based on a Green function corresponding to a solution of a wave equation. FIG. 12 is a diagram showing the kernel function g. In this diagram, a center position having the largest value of the kernel function g is the origin, the vertical direction is the z axis, and the horizontal direction is the direction perpendicular to the z axis.

Next, the details of the two-dimensional phase image generation step S4 in the observation method of the first embodiment will be described. In the two-dimensional phase image generation step S4, the two-dimensional phase image generation unit 54 generates, for each of the plurality of positions, the two-dimensional phase image based on the complex amplitude image of each of the plurality of light irradiation directions generated by the second complex amplitude image generation unit 53. The two-dimensional phase image generation step S4 may include three configurations described below.

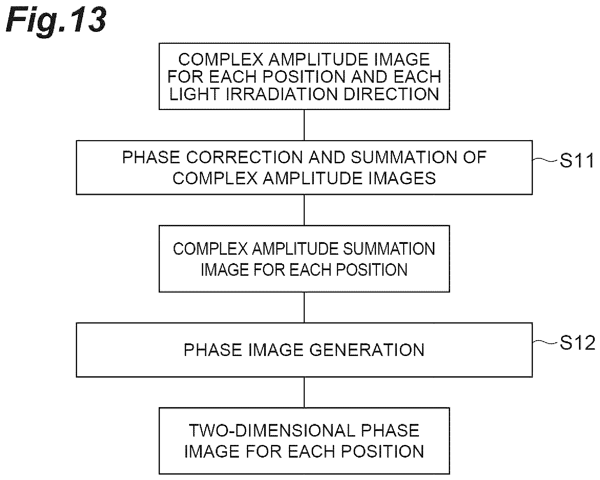

FIG. 13 is a flowchart of a first configuration of the two-dimensional phase image generation step S4, which is not according to the claimed subject-matter. In the first configuration, for each of the plurality of positions, the two-dimensional phase image generation step S4, in a step S11, corrects the phase of the complex amplitude image of each of the plurality of light irradiation directions based on the light irradiation direction, and then generates a complex amplitude summation image representing a summation of the complex amplitude images after the correction, and in a step S12, generates the two-dimensional phase image based on the complex amplitude summation image.

The processing of the step S11 is based on a collective accumulation of single scattering (CASS) technique. In the light with which the object is irradiated along a certain light irradiation direction and passed through the object, a spatial frequency distribution of the single scattered light which interacts with the object only once is shifted according to the light irradiation direction, whereas a spatial frequency distribution of the multiple scattered light which interacts with the object a plurality of times randomly changes according to the light irradiation direction. The CASS technique uses the above difference between the light irradiation direction dependencies of the spatial frequency distributions of the single scattered light and the multiple scattered light.

That is, in the step S11, the phase of the complex amplitude image of each of the plurality of light irradiation directions is corrected based on the light irradiation direction (that is, the spatial frequency distribution of the complex amplitude image is shifted in parallel according to the light irradiation direction in the spatial frequency domain), so that the spatial frequency distribution of the single scattered light component in the complex amplitude image has a shape and arrangement independent of the light irradiation direction, while the spatial frequency distribution of the multiple scattered light component in the complex amplitude image has a random shape and arrangement.

Further, in the step S11, the complex amplitude summation image representing the summation of the plurality of complex amplitude images after the above correction is generated (that is, synthetic aperture processing is performed) to coherently sum the single scattered light components in the complex amplitude images, while the multiple scattered light components in the complex amplitude images cancel each other out.

Therefore, the influence of the multiple scattered light is reduced in the complex amplitude summation image generated in the step S11. Further, the three-dimensional refractive index distribution obtained finally in the refractive index distribution calculation step S6 also reduces the influence of the multiple scattered light, suppresses the speckles, and improves the SMR.

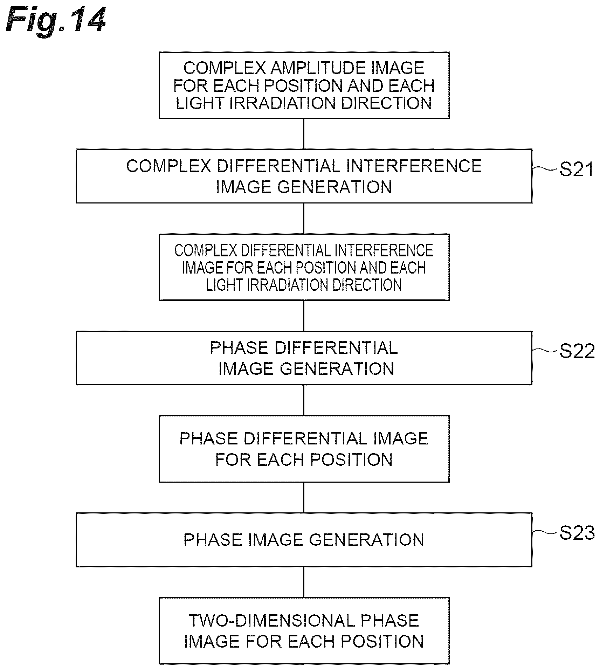

FIG. 14 is a flowchart of a second configuration of the two-dimensional phase image generation step S4. In the second configuration, for each of the plurality of positions, the two-dimensional phase image generation step S4, in a step S21, generates a complex differential interference image of each of the plurality of light irradiation directions based on the complex amplitude image of each of the plurality of light irradiation directions. In a step S22, the step generates a phase differential image based on a summation of the complex differential interference images of the plurality of light irradiation directions. In a step S23, the step generates the two-dimensional phase image based on the phase differential image.

Assuming that the complex amplitude image at the position of z = d is u(x, y, d), the complex differential interference image q(x, y, d) generated in the step S21 is represented by the following Formula (8). At least one of δx and δy is non-zero. When δx ≠ 0 and δy = 0, the complex differential interference image q in which the x direction is a shear direction is obtained. When δx = 0 and δy ≠ 0, the complex differential interference image q in which the y direction is the shear direction is obtained. When δx ≠ 0 and δy ≠ 0, the complex differential interference image q with the shear direction different from both of the x direction and the y direction is obtained. In addition, the complex differential interference image q(x, y, d) may be obtained by Formula (8) after transforming the complex amplitude image u(x, y, d) as in the following Formula (9).
[Formula 8] $q \left(x, y, d\right) = u * \left(x+δx,y+δy,d\right) ⋅ u \left(x, y, d\right)$ (8) [Formula 9] $u \left(x, y, d\right) exp \left(-{ik}_{x}x-{ik}_{y}y\right)$ (9)

Assuming that the summation of the complex differential interference images q of the plurality of light irradiation directions is qₛᵤₘ(x, y, d), the phase differential image y, z) generated in the step S22 is represented by the following Formula (10) as the phase of qₛᵤₘ(x, y, d). In the step S23, the two-dimensional phase image can be generated by performing integration or deconvolution of the phase differential image ϕ(x, y, z).
[Formula 10] $ϕ \left(x, y, d\right) = ∠ {q}_{sum} \left(x, y, d\right)$ (10)

In addition, in the step S21, the complex differential interference image may be generated for each of a plurality of shear directions different from each other on the complex amplitude image. In this case, for each of the plurality of positions, the two-dimensional phase image generation step S4, in the step S21, generates the complex differential interference image of each of the plurality of light irradiation directions for each of the plurality of shear directions on the image different from each other based on the complex amplitude image of each of the plurality of light irradiation directions. In the step S22, the step generates the phase differential image based on the summation of the complex differential interference images of the plurality of light irradiation directions for each of the plurality of shear directions. In the step S23, the step generates the two-dimensional phase image based on the phase differential image of each of the plurality of shear directions.

The influence of the multiple scattered light is reduced in the phase differential image generated based on the summation of the complex differential interference image of each of the plurality of light irradiation directions in the step S22. Further, the three-dimensional refractive index distribution obtained finally in the refractive index distribution calculation step S6 also reduces the influence of the multiple scattered light, and suppresses the speckles. Further, when the complex differential interference image is generated for each of the plurality of shear directions different from each other on the complex amplitude image in the step S21, it is possible to suppress the appearance of linear noises in the two-dimensional phase image obtained in the step S23.

In the above description, the case in which the two-dimensional phase image is generated by performing integration or deconvolution of the phase differential image in the step S23 is described. However, the phase differential image may also be treated as the two-dimensional phase image.

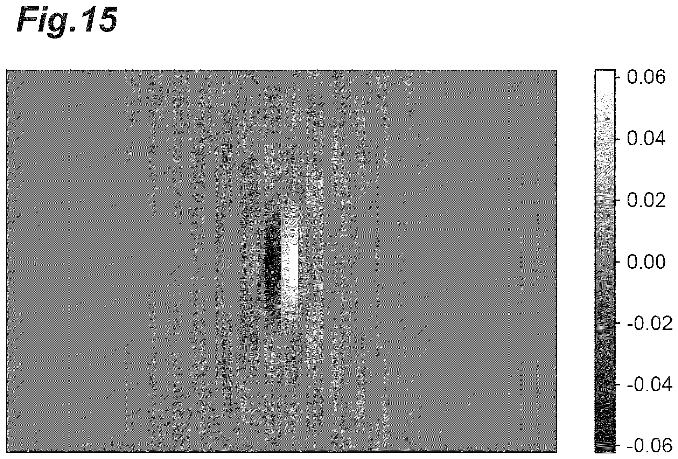

In this case, the three-dimensional refractive index distribution of the observation object can be obtained from the phase differential image (two-dimensional phase image) generated in the step S22 by using a kernel (FIG. 15) including a kernel used in deconvolution of the step S23, in deconvolution of the refractive index distribution calculation step S6, without performing the step S23. The kernel shown in FIG. 15 is obtained by convolution integration of the kernel shown in FIG. 12 and the kernel used in deconvolution of the step S23.

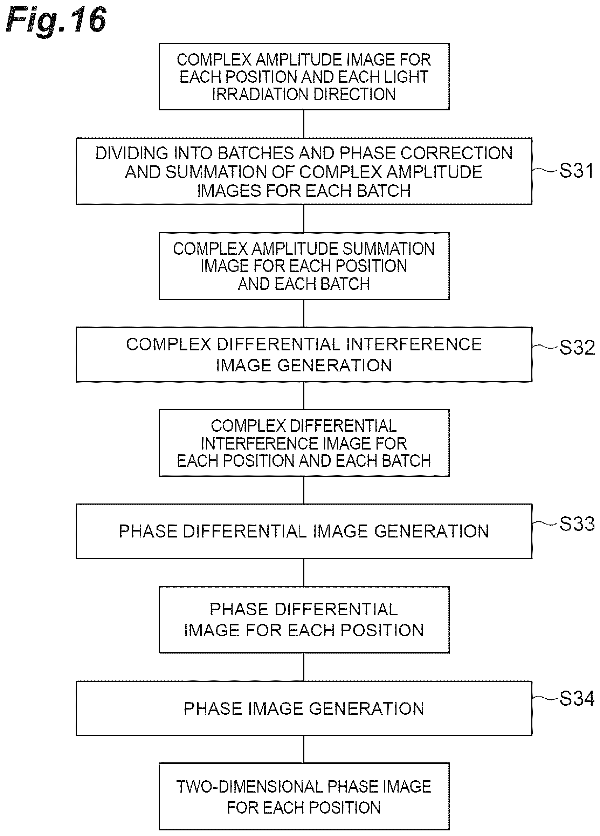

FIG. 16 is a flowchart of a third configuration of the two-dimensional phase image generation step S4. In the third configuration, for each of the plurality of positions, the two-dimensional phase image generation step S4, in a step S31, divides the complex amplitude image of each of the plurality of light irradiation directions into a plurality of batches, corrects the phase of the complex amplitude image included in the batch based on the light irradiation direction for each of the plurality of batches, and then generates the complex amplitude summation image representing the summation of the complex amplitude images after the correction.

In a step S32, the step generates the complex differential interference image of each of the plurality of batches based on the complex amplitude summation image of each of the plurality of batches. In a step S33, the step generates the phase differential image based on the summation of the complex differential interference images of the plurality of batches. In a step S34, the step generates the two-dimensional phase image based on the phase differential image.

The processing of the step S31 in the third configuration corresponds to dividing the complex amplitude image of each of the plurality of light irradiation directions into the plurality of batches, and then performing the processing of the step S11 in the first configuration for each of the plurality of batches. The processing of the steps S32 and S33 in the third configuration corresponds to performing the processing of the steps S21 and S22 in the second configuration for each of the plurality of batches. The processing of the step S34 in the third configuration corresponds to performing the processing of the step S23 in the second configuration.

In addition, in the step S32, the complex differential interference image may be generated for each of the plurality of shear directions different from each other on the complex amplitude image. In this case, the two-dimensional phase image generation step S4, in the step S32, generates the complex differential interference image of each of the plurality of batches for each of the plurality of shear directions on the image different from each other based on the complex amplitude summation image of each of the plurality of batches. In the step S33, the step generates the phase differential image based on the summation of the complex differential interference images of the plurality of batches for each of the plurality of shear directions. In the step S34, the step generates the two-dimensional phase image based on the phase differential image of each of the plurality of shear directions.

The suppression of the speckles in the third configuration is comparable with the first configuration and the second configuration. The improvement of the SMR in the third configuration is an intermediate degree between the first configuration and the second configuration.

In the above description also, the case in which the two-dimensional phase image is generated by performing integration or deconvolution of the phase differential image in the step S34 is described. However, the phase differential image may also be treated as the two-dimensional phase image. In this case, the three-dimensional refractive index distribution of the observation object can be obtained from the phase differential image (two-dimensional phase image) generated in the step S33 by using the kernel including the kernel used in deconvolution of the step S34, in deconvolution of the refractive index distribution calculation step S6, without performing the step S34.

According to the present embodiment, it is possible to observe the moving observation object while reducing the influence of the multiple scattered light even when the observation object is the multiple scattering object.

### (Second embodiment)

As a configuration of an apparatus according to a second embodiment, an observation apparatus 1C and an observation apparatus 1D will be described.

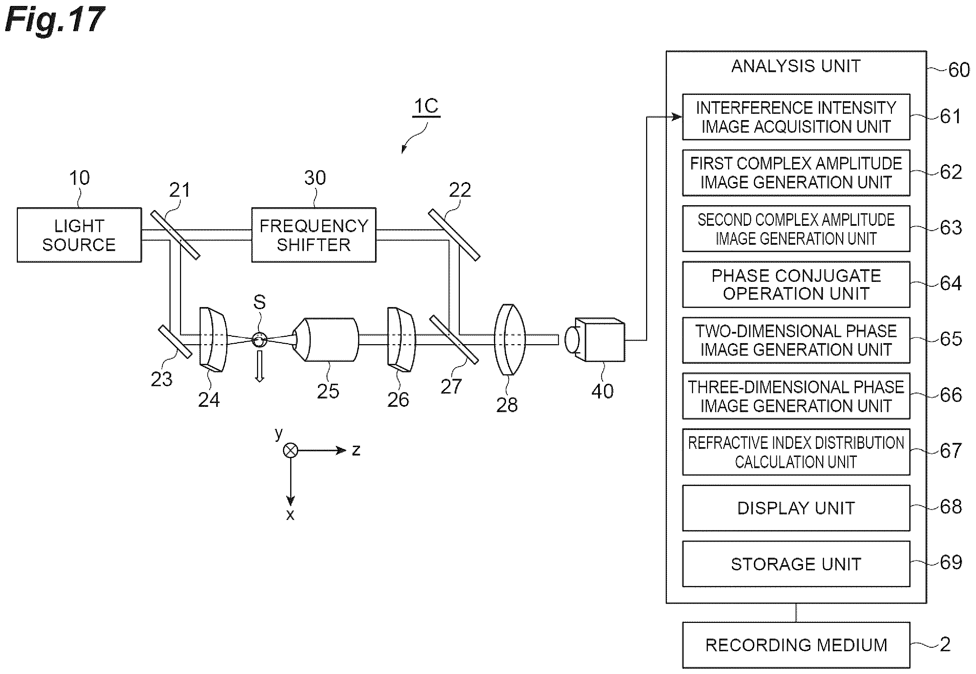

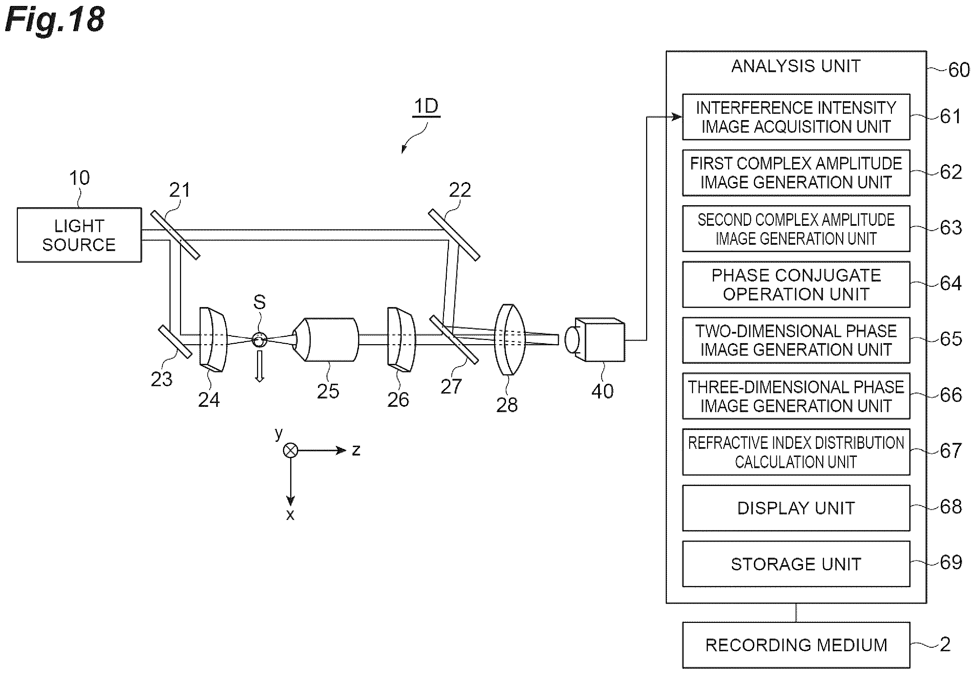

The observation apparatus 1C illustrated in FIG. 17, as compared with the configuration of the observation apparatus 1A illustrated in FIG. 1, has the common configuration for the optical system from the light source 10 to the imaging unit 40, and further, is different in that an analysis unit 60 is provided instead of the analysis unit 50. The observation apparatus 1D illustrated in FIG. 18, as compared with the configuration of the observation apparatus 1B illustrated in FIG. 2, has the common configuration for the optical system from the light source 10 to the imaging unit 40, and further, is different in that the analysis unit 60 is provided instead of the analysis unit 50.

The analysis unit 60 is electrically connected to the imaging unit 40, and inputs the time series data of the interference intensity image output from the imaging unit 40. The analysis unit 60 generates the complex amplitude image of each of the plurality of light irradiation directions of the object light based on the time series data of the interference intensity image, and generates the three-dimensional complex differential interference image of the observation object S based on the complex amplitude image of each of the plurality of light irradiation directions. In addition, the analysis unit 60 obtains the three-dimensional refractive index distribution of the observation object S based on the three-dimensional complex differential interference image.

The analysis unit 60 may be a computer. The analysis unit 60 includes an interference intensity image acquisition unit 61, a first complex amplitude image generation unit 62, a second complex amplitude image generation unit 63, a phase conjugate operation unit 64, a two-dimensional phase image generation unit 65, a three-dimensional phase image generation unit 66, a refractive index distribution calculation unit 67, a display unit 68, and a storage unit 69.

The interference intensity image acquisition unit 61 acquires the time series data of the interference intensity image output from the imaging unit 40. The interference intensity image acquisition unit 61 includes a CPU, and has an input port for inputting the data of the interference intensity image output from the imaging unit 40.

The first complex amplitude image generation unit 62, the second complex amplitude image generation unit 63, the phase conjugate operation unit 64, the two-dimensional phase image generation unit 65, the three-dimensional phase image generation unit 66, and the refractive index distribution calculation unit 67 perform processing based on the time series data of the interference intensity image, and include a processing device such as a CPU, a GPU, a DSP, an FPGA, or the like. The display unit 68 displays an image to be processed, an image in the middle of the processing, an image after the processing, and the like, and includes, for example, a liquid crystal display.

The storage unit 69 stores data of various images, and includes a hard disk drive, a flash memory, a RAM, a ROM, and the like. The first complex amplitude image generation unit 62, the second complex amplitude image generation unit 63, the phase conjugate operation unit 64, the two-dimensional phase image generation unit 65, the three-dimensional phase image generation unit 66, the refractive index distribution calculation unit 67, and the storage unit 69 may be constituted by a cloud computing.

The storage unit 69 also stores a program for causing the interference intensity image acquisition unit 61, the first complex amplitude image generation unit 62, the second complex amplitude image generation unit 63, the phase conjugate operation unit 64, the two-dimensional phase image generation unit 65, the three-dimensional phase image generation unit 66, and the refractive index distribution calculation unit 67 to execute respective steps of the processing.

The program may be stored in the storage unit 69 at the time of manufacture or shipment of the observation apparatus, may be acquired via a communication line after shipment and then stored in the storage unit 69, or may be recorded in a computer readable recording medium 2 and then stored in the storage unit 69. The recording medium 2 may be an arbitrary medium such as a flexible disk, a CD-ROM, a DVD-ROM, a BD-ROM, a USB memory, or the like.

The details of the processing step of each of the interference intensity image acquisition unit 61, the first complex amplitude image generation unit 62, the second complex amplitude image generation unit 63, the phase conjugate operation unit 64, the two-dimensional phase image generation unit 65, the three-dimensional phase image generation unit 66, and the refractive index distribution calculation unit 67 will be described later.

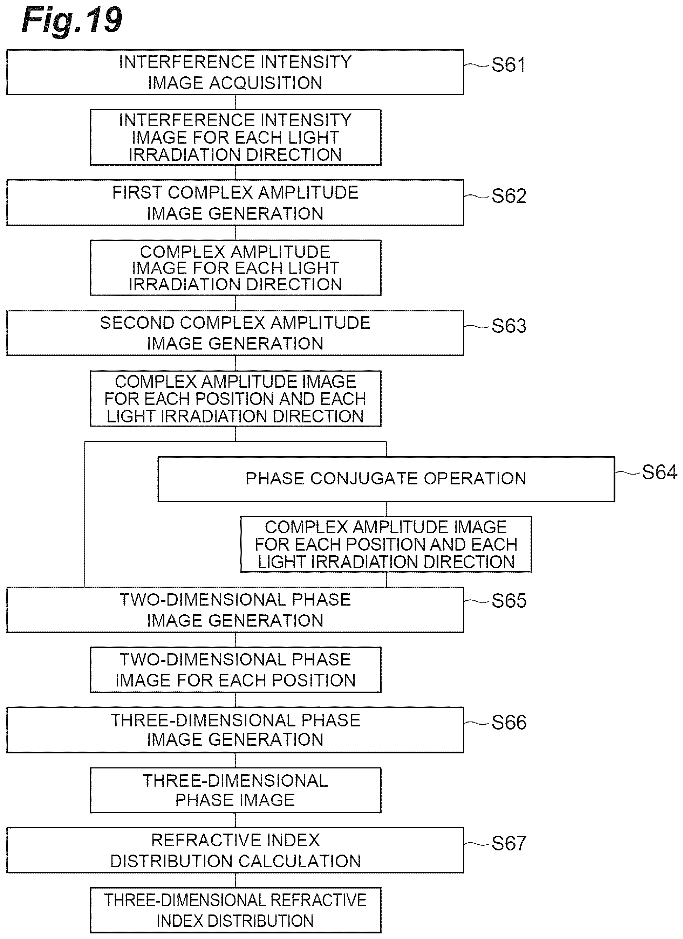

FIG. 19 is a flowchart of an observation method according to the second embodiment. This observation method can be applied to each of the observation apparatus 1C and the observation apparatus 1D. The observation method includes an interference intensity image acquisition step S61, a first complex amplitude image generation step S62, a second complex amplitude image generation step S63, a phase conjugate operation step S64, a two-dimensional phase image generation step S65, a three-dimensional phase image generation step S66, and a refractive index distribution calculation step S67.

The processing step of the interference intensity image acquisition step S61 is performed by the interference intensity image acquisition unit 61. The processing step of the first complex amplitude image generation step S62 is performed by the first complex amplitude image generation unit 62. The processing step of the second complex amplitude image generation step S63 is performed by the second complex amplitude image generation unit 63.

The processing step of the phase conjugate operation step S64 is performed by the phase conjugate operation unit 64. The processing step of the two-dimensional phase image generation step S65 is performed by the two-dimensional phase image generation unit 65. The processing step of the three-dimensional phase image generation step S66 is performed by the three-dimensional phase image generation unit 66. The processing step of the refractive index distribution calculation step S67 is performed by the refractive index distribution calculation unit 67.

In the interference intensity image acquisition step S61, the interference intensity image acquisition unit 61 acquires the time series data of the interference intensity image output from the imaging unit 40. In the first complex amplitude image generation step S62, the first complex amplitude image generation unit 62 obtains the time series data u(kₓ, y, t) of the complex amplitude image of the object light reaching the imaging plane of the imaging unit 40 based on the time series data I(kₓ, y, t) acquired by the interference intensity image acquisition unit 61, and in addition, generates the complex amplitude image u(x, y) of each of the plurality of light irradiation directions kᵢₙ based on the time series data u(kₓ, y, t) of the complex amplitude image of the object light.

In the second complex amplitude image generation step S63, the second complex amplitude image generation unit 63 generates, for each of the plurality of light irradiation directions, a complex amplitude image at each of a plurality of z direction positions based on the complex amplitude image at the reference position (z = 0) generated by the first complex amplitude image generation unit 62.

The interference intensity image acquisition step S61, the first complex amplitude image generation step S62, and the second complex amplitude image generation step S63 in the observation method of the second embodiment respectively perform the same processing steps as the interference intensity image acquisition step S1, the first complex amplitude image generation step S2, and the second complex amplitude image generation step S3 in the observation method of the first embodiment.

The phase conjugate operation step S64 is performed after the processing step of the second complex amplitude image generation step S63. The phase conjugate operation step S64 may be performed before the processing step of the second complex amplitude image generation step S63 (which will be described later). Further, when the second complex amplitude image generation step S63 generates the complex amplitude image at a certain z position through a plurality of stages from the complex amplitude image at the reference position, the phase conjugate operation step S64 may be performed between a certain stage and a next stage in the plurality of stages (which will be described later).

In the phase conjugate operation step S64, the phase conjugate operation unit 64 performs a phase conjugate operation on the complex amplitude image of each of the plurality of light irradiation directions to generate a complex amplitude image of each of the plurality of light irradiation directions when the relationship between the light irradiation and the imaging for the observation object is reversed.

In addition, the phase conjugate operation is an operation for the complex amplitude image based on a phase conjugate method, and is an operation of calculating a transmission matrix representing the relationship between the light irradiation and the light output for the object, and including an inverse matrix calculation thereof and coordinate conversion. The phase conjugate method may be referred to as a phase conjugation, a time reversal method, a time reversal, a digital phase conjugation, a digital phase conjugate method, or the like. The details will be described later.

In the two-dimensional phase image generation step S65, the two-dimensional phase image generation unit 65 generates, for each of the plurality of positions, a two-dimensional phase image based on the complex amplitude image of each of the plurality of light irradiation directions generated by the second complex amplitude image generation unit 63 or the phase conjugate operation unit 64. The two-dimensional phase image generated in this step corresponds to a phase image centered on the focused z direction position.

In the two-dimensional phase image generation step S65, when a phase image generated based on the complex amplitude image before performing the processing step of the phase conjugate operation step S64 is set as a first phase image, and a phase image generated based on the complex amplitude image obtained by performing the processing step of the phase conjugate operation step S64 is set as a second phase image, for the plurality of positions, the two-dimensional phase image is generated mainly based on the first phase image at a position relatively close to the imaging unit, and the two-dimensional phase image is generated mainly based on the second phase image at a position relatively far from the imaging unit.

In addition, the phase conjugate operation unit 64 and the subsequent processing steps may be performed after all the complex amplitude images at the plurality of positions are generated for each of the plurality of light irradiation directions in the second complex amplitude image generation step S63. Further, processes of generating the complex amplitude image at one certain z direction position for each of the plurality of light irradiation directions in the second complex amplitude image generation step S63 and generating the two-dimensional phase image at the position in the two-dimensional phase image generation step S65 may be set as a unit, and the unit process may be repeatedly performed while scanning the z direction position. The latter case is preferable in that a capacity of image data to be stored in the storage unit 69 can be reduced.

In the three-dimensional phase image generation step S66, the three-dimensional phase image generation unit 66 generates a three-dimensional phase image based on the two-dimensional phase image at each of the plurality of positions generated by the two-dimensional phase image generation unit 65. The three-dimensional phase image generated in this step is an image in which the positions x and y in the two-dimensional phase image and the position z of the two-dimensional phase image are variables.

In the refractive index distribution calculation step S67, the refractive index distribution calculation unit 67 obtains a three-dimensional refractive index distribution of the observation object by deconvolution based on the three-dimensional phase image generated by the three-dimensional phase image generation unit 66.

The two-dimensional phase image generation step S65, the three-dimensional phase image generation step S66, and the refractive index distribution calculation step S67 in the observation method of the second embodiment respectively perform the same processing steps as the two-dimensional phase image generation step S4, the three-dimensional phase image generation step S5, and the refractive index distribution calculation step S6 in the observation method of the first embodiment.

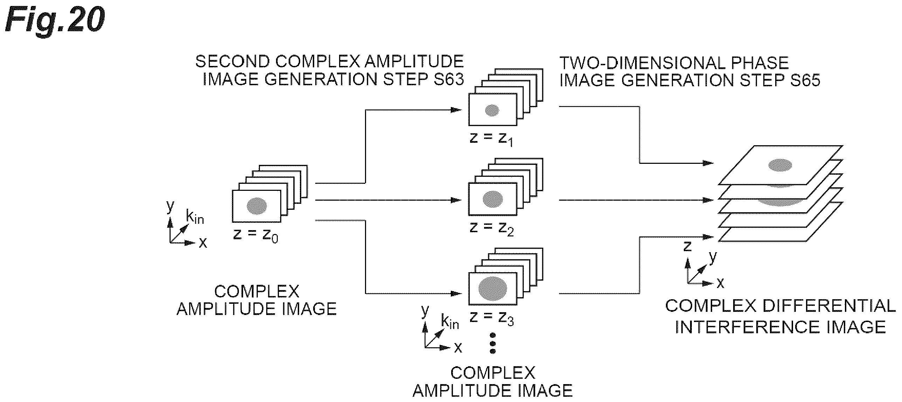

FIG. 20 is a diagram illustrating the images and the order of the respective processing steps of the second complex amplitude image generation step S63 and the two-dimensional phase image generation step S65. This diagram illustrates a configuration in which the processing step of the phase conjugate operation step S64 is not performed.

In this configuration, in the second complex amplitude image generation step S63, for each of the plurality of light irradiation directions, the complex amplitude image at each of the plurality of z direction positions (z = z₁, z₂, z₃ in this diagram) is generated based on the complex amplitude image at the reference position (z = 0) generated in the first complex amplitude image generation step S62 by the above Formulas (4) and (5) of the formulas of the free propagation.

Further, in the two-dimensional phase image generation step S65, for each of the plurality of positions, the complex differential interference image is generated based on the complex amplitude image of each of the plurality of light irradiation directions generated in the second complex amplitude image generation step S63, and in addition, the phase differential image is generated.

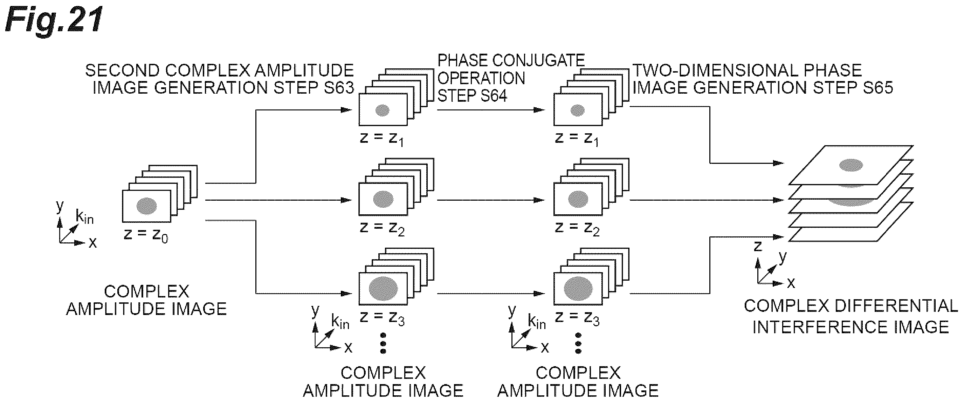

Each of FIG. 21 to FIG. 23 is a diagram illustrating the images and the order of the respective processing steps of the second complex amplitude image generation step S63, the phase conjugate operation step S64, and the two-dimensional phase image generation step S65. Each of these diagrams illustrates a configuration in which the processing step of the phase conjugate operation step S64 is performed before, during, or after the processing step of the second complex amplitude image generation step S63.

A first configuration illustrated in FIG. 21 corresponds to the flowchart illustrated in FIG. 19. In the first configuration, the phase conjugate operation step S64 is performed after the processing step of the second complex amplitude image generation step S63. In the second complex amplitude image generation step S63, for each of the plurality of light irradiation directions, the complex amplitude image at each of the plurality of z direction positions (z = z₁, z₂, z₃ in this diagram) is generated based on the complex amplitude image at the reference position (z = 0) generated in the first complex amplitude image generation step S62 by the above Formulas (4) and (5) of the formulas of the free propagation.

In the first configuration, subsequently, in the phase conjugate operation step S64, for each of the plurality of positions, the phase conjugate operation is performed on the complex amplitude image of each of the plurality of light irradiation directions, and the complex amplitude image of each of the plurality of light irradiation directions in the case in which the relationship between the light irradiation and the imaging for the observation object is reversed is generated. Further, in the two-dimensional phase image generation step S65, for each of the plurality of positions, the complex differential interference image is generated based on the complex amplitude image of each of the plurality of light irradiation directions generated in the phase conjugate operation step S64, and in addition, the phase differential image is generated.

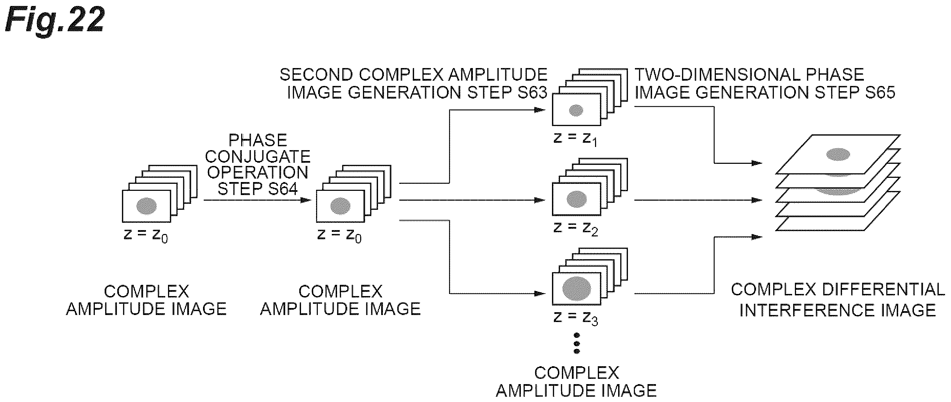

In a second configuration illustrated in FIG. 22, the phase conjugate operation step S64 is performed before the processing step of the second complex amplitude image generation step S63. In the phase conjugate operation step S64, for each of the plurality of light irradiation directions, the phase conjugate operation is performed on the complex amplitude image at the reference position (z = 0) generated in the first complex amplitude image generation step S62, and the complex amplitude image of each of the plurality of light irradiation directions in the case in which the relationship between the light irradiation and the imaging for the observation object is reversed is generated.

In the second configuration, subsequently, in the second complex amplitude image generation step S63, for each of the plurality of light irradiation directions, the complex amplitude image at each of the plurality of z direction positions (z = z₁, z₂, z₃ in this diagram) is generated based on the complex amplitude image at the reference position (z = 0) generated in the phase conjugate operation step S64 by the above Formulas (4) and (5) of the formulas of the free propagation. Further, in the two-dimensional phase image generation step S65, for each of the plurality of positions, the complex differential interference image is generated based on the complex amplitude image of each of the plurality of light irradiation directions generated in the second complex amplitude image generation step S63, and in addition, the phase differential image is generated.

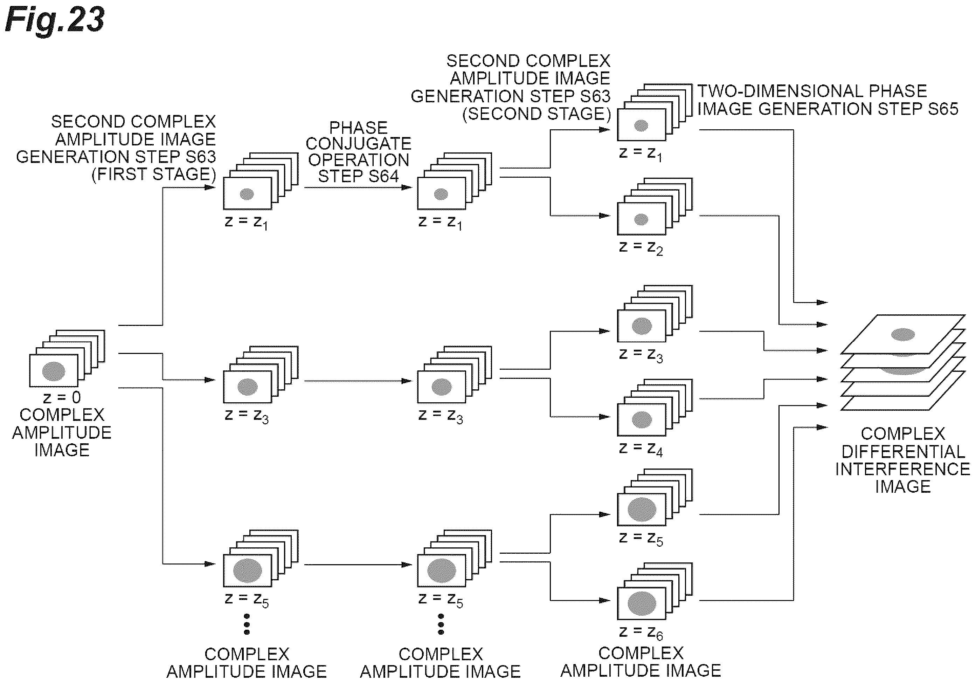

In a third configuration illustrated in FIG. 23, in the case in which the second complex amplitude image generation step S63 generates the complex amplitude image at each of the plurality of positions from the complex amplitude image at the reference position through two stages, the phase conjugate operation step S64 is performed between a first stage and a second stage in the two stages.

In the third configuration, in the first stage of the second complex amplitude image generation step S63, for each of the plurality of light irradiation directions, the complex amplitude image at each of the plurality of z direction positions (z = z₁, z₃, z₅ in this diagram) is generated based on the complex amplitude image at the reference position (z = 0) generated in the first complex amplitude image generation step S62 by the above Formulas (4) and (5) of the formulas of the free propagation. Subsequently, in the phase conjugate operation step S64, the phase conjugate operation is performed on the complex amplitude image of each of the plurality of light irradiation directions, and the complex amplitude image of each of the plurality of light irradiation directions in the case in which the relationship between the light irradiation and the imaging for the observation object is reversed is generated.

In the third configuration, further subsequently, in the second stage of the second complex amplitude image generation step S63, for each of the plurality of light irradiation directions, the complex amplitude image at each of the z direction positions (z = z₂, z₄, z₆) is generated based on the complex amplitude images at the z direction positions (z = z₁, z₃, z₅) generated in the phase conjugate operation step S64 by the above Formulas (4) and (5) of the formulas of the free propagation. Further, in the two-dimensional phase image generation step S65, for each of the plurality of positions, the complex differential interference image is generated based on the complex amplitude image of each of the plurality of light irradiation directions generated in the second complex amplitude image generation step S63, and in addition, the phase differential image is generated.

In the first configuration, the second configuration, and the third configuration described above, the number of times of the phase conjugate operation on the complex amplitude image in the phase conjugate operation step S64 is different. The overall processing time of the phase conjugate operation step S64 is shorter in the third configuration than in the first configuration, and is even shorter in the second configuration.

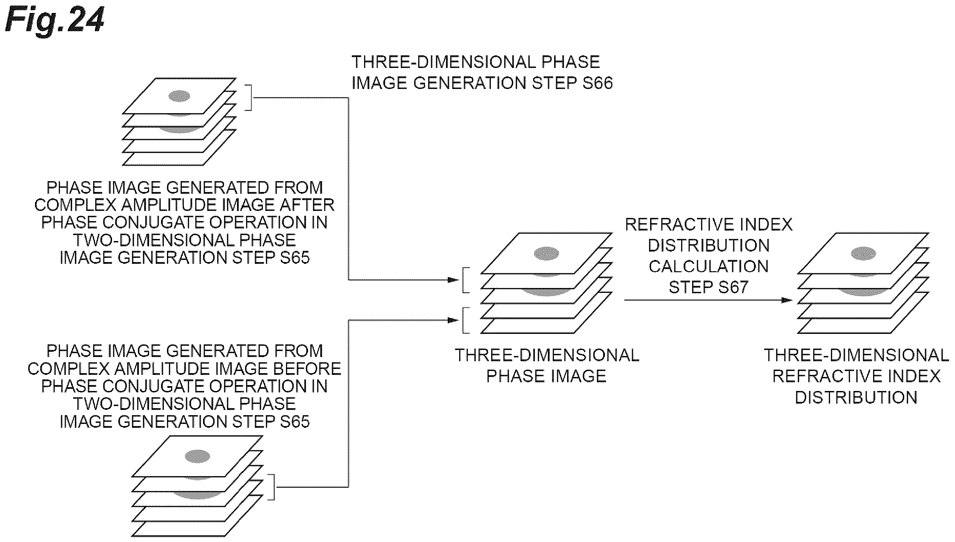

FIG. 24 is a diagram illustrating the images and the order of the respective processing steps of the three-dimensional phase image generation step S66 and the refractive index distribution calculation step S67. In the three-dimensional phase image generation step S66, the three-dimensional phase image is generated based on the two-dimensional phase image of each of the plurality of positions generated in the two-dimensional phase image generation step S65.

In this case, for the position which is relatively close to the imaging unit, the two-dimensional phase image generated based on the complex amplitude image before performing the processing step of the phase conjugate operation step S64 (the two-dimensional phase image generated in the configuration illustrated in FIG. 20) is mainly used. On the other hand, for the position which is relatively far from the imaging unit, the two-dimensional phase image generated based on the complex amplitude image after performing the processing step of the phase conjugate operation step S64 (the two-dimensional phase image generated in any one of the configurations illustrated in FIG. 21 to FIG. 23) is mainly used.

Subsequently, in the refractive index distribution calculation step S67, the three-dimensional refractive index distribution of the observation object is obtained by deconvolution based on the three-dimensional phase image generated in the three-dimensional phase image generation step S66.

The generation of the two-dimensional phase image at each position in the z direction includes the following three configurations. The phase image generated based on the complex amplitude image before performing the processing step of the phase conjugate operation step S64 (the phase image generated in the configuration illustrated in FIG. 20) is set as the first phase image ϕ₁. The phase image generated based on the complex amplitude image after performing the processing step of the phase conjugate operation step S64 (the phase image generated in any one of the configurations illustrated in FIG. 21 to FIG. 23) is set as the second phase image ϕ₂. A weight function α having a differential coefficient of 0 or less with respect to the variable z representing the distance from the imaging unit along the light propagation path is used. The value of the weight function is 0 or more and 1 or less.

In the first configuration, it is assumed that the weight function α has a positive value (for example, 1) in a range in which z is threshold value zₜₕ or less, and has a value of 0 in a range other than the above range. That is, the two-dimensional phase image is represented by the following Formula (11).
[Formula 11] $ϕ \left(x, y, z\right) = \left\{\begin{matrix}{ϕ}_{1} \left(x, y, z\right) & z \leq {z}_{th} \\ {ϕ}_{2} \left(x, y, z\right) & z > {z}_{th}\end{matrix}\right.$ (11)

In the second configuration, it is assumed that the weight function α is a function having a value which continuously changes in at least a partial range in the z direction. That is, the two-dimensional phase image is represented by the following Formula (12).
[Formula 12] $ϕ \left(x, y, z\right) = α \left(z\right) ⋅ {ϕ}_{1} \left(x, y, z\right) + \left[1-α\left(z\right)\right] {ϕ}_{2} \left(x, y, z\right)$ (12)

In the third configuration, it is assumed that the weight function α has a value according to the position (x, y) on the plane perpendicular to the optical axis (the z direction). That is, the two-dimensional phase image is represented by the following Formula (13).
[Formula 13] $ϕ \left(x, y, z\right) = α \left(x, y, z\right) ⋅ {ϕ}_{1} \left(x, y, z\right) + \left[1-α\left(x, y, z\right)\right] {ϕ}_{2} \left(x, y, z\right)$ (13)

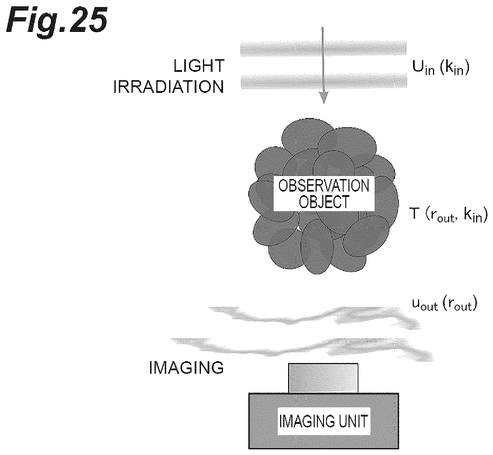

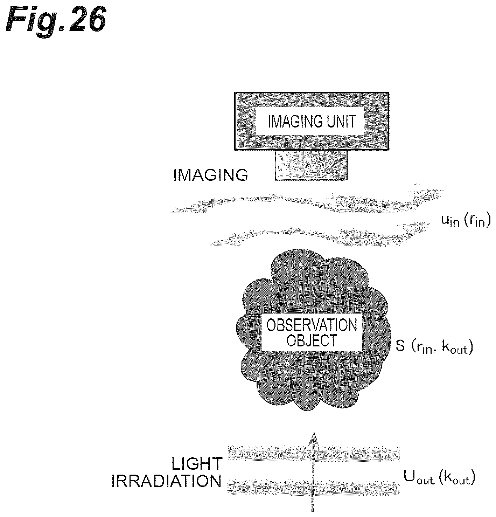

Next, the contents of the phase conjugate operation by the phase conjugate operation step S64 will be described with reference to FIG. 25 and FIG. 26.

FIG. 25 is a diagram illustrating input light Uᵢₙ(kᵢₙ) and output light uₒᵤₜ(rₒᵤₜ) when the interference intensity image is imaged by the imaging unit. Uᵢₙ(kᵢₙ) represents a complex amplitude of a wavenumber kᵢₙ of the light with which the observation object is irradiated. uₒᵤₜ(rₒᵤₜ) represents a complex amplitude of a position rₒᵤₜ of the light output from the observation object.

The relationship between Uᵢₙ(kᵢₙ) and uₒᵤₜ(rₒᵤₜ) is represented by the following Formula (14). An n-th element Uᵢₙ(kᵢₙⁿ) of a column vector Uᵢₙ represents a complex amplitude of a plane wave of a wavenumber of kᵢₙⁿ. An n-th element uₒᵤₜ(rₒᵤₜⁿ) of a column vector uₒᵤₜ represents a complex amplitude of the light observed at a position rₒᵤₜⁿ. A matrix T(rₒᵤₜ, kᵢₙ) of N rows and N columns represents a linear relationship between Uᵢₙ(kᵢₙ) and uₒᵤₜ(rₒᵤₜ), and is referred to as a transmission matrix. A scattering process of the light in the observation object can be represented by the transmission matrix described above. An element T_{n1,n2} of an n1-th row and an n2-th column of the matrix T(rₒᵤₜ, kᵢₙ) represent a complex amplitude of the light observed at a position rₒᵤₜⁿ¹ when the plane wave having a wavenumber of kᵢₙⁿ² and an amplitude of 1 is input.
[Formula 14] $\begin{matrix}\left(\begin{matrix}{u}_{out} \left({r}_{out}^{1}\right) \\ ⋮ \\ {u}_{out} \left({r}_{out}^{N}\right)\end{matrix}\right) = \left(\begin{matrix}T \left({r}_{out}^{1}, {k}_{in}^{1}\right) & ⋯ & T \left({r}_{out}^{1}, {k}_{in}^{N}\right) \\ ⋮ & ⋱ & ⋮ \\ T \left({r}_{out}^{N}, {k}_{in}^{1}\right) & ⋯ & T \left({r}_{out}^{N}, {k}_{in}^{N}\right)\end{matrix}\right) \left(\begin{matrix}{U}_{in} \left({k}_{in}^{1}\right) \\ ⋮ \\ {U}_{in} \left({k}_{in}^{N}\right)\end{matrix}\right) \\ = \left(\begin{matrix}{T}_{1 , 1} & ⋯ & {T}_{1 , N} \\ ⋮ & ⋱ & ⋮ \\ {T}_{N , 1} & ⋯ & {T}_{N , N}\end{matrix}\right) \left(\begin{matrix}{U}_{in} \left({k}_{in}^{1}\right) \\ ⋮ \\ {U}_{in} \left({k}_{in}^{N}\right)\end{matrix}\right)\end{matrix}$ (14)

FIG. 26 is a diagram illustrating input light Uₒᵤₜ(kₒᵤₜ) and output light uᵢₙ(rᵢₙ) in the case in which the relationship between the light irradiation and the imaging is reversed. In this case, Uₒᵤₜ(kₒᵤₜ) represents a complex amplitude of a wavenumber kₒᵤₜ of the light with which the observation object is irradiated. uᵢₙ(rᵢₙ) represents a complex amplitude of a position rᵢₙ of the light output from the observation object.

The relationship between Uₒᵤₜ(kₒᵤₜ) and uᵢₙ(rᵢₙ) is represented by the following Formula (15). An n-th element Uₒᵤₜ(kₒᵤₜⁿ) of a column vector Uₒᵤₜ represents a complex amplitude of a plane wave of a wavenumber of kₒᵤₜⁿ. An n-th element uᵢₙ(rᵢₙⁿ) of a column vector uᵢₙ represents a complex amplitude of the light observed at a position rᵢₙⁿ. A matrix S(rᵢₙ, kₒᵤₜ) of N rows and N columns represents a linear relationship between Uₒᵤₜ(kₒᵤₜ) and uᵢₙ(rᵢₙ), and is a transmission matrix in the case in which the relationship between the light irradiation and the imaging is reversed.
[Formula 15] $\begin{matrix}\left(\begin{matrix}{u}_{in} \left({r}_{in}^{1}\right) \\ ⋮ \\ {u}_{in} \left({r}_{in}^{N}\right)\end{matrix}\right) = \left(\begin{matrix}S \left({r}_{in}^{1}, {k}_{out}^{1}\right) & ⋯ & S \left({r}_{in}^{1}, {k}_{out}^{N}\right) \\ ⋮ & ⋱ & ⋮ \\ S \left({r}_{in}^{N}, {k}_{out}^{1}\right) & ⋯ & S \left({r}_{in}^{N}, {k}_{out}^{N}\right)\end{matrix}\right) \left(\begin{matrix}{U}_{out} \left({k}_{out}^{1}\right) \\ ⋮ \\ {U}_{out} \left({k}_{out}^{N}\right)\end{matrix}\right) \\ = \left(\begin{matrix}{S}_{1 , 1} & ⋯ & {S}_{1 , N} \\ ⋮ & ⋱ & ⋮ \\ {S}_{N , 1} & ⋯ & {S}_{N , N}\end{matrix}\right) \left(\begin{matrix}{U}_{out} \left({k}_{out}^{1}\right) \\ ⋮ \\ {U}_{out} \left({k}_{out}^{N}\right)\end{matrix}\right)\end{matrix}$ (15)

Uᵢₙ(kᵢₙ) is represented by the Fourier transform of uᵢₙ(rᵢₙ) as shown in the following Formula (16). Uₒᵤₜ(kₒᵤₜ) is represented by the Fourier transform of uₒᵤₜ(rₒᵤₜ) as shown in the following Formula (17). When Formulas (14) to (17) are used, the transmission matrix S(rᵢₙ, kₒᵤₜ) in the case in which the relationship between the light irradiation and the imaging is reversed is represented by the following Formula (18) by using a matrix representing the inverse Fourier transform and the transmission matrix T(rₒᵤₜ, kᵢₙ).
[Formula 16] $\left(\begin{matrix}{U}_{in} \left({k}_{in}^{1}\right) \\ ⋮ \\ {U}_{in} \left({k}_{in}^{N}\right)\end{matrix}\right) = \left(\begin{matrix}{F}_{1 , 1} & ⋯ & {F}_{1 , N} \\ ⋮ & ⋱ & ⋮ \\ {F}_{N , 1} & ⋯ & {F}_{N , N}\end{matrix}\right) \left(\begin{matrix}{u}_{in} \left({r}_{in}^{1}\right) \\ ⋮ \\ {u}_{in} \left({r}_{in}^{N}\right)\end{matrix}\right)$ (16) [Formula 17] $\left(\begin{matrix}{U}_{out} \left({k}_{out}^{1}\right) \\ ⋮ \\ {U}_{out} \left({k}_{out}^{N}\right)\end{matrix}\right) = \left(\begin{matrix}{F}_{1 , 1} & ⋯ & {F}_{1 , N} \\ ⋮ & ⋱ & ⋮ \\ {F}_{N , 1} & ⋯ & {F}_{N , N}\end{matrix}\right) \left(\begin{matrix}{u}_{out} \left({r}_{out}^{1}\right) \\ ⋮ \\ {u}_{out} \left({r}_{out}^{N}\right)\end{matrix}\right)$ (17) [Formula 18] $\left(\begin{matrix}{S}_{1 , 1} & ⋯ & {S}_{1 , N} \\ ⋮ & ⋱ & ⋮ \\ {S}_{N , 1} & ⋯ & {S}_{N , N}\end{matrix}\right) = {\left(\begin{matrix}{F}_{1 , 1} & ⋯ & {F}_{1 , N} \\ ⋮ & ⋱ & ⋮ \\ {F}_{N , 1} & ⋯ & {F}_{N , N}\end{matrix}\right)}^{- 1} {\left(\begin{matrix}{T}_{1 , 1} & ⋯ & {T}_{1 , N} \\ ⋮ & ⋱ & ⋮ \\ {T}_{N , 1} & ⋯ & {T}_{N , N}\end{matrix}\right)}^{- 1} {\left(\begin{matrix}{F}_{1 , 1} & ⋯ & {F}_{1 , N} \\ ⋮ & ⋱ & ⋮ \\ {F}_{N , 1} & ⋯ & {F}_{N , N}\end{matrix}\right)}^{- 1}$ (18)

In the phase conjugate operation step S64, first, the transmission matrix T(rₒᵤₜ, kᵢₙ) when the interference intensity image is imaged by the imaging unit is obtained based on the complex amplitude image. Next, based on the above transmission matrix T(rₒᵤₜ, kᵢₙ) and the above Formula (18), the transmission matrix S(rᵢₙ, kₒᵤₜ) in the case in which the relationship between the light irradiation and the imaging is reversed is obtained. Further, based on the above transmission matrix S(rᵢₙ, kₒᵤₜ), the complex amplitude image in the case in which the relationship between the light irradiation and the imaging is reversed is obtained.

The vector Uᵢₙⁿ(kᵢₙ) of the input light of the n-th light irradiation direction when the interference intensity image is imaged by the imaging unit for each of the plurality of light irradiation directions is represented by the following Formula (19), in which only the value of the n-th element is 1 and the values of the other elements are 0. For the above input light Uᵢₙⁿ(kᵢₙ), the output light uₒᵤₜⁿ(rₒᵤₜ) is represented by the following Formula (20). The Formula (20) corresponds to the complex amplitude obtained for the n-th light irradiation direction.
[Formula 19] ${U}_{in}^{n} \left({k}_{in}\right) = \left(\begin{matrix}{U}_{in}^{n} \left({k}_{in}^{1}\right) \\ ⋮ \\ {U}_{in}^{n} \left({k}_{in}^{N}\right)\end{matrix}\right) = \left(\begin{matrix}0 \\ ⋮ \\ 0 \\ 1 \\ 0 \\ ⋮ \\ 0\end{matrix}\right)$ (19) [Formula 20] ${u}_{out}^{n} \left({r}_{out}\right) = \left(\begin{matrix}{u}_{out}^{n} \left({r}_{out}^{1}\right) \\ ⋮ \\ {u}_{out}^{n} \left({r}_{out}^{N}\right)\end{matrix}\right)$ (20)

From the Formula (19) and the above Formula (14), the following Formula (21) is obtained. Further, the following Formula (22) is obtained by similarly obtaining for each of the plurality of light irradiation directions. In this way, the transmission matrix T(rₒᵤₜ, kᵢₙ) can be obtained. In addition, from the Formula (22) and the above Formula (18), the transmission matrix S(rᵢₙ, kₒᵤₜ) in the case in which the relationship between the light irradiation and the imaging is reversed can be obtained.
[Formula 21] $\left(\begin{matrix}{u}_{out}^{n} \left({r}_{out}^{1}\right) \\ ⋮ \\ {u}_{out}^{n} \left({r}_{out}^{N}\right)\end{matrix}\right) = \left(\begin{matrix}{T}_{1 , 1} & ⋯ & {T}_{1 , N} \\ ⋮ & ⋱ & ⋮ \\ {T}_{N , 1} & ⋯ & {T}_{N , N}\end{matrix}\right) \left(\begin{matrix}{U}_{in} \left({k}_{in}^{1}\right) \\ ⋮ \\ {U}_{in} \left({k}_{in}^{N}\right)\end{matrix}\right) = \left(\begin{matrix}{T}_{1 , n} \\ ⋮ \\ {T}_{N , n}\end{matrix}\right)$ (21) [Formula 22] $\left(\begin{matrix}{T}_{1 , 1} & ⋯ & {T}_{1 , N} \\ ⋮ & ⋱ & ⋮ \\ {T}_{N , 1} & ⋯ & {T}_{N , N}\end{matrix}\right) = \left(\begin{matrix}{u}_{out}^{1} \left({r}_{out}^{1}\right) & ⋯ & {u}_{out}^{N} \left({r}_{out}^{1}\right) \\ ⋮ & ⋱ & ⋮ \\ {u}_{out}^{1} \left({r}_{out}^{N}\right) & ⋯ & {u}_{out}^{N} \left({r}_{out}^{N}\right)\end{matrix}\right)$ (22)

The input light Uₒᵤₜⁿ(kₒᵤₜ) of the n-th light irradiation direction out of the plurality of light irradiation directions in the case in which the relationship between the light irradiation and the imaging is reversed is represented by the following Formula (23), in which only the value of the n-th element is 1 and the values of the other elements are 0. From this Formula, the output light uᵢₙⁿ(rᵢₙ) for the input light Uₒᵤₜⁿ(kₒᵤₜ) is represented by the following Formula (24). The Formula (24) represents the complex amplitude when the relationship between the light irradiation and the imaging is reversed. In this way, the complex amplitude image in the case in which the relationship between the light irradiation and the imaging is reversed can be obtained.
[Formula 23] ${U}_{out}^{n} \left({k}_{out}\right) = \left(\begin{matrix}{U}_{out}^{n} \left({k}_{out}^{1}\right) \\ ⋮ \\ {U}_{out}^{n} \left({k}_{out}^{N}\right)\end{matrix}\right) = \left(\begin{matrix}0 \\ ⋮ \\ 0 \\ 1 \\ 0 \\ ⋮ \\ 0\end{matrix}\right)$ (23) [Formula 24] $\left(\begin{matrix}{u}_{in}^{n} \left({r}_{in}^{1}\right) \\ ⋮ \\ {u}_{in}^{n} \left({r}_{in}^{N}\right)\end{matrix}\right) = \left(\begin{matrix}{S}_{1 , 1} & ⋯ & {S}_{1 , N} \\ ⋮ & ⋱ & ⋮ \\ {S}_{N , 1} & ⋯ & {S}_{N , N}\end{matrix}\right) \left(\begin{matrix}{U}_{out} \left({k}_{out}^{1}\right) \\ ⋮ \\ {U}_{out} \left({k}_{out}^{N}\right)\end{matrix}\right) = \left(\begin{matrix}{S}_{1 , n} \\ ⋮ \\ {S}_{N , n}\end{matrix}\right)$ (24)

When the transmission matrix S(rᵢₙ, kₒᵤₜ) in the case in which the relationship between the light irradiation and the imaging is reversed is obtained, it is necessary to calculate the inverse matrix of the transmission matrix T(rₒᵤₜ, kᵢₙ) as shown in the above Formula (18). Therefore, the transmission matrix T needs to be a square matrix in which the number of row elements and the number of column elements are equal to each other. That is, a matrix dimension in a light irradiation side wavenumber space for the observation object in the interference intensity image acquisition step S61 and the number of pixels of the complex amplitude image need to be equal to each other.

In order to make them equal to each other, the matrix dimension in the light irradiation side wavenumber space for the observation object in the interference intensity image acquisition step S61 may be made equal to the number of pixels, or only a partial range of the image acquired by the imaging unit may be used in the subsequent processing steps. However, in general, the number of pixels of the image acquired by the imaging unit is, for example, 1024 × 1024, and thus, it is not easy to make the matrix dimension in the light irradiation side wavenumber space for the observation object equal to the number of pixels. Further, it is not preferable to use only the partial range of the image out of the image acquired by the imaging unit in the subsequent processing steps because this leads to a decrease in resolution.

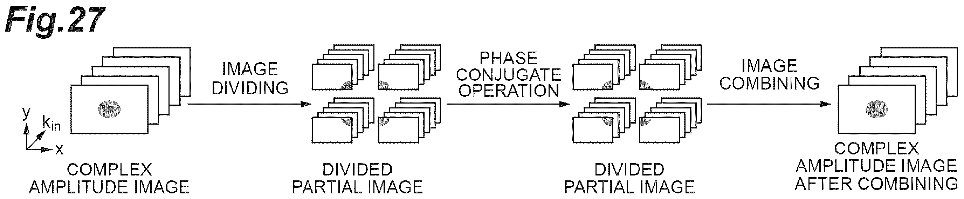

Therefore, as illustrated in FIG. 27, in the phase conjugate operation step S64, it is preferable to divide the complex amplitude image into a plurality of partial images each having the same number of pixels as the matrix dimension in the light irradiation side wavenumber space for the observation object, perform the phase conjugate operation on each of the plurality of partial images, and then combine the plurality of partial images. In this case, any two or more partial images out of the plurality of partial images may have a common region.

According to the present embodiment also, it is possible to observe the moving observation object while reducing the influence of the multiple scattered light even when the observation object is the multiple scattering object.

### (Third embodiment)

As a configuration of an apparatus according to a third embodiment, an observation apparatus 1E and an observation apparatus 1F will be described.

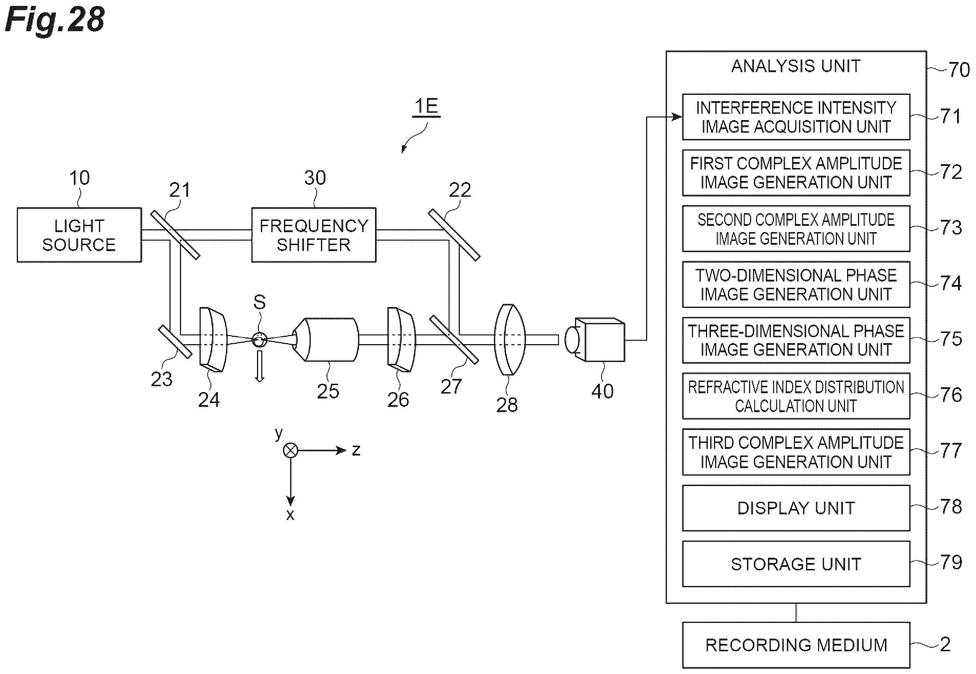

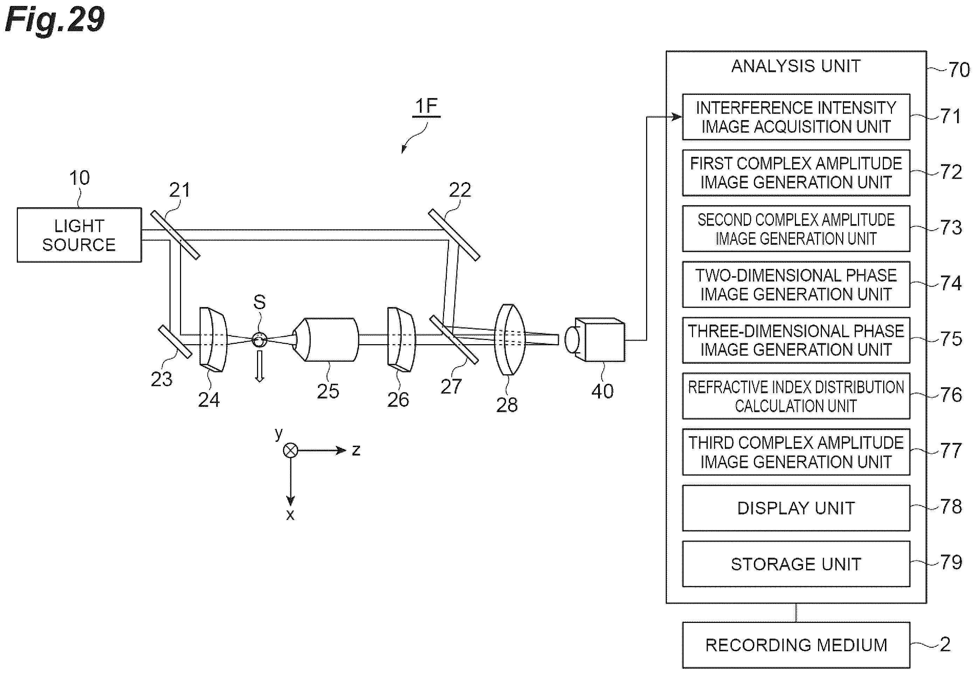

The observation apparatus 1E illustrated in FIG. 28, as compared with the configuration of the observation apparatus 1A illustrated in FIG. 1, has the common configuration for the optical system from the light source 10 to the imaging unit 40, and further, is different in that an analysis unit 70 is provided instead of the analysis unit 50. The observation apparatus 1F illustrated in FIG. 29, as compared with the configuration of the observation apparatus 1B illustrated in FIG. 2, has the common configuration for the optical system from the light source 10 to the imaging unit 40, and further, is different in that the analysis unit 70 is provided instead of the analysis unit 50.

The analysis unit 70 is electrically connected to the imaging unit 40, and inputs the time series data of the interference intensity image output from the imaging unit 40. The analysis unit 70 generates the complex amplitude image of each of the plurality of light irradiation directions of the object light based on the time series data of the interference intensity image, and generates the three-dimensional complex differential interference image of the observation object S based on the complex amplitude image of each of the plurality of light irradiation directions. In addition, the analysis unit 70 obtains the three-dimensional refractive index distribution of the observation object S based on the three-dimensional complex differential interference image.

The analysis unit 70 may be a computer. The analysis unit 70 includes an interference intensity image acquisition unit 71, a first complex amplitude image generation unit 72, a second complex amplitude image generation unit 73, a two-dimensional phase image generation unit 74, a three-dimensional phase image generation unit 75, a refractive index distribution calculation unit 76, a third complex amplitude image generation unit 77, a display unit 78, and a storage unit 79.

The interference intensity image acquisition unit 71 acquires the time series data of the interference intensity image output from the imaging unit 40. The interference intensity image acquisition unit 71 includes a CPU, and has an input port for inputting the data of the interference intensity image output from the imaging unit 40.

The first complex amplitude image generation unit 72, the second complex amplitude image generation unit 73, the two-dimensional phase image generation unit 74, the three-dimensional phase image generation unit 75, the refractive index distribution calculation unit 76, and the third complex amplitude image generation unit 77 perform processing based on the time series data of the interference intensity image, and include a processing device such as a CPU, a GPU, a DSP, an FPGA, or the like. The display unit 78 displays an image to be processed, an image in the middle of the processing, an image after the processing, and the like, and includes, for example, a liquid crystal display.

The storage unit 79 stores data of various images, and includes a hard disk drive, a flash memory, a RAM, a ROM, and the like. The first complex amplitude image generation unit 72, the second complex amplitude image generation unit 73, the two-dimensional phase image generation unit 74, the three-dimensional phase image generation unit 75, the refractive index distribution calculation unit 76, the third complex amplitude image generation unit 77, and the storage unit 79 may be constituted by a cloud computing.

The storage unit 79 also stores a program for causing the interference intensity image acquisition unit 71, the first complex amplitude image generation unit 72, the second complex amplitude image generation unit 73, the two-dimensional phase image generation unit 74, the three-dimensional phase image generation unit 75, the refractive index distribution calculation unit 76, and the third complex amplitude image generation unit 77 to execute respective steps of the processing.

The program may be stored in the storage unit 79 at the time of manufacture or shipment of the observation apparatus, may be acquired via a communication line after shipment and then stored in the storage unit 79, or may be recorded in a computer readable recording medium 2 and then stored in the storage unit 79. The recording medium 2 may be an arbitrary medium such as a flexible disk, a CD-ROM, a DVD-ROM, a BD-ROM, a USB memory, or the like.

The details of the processing step of each of the interference intensity image acquisition unit 71, the first complex amplitude image generation unit 72, the second complex amplitude image generation unit 73, the two-dimensional phase image generation unit 74, the three-dimensional phase image generation unit 75, the refractive index distribution calculation unit 76, and the third complex amplitude image generation unit 77 will be described later.

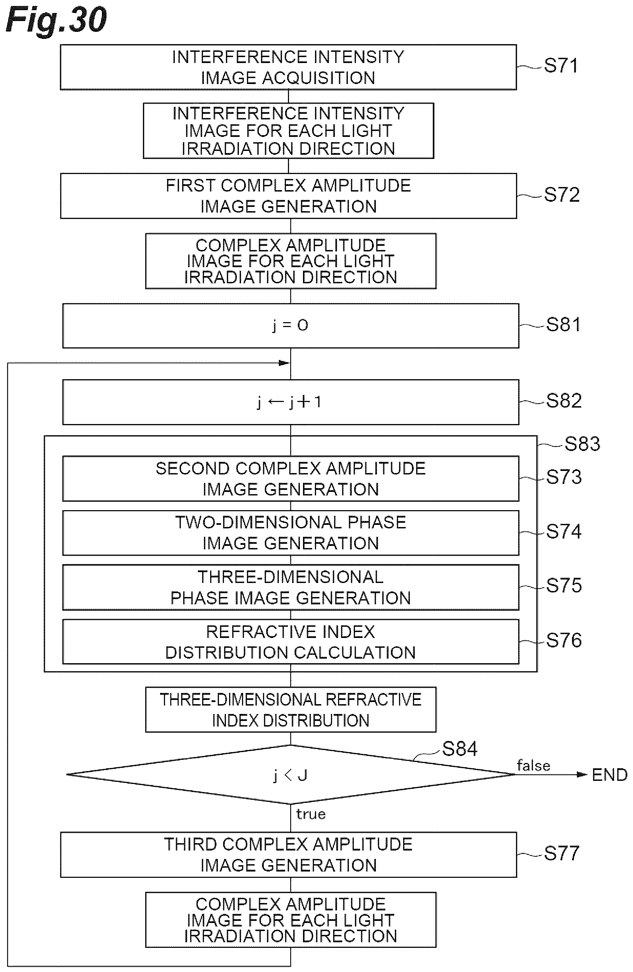

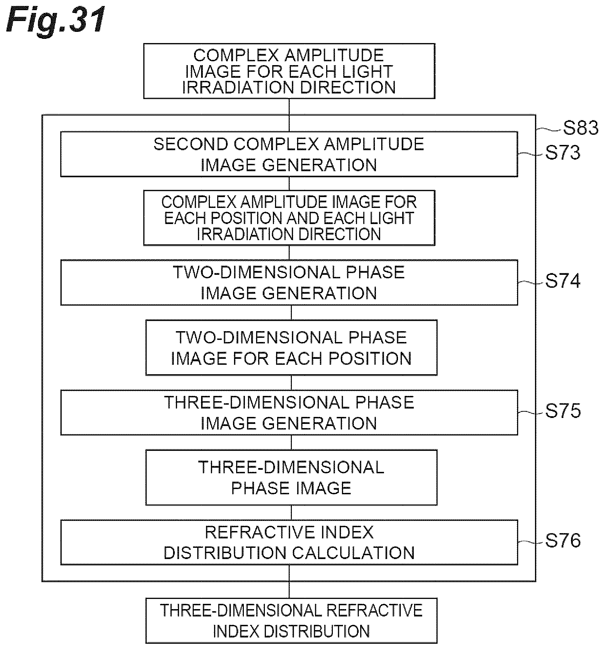

FIG. 30 and FIG. 31 are flowcharts of an observation method according to the third embodiment. FIG. 31 illustrates a part of the flowchart illustrated in FIG. 30. This observation method can be applied to each of the observation apparatus 1E and the observation apparatus 1F. The observation method includes an interference intensity image acquisition step S71, a first complex amplitude image generation step S72, a second complex amplitude image generation step S73, a two-dimensional phase image generation step S74, a three-dimensional phase image generation step S75, a refractive index distribution calculation step S76, and a third complex amplitude image generation step S77.

The processing step of the interference intensity image acquisition step S71 is performed by the interference intensity image acquisition unit 71. The processing step of the first complex amplitude image generation step S72 is performed by the first complex amplitude image generation unit 72. The processing step of the second complex amplitude image generation step S73 is performed by the second complex amplitude image generation unit 73.

The processing step of the two-dimensional phase image generation step S74 is performed by the two-dimensional phase image generation unit 74. The processing step of the three-dimensional phase image generation step S75 is performed by the three-dimensional phase image generation unit 75. The processing step of the refractive index distribution calculation step S76 is performed by the refractive index distribution calculation unit 76. The processing step of the third complex amplitude image generation step S77 is performed by the third complex amplitude image generation unit 77.

In the interference intensity image acquisition step S71, the interference intensity image acquisition unit 71 acquires the time series data of the interference intensity image output from the imaging unit 40. In the first complex amplitude image generation step S72, the first complex amplitude image generation unit 72 obtains the time series data u(kₓ, y, t) of the complex amplitude image of the object light reaching the imaging plane of the imaging unit 40 based on the time series data I(kₓ, y, t) acquired by the interference intensity image acquisition unit 71, and in addition, generates the complex amplitude image u(x, y) of each of the plurality of light irradiation directions kᵢₙ based on the time series data u(kₓ, y, t) of the complex amplitude image of the object light.

In the second complex amplitude image generation step S73, the second complex amplitude image generation unit 73 generates, for each of the plurality of light irradiation directions, a complex amplitude image at each of a plurality of z direction positions between a first position and a second position based on the complex amplitude image at the first position with respect to a distance from the imaging unit 40 along a light propagation path.

In the two-dimensional phase image generation step S74, the two-dimensional phase image generation unit 74 generates, for each of the plurality of positions, a two-dimensional phase image based on the complex amplitude image of each of the plurality of light irradiation directions generated by the second complex amplitude image generation unit 73. The two-dimensional phase image generated in this step corresponds to a phase image centered on the focused z direction position.

In the three-dimensional phase image generation step S75, the three-dimensional phase image generation unit 75 generates a three-dimensional phase image between the first position and the second position based on the two-dimensional phase image at each of the plurality of positions generated by the two-dimensional phase image generation unit 74. The three-dimensional phase image generated in this step is an image in which the positions x and y in the two-dimensional phase image and the position z of the two-dimensional phase image are variables.

In the refractive index distribution calculation step S76, the refractive index distribution calculation unit 76 obtains a three-dimensional refractive index distribution of the observation object between the first position and the second position by deconvolution based on the three-dimensional phase image generated by the three-dimensional phase image generation unit 75.

The interference intensity image acquisition step S71, the first complex amplitude image generation step S72, the second complex amplitude image generation step S73, the two-dimensional phase image generation step S74, the three-dimensional phase image generation step S75, and the refractive index distribution calculation step S76 in the observation method of the third embodiment respectively perform substantially the same processing steps as the interference intensity image acquisition step S1, the first complex amplitude image generation step S2, the second complex amplitude image generation step S3, the two-dimensional phase image generation step S4, the three-dimensional phase image generation step S5, and the refractive index distribution calculation step S6 in the observation method of the first embodiment.

In the third complex amplitude image generation step S77, the third complex amplitude image generation unit 77 generates, for each of the plurality of light irradiation directions, a complex amplitude image at the second position based on the complex amplitude image at the first position used in the second complex amplitude image generation step S73 and the three-dimensional refractive index distribution of the observation object between the first position and the second position calculated in the refractive index distribution calculation step S76.

In the step S83 including the second complex amplitude image generation step S73, the two-dimensional phase image generation step S74, the three-dimensional phase image generation step S75, and the refractive index distribution calculation step S76, the three-dimensional refractive index distribution of the observation object between the first position and the second position is obtained based on the complex amplitude image at the first position with respect to the distance from the imaging unit 40 along the light propagation path. The processing steps of the step S83 and the third complex amplitude image generation step S77 are repeatedly performed. This will be described with reference to FIG. 30 to FIG. 33.

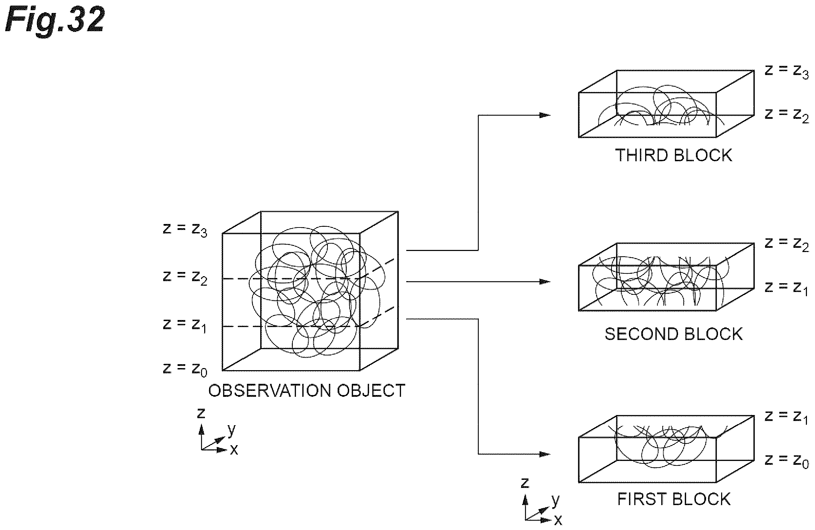

FIG. 32 is a diagram illustrating a relationship between a region including the observation object and first to J-th blocks. As illustrated in this diagram, the region including the observation object is divided into the first to J-th blocks in order based on the distance from the imaging unit along the light propagation path (z direction). In this diagram, it is set to J = 3. The j-th block in the first to J-th blocks is a region from z = zⱼ₋₁ to z = zⱼ. In each j-th block, a position (near end) of z = zⱼ₋₁ closest to the imaging unit is set as the first position, and a position (far end) of z = zⱼ farthest from the imaging unit is set as the second position.

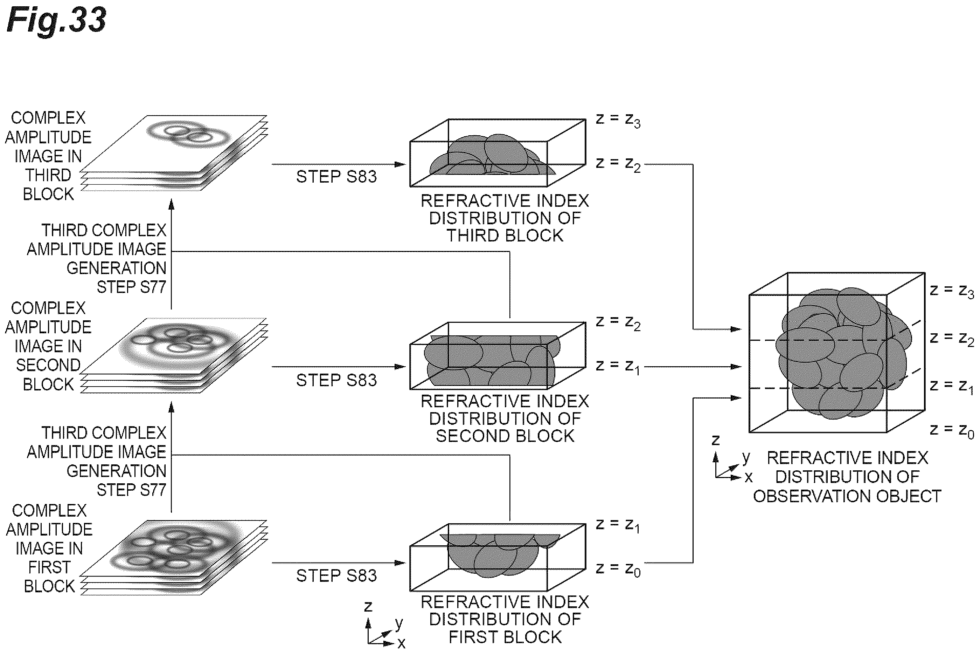

FIG. 33 is a diagram illustrating a processing procedure for the first to J-th blocks. As illustrated in this diagram, for each j-th block, in the step S83, the complex amplitude image and the two-dimensional phase image at each of the plurality of z direction positions from the first position to the second position are generated based on the complex amplitude image at the first position, the three-dimensional phase image between the first position and the second position is generated, and the three-dimensional refractive index distribution is obtained. For each j-th block, in the third complex amplitude image generation step S77, the complex amplitude image at the second position is generated based on the complex amplitude image at the first position and the three-dimensional refractive index distribution calculated in the step S83.

The complex amplitude image at the second position in the (j-1)-th block generated in the third complex amplitude image generation step S77 is used as the complex amplitude image at the first position in the next j-th block, and the processing steps of the step S83 and the third complex amplitude image generation step S77 are performed for the j-th block. When the three-dimensional refractive index distribution is obtained for each of the first to J-th blocks, the three-dimensional refractive index distribution of the entire observation object is obtained by combining these distributions.

As illustrated in FIG. 30 and FIG. 31, in the step S81 after the first complex amplitude image generation step S72, it is set to j = 0, and in the subsequent step S82, the value of j is increased as j = 1, and the processing steps of the step S83 and the third complex amplitude image generation step S77 are performed for the first block.

That is, for the first block closest to the imaging unit, based on the complex amplitude image generated in the first complex amplitude image generation step S72, a position of z = z₀ (near end) closest to the imaging unit is set as the first position, a position of z = z₁ (far end) farthest from the imaging unit is set as the second position, and the respective processing steps of the step S83 (the second complex amplitude image generation step S73, the two-dimensional phase image generation step S74, the three-dimensional phase image generation step S75, and the refractive index distribution calculation step S76) and the third complex amplitude image generation step S77 are sequentially performed. Thereafter, the process returns to the step S82.

For the j-th block (in this case, j is 2 or more and less than J), based on the complex amplitude image generated for the (j-1)-th block in the third complex amplitude image generation step S77, a position of z = zⱼ₋₁ (near end) closest to the imaging unit is set as the first position, a position of z = zⱼ (far end) farthest from the imaging unit is set as the second position, and the respective processing steps of the step S83 (the second complex amplitude image generation step S73, the two-dimensional phase image generation step S74, the three-dimensional phase image generation step S75, and the refractive index distribution calculation step S76) and the third complex amplitude image generation step S77 are sequentially performed. Thereafter, the process returns to the step S82.

For the J-th block which is the last block farthest from the imaging unit, based on the complex amplitude image generated for the (J-1)-th block in the third complex amplitude image generation step S77, a position of z = z_{J-1} (near end) closest to the imaging unit is set as the first position, a position of z = z_{J} (far end) farthest from the imaging unit is set as the second position, and the processing step of the step S83 (the second complex amplitude image generation step S73, the two-dimensional phase image generation step S74, the three-dimensional phase image generation step S75, and the refractive index distribution calculation step S76) is performed.

For the J-th block, it is determined to be the last block in the step S84 after the step S83, and may be ended without proceeding to the third complex amplitude image generation step S77. In addition, for the J-th block, it may be determined to be the last block after the three-dimensional phase image generation step S75, and may be ended without proceeding to the refractive index distribution calculation step S76, and in this case, the three-dimensional phase image of the entire observation object is obtained.

In addition, the region including the observation object may be divided into the two blocks in order based on the distance from the imaging unit along the light propagation path (z direction), and in this case, the processing for the first block and the processing for the last J-th block described above may be performed.

Further, the region including the observation object may not be divided into the plurality of blocks, and in this case, the respective processing steps of the step S83 (the second complex amplitude image generation step S73, the two-dimensional phase image generation step S74, the three-dimensional phase image generation step S75, and the refractive index distribution calculation step S76) and the third complex amplitude image generation step S77 may be sequentially performed only once.

Next, the details of the third complex amplitude image generation step S77 will be described. When acquiring the interference intensity image by irradiating the observation object with the light, in the j-th block, a light wavefront at the second position (z = zⱼ) propagates inside the j-th block to reach the first position (z = zⱼ₋₁) and further propagates to the imaging unit. Therefore, in the third complex amplitude image generation step S77, the light wavefront at the first position (z = zⱼ₋₁) is reversely propagated inside the j-th block by numerical calculation in consideration of the refractive index distribution of the j-th block, thereby obtaining the light wavefront at the second position (z = zⱼ).

That is, in the third complex amplitude image generation step S77, for each of the plurality of light irradiation directions, the complex amplitude image at the second position (z = zⱼ) of the j-th block is generated based on the complex amplitude image at the first position (z = zⱼ₋₁) of the j-th block and the refractive index distribution of the j-th block. In the above processing, a method of numerically calculating the propagation of the light wavefront in consideration of the refractive index distribution of the medium is used. A beam propagation method (BPM), a split-step non-paraxial (SSNP), and the like are known as the numerical calculation method of the inhomogeneous medium propagation described above. Hereinafter, the processing using the BPM in the third complex amplitude image generation step S77 will be described.

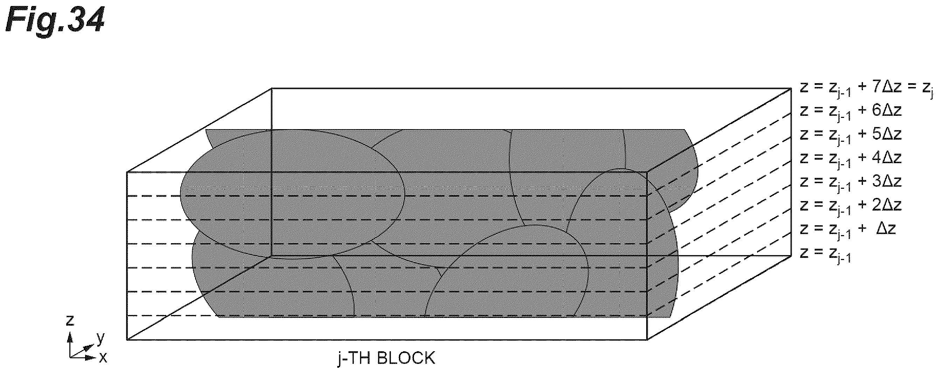

FIG. 34 is a diagram illustrating processing contents of the BPM. This diagram illustrates an arbitrary j-th block. As illustrated in this diagram, the j-th block is divided into M slices (7 slices in this diagram) (first to M-th slices) based on the distance from the imaging unit along the light propagation path (z direction). A thickness of each slice is about a wavelength.

The thickness of each slice may be constant. In this case, it is assumed that the thickness of each slice is a constant value of Δz. The m-th slice out of the first to M-th slices of the j-th block is from a position (zⱼ₋₁ + (m-1)Δz) to a position (zⱼ₋₁ + mΔz). In order from the first position (z = zⱼ₋₁) of the j-th block to the second position (z = zⱼ), a phase change according to the refractive index distribution is sequentially applied in each of the first to M-th slices, and the light wavefront is reversely propagated by Δz.

In addition, the thickness Δz of each slice in the processing of the third complex amplitude image generation step S77 may be different from or may coincide with the position interval when generating the complex amplitude image of each of the plurality of z direction positions from the first position to the second position in the processing of the second complex amplitude image generation step S73.

The phase change o(x, y, z) applied to the light wavefront when reversely propagating the slice of the thickness Δz at the position z is represented by the following Formula (25). In the Formula (25), kᵥ is a wavenumber of the light in vacuum. δn(x, y, z) is a difference between the refractive index distribution n(x, y, z) of the observation object at the position z and the refractive index n_{b} of the background (medium), and is represented by the following Formula (26). Further, cosθ is represented by the following Formula (27).
[Formula 25] $o \left(x, y, z\right) = exp \left(-{ik}_{ν}δn\left(x, y, z\right)\frac{Δ z}{cos θ}\right)$ (25) [Formula 26] $δn \left(x, y, z\right) = n \left(x, y, z\right) - {n}_{b}$ (26) [Formula 27] $cos θ = \frac{\sqrt{{n}_{b}^{2} {k}_{V}^{2} - {k}_{x}^{2} - {k}_{y}^{2}}}{{n}_{b} {k}_{ν}}$ (27)

Assuming that the complex amplitude of the light at the position (z = zⱼ₋₁ + (m-1)Δz) of the m-th slice is u(x, y, z), the complex amplitude u(x, y, z + Δz) of the light at the position (z + Δz) after the light reversely propagates inside the m-th slice is represented by the following Formula (28). In the Formula (28), P(kₓ, k_{y} ; Δz) is represented by the following Formula (29). The Formula (28) indicates that the complex amplitude u(x, y, z + Δz) of the light at the position (z + Δz) after propagating the slice of the thickness Δz is obtained by performing Fourier transform on a product of the complex amplitude u(x, y, z) of the light and the phase change o(x, y, z), and performing inverse Fourier transform on a product of a result of the above Fourier transform and P(kₓ, k_{y} ; Δz). P_{Δz} is a function for performing calculation of the light propagation of Δz.
[Formula 28] $\begin{matrix}u \left(x,y,z+Δz\right) = {P}_{Δ z} \left[o\left(x, y, z\right)⋅u\left(x, y, z\right)\right] \\ ≡ {F}^{- 1} \left[P\left({k}_{x}{k}_{y};Δz\right)⋅F\left[o\left(x, y, z\right)⋅u\left(x, y, z\right)\right]\right]\end{matrix}$ (28) [Formula 29] $P \left({k}_{x},{k}_{y};Δz\right) = exp \left(-i\sqrt{{n}_{b}^{2} {k}_{ν}^{2} - {k}_{x}^{2} - {k}_{y}^{2}}Δz\right)$ (29)

The propagation of the light wavefront in each slice of the j-th block is represented by the following Formulas (30) to (32). That is, when the complex amplitude of the light at the first position (z = zⱼ₋₁) of the j-th block is set to u(x, y, zⱼ₋₁), the complex amplitude u(x, y, zⱼ₋₁ + Δz) of the light after propagating the first slice of the j-th block is represented by the following Formula (30). When the complex amplitude of the light after propagating the (m-1)-th slice of the j-th block is set to u(x, y, zⱼ₋₁ + (m-1)Δz), the complex amplitude u(x, y, zⱼ₋₁ + mΔz) of the light after propagating the m-th slice of the j-th block is represented by the following Formula (31). When the complex amplitude of the light after propagating the (M-1)-th slice of the j-th block is set to u(x, y, zⱼ₋₁ + (M-1)Δz), the complex amplitude u(x, y, zⱼ) of the light at the second position (z = zⱼ) after propagating the M-th slice of the j-th block is represented by the following Formula (32).
[Formula 30] $u \left(x,y,{z}_{j - 1}+Δz\right) = {P}_{Δ z} \left[o\left(x, y, {z}_{j - 1}\right)⋅u\left(x, y, {z}_{j - 1}\right)\right]$ (30) [Formula 31] $u \left(x,y,{z}_{j - 1}+mΔz\right) = {P}_{Δ z} \left[o\left(x,y,{z}_{j - 1}+\left(m-1\right)Δz\right)⋅u\left(x,y,{z}_{j - 1}+\left(m-1\right)Δz\right)\right]$ (31) [Formula 32] $u \left(x, y, {z}_{j}\right) = {P}_{Δ z} \left[o\left(x,y,{z}_{j - 1}+\left(M-1\right)Δz\right)⋅u\left(x,y,{z}_{j - 1}+\left(M-1\right)Δz\right)\right]$ (32)

As described above, in the third complex amplitude image generation step S77, the light wavefront at the first position (z = zⱼ₋₁) is sequentially and reversely propagated inside the j-th block for each slice by the numerical calculation in consideration of the refractive index distribution of the j-th block, and thus, the light wavefront at the second position (z = zⱼ) can be obtained.

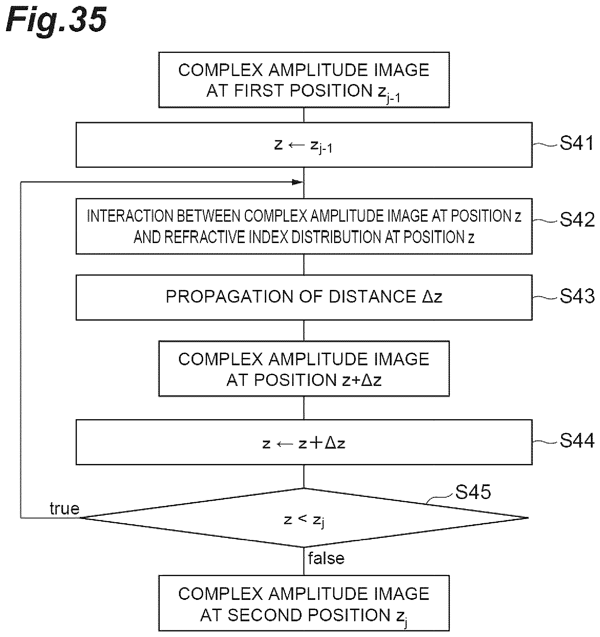

FIG. 35 is a flowchart of the third complex amplitude image generation step S77. In a step S41, the position z is initialized to the first position (z = zⱼ₋₁) of the j-th block. In a step S42, interaction between the complex amplitude u(x, y, z) of the light at the position z and the phase change o(x, y, z) is obtained. In a step S43, the wavefront of the light after the interaction is propagated by the distance Δz, and the complex amplitude u(x, y, z + Δ z) of the light at the position z + Δ z is obtained.

In a step S44, z obtained by adding Δz is set as new z. In a step S45, when it is determined that the position z has not yet reached the second position (z = zⱼ) of the j-th block, the process returns to the step S42 to repeat the steps S42 to S44. In the step S45, when it is determined that the position z reaches the second position (z = zⱼ) of the j-th block, the processing of the third complex amplitude image generation step S77 is ended. The complex amplitude of the light acquired at the end becomes the complex amplitude at the second position (z = zⱼ) of the j-th block.

According to the present embodiment also, it is possible to observe the moving observation object while reducing the influence of the multiple scattered light even when the observation object is the multiple scattering object.

In addition, self-interference may be used in the observation apparatus and the observation method. In this case, which is not according to the claimed subject-matter it is not necessary to provide the interference optical system in the observation apparatus.

The observation apparatus and the observation method are not limited to the embodiments and configuration examples described above, and various modifications are possible.

The observation apparatus of the first aspect according to the above embodiment includes (1) an interference optical system for splitting light output from a light source into object light and reference light, irradiating an observation object moving along a first direction with the object light, and combining and outputting the object light passed through the observation object and the reference light; (2) a frequency shifter provided on an optical path of the object light or the reference light from splitting to combining in the interference optical system, and for setting respective optical frequencies of the object light and the reference light different from each other by a heterodyne frequency; (3) an imaging unit having an imaging plane for receiving the object light and the reference light output from the interference optical system, and for imaging an interference intensity image generated by interference between the object light and the reference light on the imaging plane, and outputting time series data of the interference intensity image; and (4) an analysis unit for performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane coaxially with each other, and the analysis unit generates a complex differential interference image of each of a plurality of positions and a plurality of light irradiation directions when performing focused irradiation of the object light on the observation object by the irradiation optical system based on the time series data of the interference intensity image, and generates a three-dimensional phase image of the observation object based on the complex differential interference image.

The observation apparatus of the second aspect according to the above embodiment includes (1) an interference optical system for splitting light output from a light source into object light and reference light, irradiating an observation object moving along a first direction with the object light, and combining and outputting the object light passed through the observation object and the reference light; (2) an imaging unit having an imaging plane for receiving the object light and the reference light output from the interference optical system, and for imaging an interference intensity image generated by interference between the object light and the reference light on the imaging plane, and outputting time series data of the interference intensity image; and (3) an analysis unit for performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane from directions different from each other, and the analysis unit generates a complex differential interference image of each of a plurality of positions and a plurality of light irradiation directions when performing focused irradiation of the object light on the observation object by the irradiation optical system based on the time series data of the interference intensity image, and generates a three-dimensional phase image of the observation object based on the complex differential interference image.

In the above observation apparatus of the first or second aspect, the analysis unit may include (a) an interference intensity image acquisition unit for acquiring the time series data of the interference intensity image from the imaging unit; (b) a first complex amplitude image generation unit for generating, for each of the plurality of light irradiation directions, a complex amplitude image based on the time series data of the interference intensity image; (c) a second complex amplitude image generation unit for generating, for each of the plurality of light irradiation directions, a complex amplitude image at each of the plurality of positions based on the complex amplitude image generated by the first complex amplitude image generation unit; (d) a two-dimensional phase image generation unit for generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions; and (e) a three-dimensional phase image generation unit for generating the three-dimensional phase image based on the two-dimensional phase image at each of the plurality of positions.

In the above observation apparatus of the first or second aspect, the analysis unit may include (a) an interference intensity image acquisition unit for acquiring the time series data of the interference intensity image from the imaging unit; (b) a first complex amplitude image generation unit for generating, for each of the plurality of light irradiation directions, a complex amplitude image based on the time series data of the interference intensity image; (c) a second complex amplitude image generation unit for generating, for each of the plurality of light irradiation directions, a complex amplitude image at each of the plurality of positions based on the complex amplitude image generated by the first complex amplitude image generation unit; (d) a two-dimensional phase image generation unit for dividing, for each of the plurality of positions, the complex amplitude image of each of the plurality of light irradiation directions into a plurality of batches, correcting a phase of the complex amplitude image included in the batch based on the light irradiation direction for each of the plurality of batches, and then generating a complex amplitude summation image representing a summation of the complex amplitude images after correction, generating the complex differential interference image of each of the plurality of batches based on the complex amplitude summation image of each of the plurality of batches, and generating a two-dimensional phase image based on the complex differential interference image of each of the plurality of batches; and (e) a three-dimensional phase image generation unit for generating the three-dimensional phase image based on the two-dimensional phase image at each of the plurality of positions.

In the above observation apparatus of the first or second aspect, the analysis unit may include (a) an interference intensity image acquisition unit for acquiring the time series data of the interference intensity image from the imaging unit; (b) a first complex amplitude image generation unit for generating, for each of the plurality of light irradiation directions, a complex amplitude image based on the time series data of the interference intensity image; (c) a second complex amplitude image generation unit for generating, for each of the plurality of light irradiation directions, a complex amplitude image at each of the plurality of positions based on the complex amplitude image; (d) a phase conjugate operation unit for performing, before, during, or after a processing step by the second complex amplitude image generation unit, a phase conjugate operation on the complex amplitude image of each of the plurality of light irradiation directions to generate a complex amplitude image of each of the plurality of light irradiation directions when a relationship between light irradiation and imaging for the observation object is reversed; (e) a two-dimensional phase image generation unit for generating, for each of the plurality of positions, the complex differential interference image of each of the plurality of light irradiation directions based on the complex amplitude image of each of the plurality of light irradiation directions generated by the second complex amplitude image generation unit or the phase conjugate operation unit, and generating a two-dimensional phase image based on the complex differential interference image of each of the plurality of light irradiation directions; and (f) a three-dimensional phase image generation unit for generating the three-dimensional phase image based on the two-dimensional phase image at each of the plurality of positions, and when a phase image generated based on the complex amplitude image before performing the operation by the phase conjugate operation unit is set as a first phase image, and a phase image generated based on the complex amplitude image obtained by performing the operation by the phase conjugate operation unit is set as a second phase image, out of the plurality of positions, the two-dimensional phase image generation unit may generate the two-dimensional phase image mainly based on the first phase image at a position relatively close to the imaging unit, and may generate the two-dimensional phase image mainly based on the second phase image at a position relatively far from the imaging unit.

In the above observation apparatus of the first or second aspect, the analysis unit may further include a refractive index distribution calculation unit for obtaining a three-dimensional refractive index distribution of the observation object based on the three-dimensional phase image.

In the above observation apparatus of the first or second aspect, the analysis unit may include (a) an interference intensity image acquisition unit for acquiring the time series data of the interference intensity image from the imaging unit; (b) a first complex amplitude image generation unit for generating, for each of the plurality of light irradiation directions, a complex amplitude image based on the time series data of the interference intensity image; (c) a second complex amplitude image generation unit for generating, for each of the plurality of light irradiation directions, a complex amplitude image at each of the plurality of positions between a first position and a second position based on a complex amplitude image at the first position with respect to a distance from the imaging unit along a light propagation path; (d) a two-dimensional phase image generation unit for generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions; (e) a three-dimensional phase image generation unit for generating the three-dimensional phase image between the first position and the second position based on the two-dimensional phase image at each of the plurality of positions; (f) a refractive index distribution calculation unit for obtaining a three-dimensional refractive index distribution of the observation object between the first position and the second position based on the three-dimensional phase image; and (g) a third complex amplitude image generation unit for generating, for each of the plurality of light irradiation directions, a complex amplitude image at the second position based on the complex amplitude image at the first position and the three-dimensional refractive index distribution, and based on the complex amplitude image generated by the first complex amplitude image generation unit, respective processing steps of the second complex amplitude image generation unit, the two-dimensional phase image generation unit, the three-dimensional phase image generation unit, the refractive index distribution calculation unit, and the third complex amplitude image generation unit may be sequentially performed.

In the above observation apparatus, the two-dimensional phase image generation unit may generate the two-dimensional phase image based on a summation of the complex differential interference images of the plurality of light irradiation directions.

The observation method of the first aspect according to the above embodiment includes (1) an interference step of causing object light and reference light to interfere with each other, by using an interference optical system for splitting light output from a light source into the object light and the reference light, irradiating an observation object moving along a first direction with the object light, and combining and outputting the object light passed through the observation object and the reference light; (2) a modulation step of setting respective optical frequencies of the object light and the reference light different from each other by a heterodyne frequency, by using a frequency shifter provided on an optical path of the object light or the reference light from splitting to combining in the interference optical system; (3) an imaging step of imaging an interference intensity image generated by interference between the object light and the reference light on an imaging plane, and outputting time series data of the interference intensity image, by using an imaging unit having the imaging plane for receiving the object light and the reference light output from the interference optical system; and (4) an analysis step of performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane coaxially with each other, and the analysis step includes generating a complex differential interference image of each of a plurality of positions and a plurality of light irradiation directions when performing focused irradiation of the object light on the observation object by the irradiation optical system based on the time series data of the interference intensity image, and generating a three-dimensional phase image of the observation object based on the complex differential interference image.

The observation method of the second aspect according to the above embodiment includes (1) an interference step of causing object light and reference light to interfere with each other, by using an interference optical system for splitting light output from a light source into the object light and the reference light, irradiating an observation object moving along a first direction with the object light, and combining and outputting the object light passed through the observation object and the reference light; (2) an imaging step of imaging an interference intensity image generated by interference between the object light and the reference light on an imaging plane, and outputting time series data of the interference intensity image, by using an imaging unit having the imaging plane for receiving the object light and the reference light output from the interference optical system; and (3) an analysis step of performing analysis based on the time series data of the interference intensity image, and the interference optical system includes an irradiation optical system for, when the observation object is irradiated with the object light, focusing the object light and irradiating a line-shaped region extending in a second direction perpendicular to the first direction in the observation object with the object light; and an imaging optical system for, when the object light passed through the observation object is guided to the imaging plane, setting a positional relationship of Fourier transform between the observation object and the imaging plane in the first direction, and setting a positional relationship conjugate to each other between the observation object and the imaging plane in the second direction, and the object light and the reference light are incident on the imaging plane from directions different from each other, and the analysis step includes generating a complex differential interference image of each of a plurality of positions and a plurality of light irradiation directions when performing focused irradiation of the object light on the observation object by the irradiation optical system based on the time series data of the interference intensity image, and generating a three-dimensional phase image of the observation object based on the complex differential interference image.

In the above observation method of the first or second aspect, the analysis step may include (a) an interference intensity image acquisition step of acquiring the time series data of the interference intensity image from the imaging unit; (b) a first complex amplitude image generation step of generating, for each of the plurality of light irradiation directions, a complex amplitude image based on the time series data of the interference intensity image; (c) a second complex amplitude image generation step of generating, for each of the plurality of light irradiation directions, a complex amplitude image at each of the plurality of positions based on the complex amplitude image generated by the first complex amplitude image generation step; (d) a two-dimensional phase image generation step of generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions; and (e) a three-dimensional phase image generation step of generating the three-dimensional phase image based on the two-dimensional phase image at each of the plurality of positions.

In the above observation method of the first or second aspect, the analysis step may include (a) an interference intensity image acquisition step of acquiring the time series data of the interference intensity image from the imaging unit; (b) a first complex amplitude image generation step of generating, for each of the plurality of light irradiation directions, a complex amplitude image based on the time series data of the interference intensity image; (c) a second complex amplitude image generation step of generating, for each of the plurality of light irradiation directions, a complex amplitude image at each of the plurality of positions based on the complex amplitude image generated by the first complex amplitude image generation step; (d) a two-dimensional phase image generation step of dividing, for each of the plurality of positions, the complex amplitude image of each of the plurality of light irradiation directions into a plurality of batches, correcting a phase of the complex amplitude image included in the batch based on the light irradiation direction for each of the plurality of batches, and then generating a complex amplitude summation image representing a summation of the complex amplitude images after correction, generating the complex differential interference image of each of the plurality of batches based on the complex amplitude summation image of each of the plurality of batches, and generating a two-dimensional phase image based on the complex differential interference image of each of the plurality of batches; and (e) a three-dimensional phase image generation step of generating the three-dimensional phase image based on the two-dimensional phase image at each of the plurality of positions.

In the above observation method of the first or second aspect, the analysis step may include (a) an interference intensity image acquisition step of acquiring the time series data of the interference intensity image from the imaging unit; (b) a first complex amplitude image generation step of generating, for each of the plurality of light irradiation directions, a complex amplitude image based on the time series data of the interference intensity image; (c) a second complex amplitude image generation step of generating, for each of the plurality of light irradiation directions, a complex amplitude image at each of the plurality of positions based on the complex amplitude image; (d) a phase conjugate operation step of performing, before, during, or after a processing step by the second complex amplitude image generation step, a phase conjugate operation on the complex amplitude image of each of the plurality of light irradiation directions to generate a complex amplitude image of each of the plurality of light irradiation directions when a relationship between light irradiation and imaging for the observation object is reversed; (e) a two-dimensional phase image generation step of generating, for each of the plurality of positions, the complex differential interference image of each of the plurality of light irradiation directions based on the complex amplitude image of each of the plurality of light irradiation directions generated by the second complex amplitude image generation step or the phase conjugate operation step, and generating a two-dimensional phase image based on the complex differential interference image of each of the plurality of light irradiation directions; and (f) a three-dimensional phase image generation step of generating the three-dimensional phase image based on the two-dimensional phase image at each of the plurality of positions, and when a phase image generated based on the complex amplitude image before performing the operation by the phase conjugate operation step is set as a first phase image, and a phase image generated based on the complex amplitude image obtained by performing the operation by the phase conjugate operation step is set as a second phase image, out of the plurality of positions, the two-dimensional phase image generation step may include generating the two-dimensional phase image mainly based on the first phase image at a position relatively close to the imaging unit, and generating the two-dimensional phase image mainly based on the second phase image at a position relatively far from the imaging unit.

In the above observation method of the first or second aspect, the analysis step may further include a refractive index distribution calculation step of obtaining a three-dimensional refractive index distribution of the observation object based on the three-dimensional phase image.

In the above observation method of the first or second aspect, the analysis step may include (a) an interference intensity image acquisition step of acquiring the time series data of the interference intensity image from the imaging unit; (b) a first complex amplitude image generation step of generating, for each of the plurality of light irradiation directions, a complex amplitude image based on the time series data of the interference intensity image; (c) a second complex amplitude image generation step of generating, for each of the plurality of light irradiation directions, a complex amplitude image at each of the plurality of positions between a first position and a second position based on a complex amplitude image at the first position with respect to a distance from the imaging unit along a light propagation path; (d) a two-dimensional phase image generation step of generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions; (e) a three-dimensional phase image generation step of generating the three-dimensional phase image between the first position and the second position based on the two-dimensional phase image at each of the plurality of positions; (f) a refractive index distribution calculation step of obtaining a three-dimensional refractive index distribution of the observation object between the first position and the second position based on the three-dimensional phase image; and (g) a third complex amplitude image generation step of generating, for each of the plurality of light irradiation directions, a complex amplitude image at the second position based on the complex amplitude image at the first position and the three-dimensional refractive index distribution, and based on the complex amplitude image generated by the first complex amplitude image generation step, respective processing steps of the second complex amplitude image generation step, the two-dimensional phase image generation step, the three-dimensional phase image generation step, the refractive index distribution calculation step, and the third complex amplitude image generation step may be sequentially performed.

In the above observation method, the two-dimensional phase image generation step may include generating the two-dimensional phase image based on a summation of the complex differential interference images of the plurality of light irradiation directions.

The program according to the above embodiment is a program for causing a computer to execute the steps of the observation method of the above configuration.

The recording medium according to the above embodiment is a computer readable recording medium recording the program of the above configuration.

### Industrial Applicability

The embodiments can be used as an observation apparatus and an observation method capable of observing a moving observation object while reducing influence of multiple scattered light even when the observation object is a multiple scattering object.

The observation apparatus or the observation method of the above embodiments can reduce the influence of the multiple scattered light and observe the observation object even when the moving observation object is the multiple scattering object, and can be applied to, for example, a flow cytometer. Even when the observation object flowing along a flow path in the flow cytometer is the three-dimensional cell tissue such as the spheroid or the organoid, the three-dimensional cell tissue can be observed while reducing the influence of the multiple scattered light.

When the observation apparatus of the above embodiment and a three-dimensional culture analyzer are used in combination in the flow cytometer, a three-dimensional refractive index distribution of each three-dimensional cell tissue flowing along the flow path can be obtained by the observation apparatus, and further, the type can be determined by the three-dimensional culture analyzer based on the three-dimensional refractive index distribution. Thus, the number and the ratio of the three-dimensional cell tissues for each type can be obtained. Further, when a branch flow path is provided, separation, selection, and the like of the three-dimensional tissue can be performed by changing a direction in which the three-dimensional cell tissue flows for each type.

In addition, in the case in which gyratory culture (forming the three-dimensional culture while flowing cells along the flow path such as the flow cytometer) is performed, the observation apparatus or the observation method of the above embodiment can be used to observe the state in which the three-dimensional culture is gradually formed.

### Reference Signs List

1A - 1F - observation apparatus, 10 - light source, 21 - beam splitter, 22, 23 - mirror, 24 - cylindrical lens, 25 - lens, 26 - cylindrical lens, 27 - beam splitter, 28 - lens, 30 - frequency shifter, 40 - imaging unit, 50 - analysis unit, 51 - interference intensity image acquisition unit, 52 - first complex amplitude image generation unit, 53 - second complex amplitude image generation unit, 54 - two-dimensional phase image generation unit, 55 - three-dimensional phase image generation unit, 56 - refractive index distribution calculation unit, 57 - display unit, 58 - storage unit, 60 - analysis unit, 61 - interference intensity image acquisition unit, 62 - first complex amplitude image generation unit, 63 - second complex amplitude image generation unit, 64 - phase conjugate operation unit, 65 - two-dimensional phase image generation unit, 66 - three-dimensional phase image generation unit, 67 - refractive index distribution calculation unit, 68 - display unit, 69 - storage unit, 70 - analysis unit, 71 - interference intensity image acquisition unit, 72 - first complex amplitude image generation unit, 73 - second complex amplitude image generation unit, 74 - two-dimensional phase image generation unit, 75 - three-dimensional phase image generation unit, 76 - refractive index distribution calculation unit, 77 - third complex amplitude image generation unit, 78 - display unit, 79 - storage unit.

## Claims

1. An observation apparatus (1A) comprising:
an interference optical system for splitting light output from a light source into object light and reference light, irradiating an observation object (S) moving along a first direction with the object light, and combining and outputting the object light passed through the observation object (S) and the reference light;
a frequency shifter (30) provided on an optical path of the object light or the reference light from splitting to combining in the interference optical system, and for setting respective optical frequencies of the object light and the reference light different from each other by a heterodyne frequency;
an imaging unit (40) having an imaging plane for receiving the object light and the reference light output from the interference optical system, and for imaging an interference intensity image generated by interference between the object light and the reference light on the imaging plane, and outputting time series data of the interference intensity image; and
an analysis unit (50) for performing analysis based on the time series data of the interference intensity image, wherein
the interference optical system includes:
an irradiation optical system (24) for, when the observation object (S) is irradiated with the object light, focusing the object light and irradiating a line-shaped region extending in a second direction perpendicular to the first direction in the observation object (S) with the object light; and
an imaging optical system (28) for, when the object light passed through the observation object (S) is guided to the imaging plane, setting a positional relationship of Fourier transform between the observation object (S) and the imaging plane in the first direction, and setting a positional relationship conjugate to each other between the observation object (S) and the imaging plane in the second direction, and wherein
the object light and the reference light are incident on the imaging plane coaxially with each other, and
the analysis unit (50) generates a complex differential interference image of each of a plurality of positions and a plurality of light irradiation directions when performing focused irradiation of the object light on the observation object (S) by the irradiation optical system (24) based on the time series data of the interference intensity image, and generates a three-dimensional phase image of the observation object (S) based on the complex differential interference image.

2. An observation apparatus (1B) comprising:
an interference optical system for splitting light output from a light source into object light and reference light, irradiating an observation object (S) moving along a first direction with the object light, and combining and outputting the object light passed through the observation object (S) and the reference light;
an imaging unit (40) having an imaging plane for receiving the object light and the reference light output from the interference optical system, and for imaging an interference intensity image generated by interference between the object light and the reference light on the imaging plane, and outputting time series data of the interference intensity image; and
an analysis unit (50) for performing analysis based on the time series data of the interference intensity image, wherein
the interference optical system includes:
an irradiation optical system (24) for, when the observation object (S) is irradiated with the object light, focusing the object light and irradiating a line-shaped region extending in a second direction perpendicular to the first direction in the observation object (S) with the object light; and
an imaging optical system (28) for, when the object light passed through the observation object (S) is guided to the imaging plane, setting a positional relationship of Fourier transform between the observation object and the imaging plane in the first direction, and setting a positional relationship conjugate to each other between the observation object and the imaging plane in the second direction, and wherein
the object light and the reference light are incident on the imaging plane from directions different from each other, and
the analysis unit (50) generates a complex differential interference image of each of a plurality of positions and a plurality of light irradiation directions when performing focused irradiation of the object light on the observation object (S) by the irradiation optical system (24) based on the time series data of the interference intensity image, and generates a three-dimensional phase image of the observation object (S) based on the complex differential interference image.

3. The observation apparatus (1) according to Claim 1 or 2, wherein the analysis unit (50) includes:
an interference intensity image acquisition unit for acquiring the time series data of the interference intensity image from the imaging unit;
a first complex amplitude image generation unit for generating, for each of the plurality of light irradiation directions, a complex amplitude image based on the time series data of the interference intensity image;
a second complex amplitude image generation unit for generating, for each of the plurality of light irradiation directions, a complex amplitude image at each of the plurality of positions based on the complex amplitude image generated by the first complex amplitude image generation unit;
a two-dimensional phase image generation unit for generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions; and
a three-dimensional phase image generation unit for generating the three-dimensional phase image based on the two-dimensional phase image at each of the plurality of positions.

4. The observation apparatus (1) according to Claim 1 or 2, wherein the analysis unit (50) includes:
an interference intensity image acquisition unit for acquiring the time series data of the interference intensity image from the imaging unit;
a first complex amplitude image generation unit for generating, for each of the plurality of light irradiation directions, a complex amplitude image based on the time series data of the interference intensity image;
a second complex amplitude image generation unit for generating, for each of the plurality of light irradiation directions, a complex amplitude image at each of the plurality of positions based on the complex amplitude image generated by the first complex amplitude image generation unit;
a two-dimensional phase image generation unit for dividing, for each of the plurality of positions, the complex amplitude image of each of the plurality of light irradiation directions into a plurality of batches, correcting a phase of the complex amplitude image included in the batch based on the light irradiation direction for each of the plurality of batches, and then generating a complex amplitude summation image representing a summation of the complex amplitude images after correction, generating the complex differential interference image of each of the plurality of batches based on the complex amplitude summation image of each of the plurality of batches, and generating a two-dimensional phase image based on the complex differential interference image of each of the plurality of batches; and
a three-dimensional phase image generation unit for generating the three-dimensional phase image based on the two-dimensional phase image at each of the plurality of positions.

5. The observation apparatus (1) according to Claim 1 or 2, wherein the analysis unit (50) includes:
an interference intensity image acquisition unit for acquiring the time series data of the interference intensity image from the imaging unit;
a first complex amplitude image generation unit for generating, for each of the plurality of light irradiation directions, a complex amplitude image based on the time series data of the interference intensity image;
a second complex amplitude image generation unit for generating, for each of the plurality of light irradiation directions, a complex amplitude image at each of the plurality of positions based on the complex amplitude image;
a phase conjugate operation unit for performing, before, during, or after a processing step by the second complex amplitude image generation unit, a phase conjugate operation on the complex amplitude image of each of the plurality of light irradiation directions to generate a complex amplitude image of each of the plurality of light irradiation directions when a relationship between light irradiation and imaging for the observation object (S) is reversed;
a two-dimensional phase image generation unit for generating, for each of the plurality of positions, the complex differential interference image of each of the plurality of light irradiation directions based on the complex amplitude image of each of the plurality of light irradiation directions generated by the second complex amplitude image generation unit or the phase conjugate operation unit, and generating a two-dimensional phase image based on the complex differential interference image of each of the plurality of light irradiation directions; and
a three-dimensional phase image generation unit for generating the three-dimensional phase image based on the two-dimensional phase image at each of the plurality of positions, wherein
when a phase image generated based on the complex amplitude image before performing the operation by the phase conjugate operation unit is set as a first phase image, and a phase image generated based on the complex amplitude image obtained by performing the operation by the phase conjugate operation unit is set as a second phase image, out of the plurality of positions, the two-dimensional phase image generation unit generates the two-dimensional phase image mainly based on the first phase image at a position relatively close to the imaging unit, and generates the two-dimensional phase image mainly based on the second phase image at a position relatively far from the imaging unit.

6. The observation apparatus (1) according to any one of Claims 3 to 5, wherein the analysis unit (50) further includes a refractive index distribution calculation unit for obtaining a three-dimensional refractive index distribution of the observation object (S) based on the three-dimensional phase image.

7. The observation apparatus (1) according to Claim 1 or 2, wherein the analysis unit (50) includes:
an interference intensity image acquisition unit for acquiring the time series data of the interference intensity image from the imaging unit;
a first complex amplitude image generation unit for generating, for each of the plurality of light irradiation directions, a complex amplitude image based on the time series data of the interference intensity image;
a second complex amplitude image generation unit for generating, for each of the plurality of light irradiation directions, a complex amplitude image at each of the plurality of positions between a first position and a second position based on a complex amplitude image at the first position with respect to a distance from the imaging unit (40) along a light propagation path;
a two-dimensional phase image generation unit for generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions;
a three-dimensional phase image generation unit for generating the three-dimensional phase image between the first position and the second position based on the two-dimensional phase image at each of the plurality of positions;
a refractive index distribution calculation unit for obtaining a three-dimensional refractive index distribution of the observation object (S) between the first position and the second position based on the three-dimensional phase image; and
a third complex amplitude image generation unit for generating, for each of the plurality of light irradiation directions, a complex amplitude image at the second position based on the complex amplitude image at the first position and the three-dimensional refractive index distribution, wherein
based on the complex amplitude image generated by the first complex amplitude image generation unit, respective processing steps of the second complex amplitude image generation unit, the two-dimensional phase image generation unit, the three-dimensional phase image generation unit, the refractive index distribution calculation unit, and the third complex amplitude image generation unit are sequentially performed.

8. The observation apparatus (1) according to any one of Claims 3 to 7, wherein the two-dimensional phase image generation unit generates the two-dimensional phase image based on a summation of the complex differential interference images of the plurality of light irradiation directions.

9. An observation method comprising:
an interference step of causing object light and reference light to interfere with each other, by using an interference optical system for splitting light output from a light source into the object light and the reference light, irradiating an observation object (S) moving along a first direction with the object light, and combining and outputting the object light passed through the observation object (S) and the reference light;
a modulation step of setting respective optical frequencies of the object light and the reference light different from each other by a heterodyne frequency, by using a frequency shifter (30) provided on an optical path of the object light or the reference light from splitting to combining in the interference optical system;
an imaging step of imaging an interference intensity image generated by interference between the object light and the reference light on an imaging plane, and outputting time series data of the interference intensity image, by using an imaging unit (40) having the imaging plane for receiving the object light and the reference light output from the interference optical system; and
an analysis step of performing analysis based on the time series data of the interference intensity image, wherein
the interference optical system includes:
an irradiation optical system (24) for, when the observation object (S) is irradiated with the object light, focusing the object light and irradiating a line-shaped region extending in a second direction perpendicular to the first direction in the observation object with the object light; and
an imaging optical system (28) for, when the object light passed through the observation object (S) is guided to the imaging plane, setting a positional relationship of Fourier transform between the observation object and the imaging plane in the first direction, and setting a positional relationship conjugate to each other between the observation object and the imaging plane in the second direction, and wherein
the object light and the reference light are incident on the imaging plane coaxially with each other, and
the analysis step includes generating a complex differential interference image of each of a plurality of positions and a plurality of light irradiation directions when performing focused irradiation of the object light on the observation object (S) by the irradiation optical system (24) based on the time series data of the interference intensity image, and generating a three-dimensional phase image of the observation object (S) based on the complex differential interference image.

10. An observation method comprising:
an interference step of causing object light and reference light to interfere with each other, by using an interference optical system for splitting light output from a light source into the object light and the reference light, irradiating an observation object (S) moving along a first direction with the object light, and combining and outputting the object light passed through the observation object (S) and the reference light;
an imaging step of imaging an interference intensity image generated by interference between the object light and the reference light on an imaging plane, and outputting time series data of the interference intensity image, by using an imaging unit (40) having the imaging plane for receiving the object light and the reference light output from the interference optical system; and
an analysis step of performing analysis based on the time series data of the interference intensity image, wherein
the interference optical system includes:
an irradiation optical system (24) for, when the observation object (S) is irradiated with the object light, focusing the object light and irradiating a line-shaped region extending in a second direction perpendicular to the first direction in the observation object (S) with the object light; and
an imaging optical system (28) for, when the object light passed through the observation object (S) is guided to the imaging plane, setting a positional relationship of Fourier transform between the observation object and the imaging plane in the first direction, and setting a positional relationship conjugate to each other between the observation object and the imaging plane in the second direction, and wherein
the object light and the reference light are incident on the imaging plane from directions different from each other, and
the analysis step includes generating a complex differential interference image of each of a plurality of positions and a plurality of light irradiation directions when performing focused irradiation of the object light on the observation object (S) by the irradiation optical system (24) based on the time series data of the interference intensity image, and generating a three-dimensional phase image of the observation object (S) based on the complex differential interference image.

11. The observation method according to Claim 9 or 10, wherein the analysis step includes:
an interference intensity image acquisition step of acquiring the time series data of the interference intensity image from the imaging unit;
a first complex amplitude image generation step of generating, for each of the plurality of light irradiation directions, a complex amplitude image based on the time series data of the interference intensity image;
a second complex amplitude image generation step of generating, for each of the plurality of light irradiation directions, a complex amplitude image at each of the plurality of positions based on the complex amplitude image generated by the first complex amplitude image generation step;
a two-dimensional phase image generation step of generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions; and
a three-dimensional phase image generation step of generating the three-dimensional phase image based on the two-dimensional phase image at each of the plurality of positions.

12. The observation method according to Claim 9 or 10, wherein the analysis step includes:
an interference intensity image acquisition step of acquiring the time series data of the interference intensity image from the imaging unit;
a first complex amplitude image generation step of generating, for each of the plurality of light irradiation directions, a complex amplitude image based on the time series data of the interference intensity image;
a second complex amplitude image generation step of generating, for each of the plurality of light irradiation directions, a complex amplitude image at each of the plurality of positions based on the complex amplitude image generated by the first complex amplitude image generation step;
a two-dimensional phase image generation step of dividing, for each of the plurality of positions, the complex amplitude image of each of the plurality of light irradiation directions into a plurality of batches, correcting a phase of the complex amplitude image included in the batch based on the light irradiation direction for each of the plurality of batches, and then generating a complex amplitude summation image representing a summation of the complex amplitude images after correction, generating the complex differential interference image of each of the plurality of batches based on the complex amplitude summation image of each of the plurality of batches, and generating a two-dimensional phase image based on the complex differential interference image of each of the plurality of batches; and
a three-dimensional phase image generation step of generating the three-dimensional phase image based on the two-dimensional phase image at each of the plurality of positions.

13. The observation method according to Claim 9 or 10, wherein the analysis step includes:
an interference intensity image acquisition step of acquiring the time series data of the interference intensity image from the imaging unit;
a first complex amplitude image generation step of generating, for each of the plurality of light irradiation directions, a complex amplitude image based on the time series data of the interference intensity image;
a second complex amplitude image generation step of generating, for each of the plurality of light irradiation directions, a complex amplitude image at each of the plurality of positions based on the complex amplitude image;
a phase conjugate operation step of performing, before, during, or after a processing step by the second complex amplitude image generation step, a phase conjugate operation on the complex amplitude image of each of the plurality of light irradiation directions to generate a complex amplitude image of each of the plurality of light irradiation directions when a relationship between light irradiation and imaging for the observation object (S) is reversed;
a two-dimensional phase image generation step of generating, for each of the plurality of positions, the complex differential interference image of each of the plurality of light irradiation directions based on the complex amplitude image of each of the plurality of light irradiation directions generated by the second complex amplitude image generation step or the phase conjugate operation step, and generating a two-dimensional phase image based on the complex differential interference image of each of the plurality of light irradiation directions; and
a three-dimensional phase image generation step of generating the three-dimensional phase image based on the two-dimensional phase image at each of the plurality of positions, wherein
when a phase image generated based on the complex amplitude image before performing the operation by the phase conjugate operation step is set as a first phase image, and a phase image generated based on the complex amplitude image obtained by performing the operation by the phase conjugate operation step is set as a second phase image, out of the plurality of positions, the two-dimensional phase image generation step includes generating the two-dimensional phase image mainly based on the first phase image at a position relatively close to the imaging unit, and generating the two-dimensional phase image mainly based on the second phase image at a position relatively far from the imaging unit.

14. The observation method according to any one of Claims 11 to 13, wherein the analysis step further includes a refractive index distribution calculation step of obtaining a three-dimensional refractive index distribution of the observation object (S) based on the three-dimensional phase image.

15. The observation method according to Claim 9 or 10, wherein the analysis step includes:
an interference intensity image acquisition step of acquiring the time series data of the interference intensity image from the imaging unit;
a first complex amplitude image generation step of generating, for each of the plurality of light irradiation directions, a complex amplitude image based on the time series data of the interference intensity image;
a second complex amplitude image generation step of generating, for each of the plurality of light irradiation directions, a complex amplitude image at each of the plurality of positions between a first position and a second position based on a complex amplitude image at the first position with respect to a distance from the imaging unit (40) along a light propagation path;
a two-dimensional phase image generation step of generating, for each of the plurality of positions, the complex differential interference image of each of the plurality of light irradiation directions based on the complex amplitude image of each of the plurality of light irradiation directions, and generating a two-dimensional phase image based on the complex differential interference image of each of the plurality of light irradiation directions;
a three-dimensional phase image generation step of generating the three-dimensional phase image between the first position and the second position based on the two-dimensional phase image at each of the plurality of positions;
a refractive index distribution calculation step of obtaining a three-dimensional refractive index distribution of the observation object (S) between the first position and the second position based on the three-dimensional phase image; and
a third complex amplitude image generation step of generating, for each of the plurality of light irradiation directions, a complex amplitude image at the second position based on the complex amplitude image at the first position and the three-dimensional refractive index distribution, wherein
based on the complex amplitude image generated by the first complex amplitude image generation step, respective processing steps of the second complex amplitude image generation step, the two-dimensional phase image generation step, the three-dimensional phase image generation step, the refractive index distribution calculation step, and the third complex amplitude image generation step are sequentially performed.

16. The observation method according to any one of Claims 11 to 15, wherein the two-dimensional phase image generation step includes generating the two-dimensional phase image based on a summation of the complex differential interference images of the plurality of light irradiation directions.

17. A program for causing the observation apparatus (1A) of claim 1 to execute the steps of the observation method according to claim 9 or any one of its dependent claims, or for causing the observation apparatus (1B) of claim 2 to execute the steps of the observation method according to claim 10 or any one of its dependent claims.

18. A computer readable recording medium recording the program according to Claim 17.

## Patentansprüche

1. Beobachtungseinrichtung (1A), umfassend:
ein interferenzoptisches System zum Aufteilen von von einer Lichtquelle ausgegebenem Licht in Objektlicht und Referenzlicht, zum Bestrahlen eines sich entlang einer ersten Richtung bewegenden Beobachtungsobjekts (S) mit dem Objektlicht und zum Kombinieren und Ausgeben des durch das Beobachtungsobjekt (S) hindurchgetretenen Objektlichts und des Referenzlichts;
einen Frequenzverschieber (30), der auf einem optischen Weg des Objektlichts oder des Referenzlichts vom Aufteilen bis zum Kombinieren in dem interferenzoptischen System bereitgestellt ist, und zum Einstellen jeweiliger optischer Frequenzen des Objektlichts und des Referenzlichts, die sich um eine Heterodynfrequenz voneinander unterscheiden;
eine Bildaufnahmeeinheit (40), die eine Bildaufnahmeebene zum Empfangen des von dem interferenzoptischen System ausgegebenen Objektlichts und Referenzlichts aufweist, und zum Abbilden eines durch Interferenz zwischen dem Objektlicht und dem Referenzlicht erzeugten Interferenzintensitätsbildes auf der Bildaufnahmeebene und zum Ausgeben von Zeitreihendaten des Interferenzintensitätsbildes; und
eine Analyseeinheit (50) zum Durchführen einer Analyse basierend auf den Zeitreihendaten des Interferenzintensitätsbildes, wobei
das interferenzoptische System Folgendes einschließt:
eine Bestrahlungsoptik (24), wenn das Beobachtungsobjekt (S) mit dem Objektlicht bestrahlt wird, zum Fokussieren des Objektlichts und Bestrahlen eines sich in einer zweiten Richtung senkrecht zu der ersten Richtung erstreckenden linienförmigen Bereichs in dem Beobachtungsobjekt (S) mit dem Objektlicht; und
eine Abbildungsoptik (28), wenn das durch das Beobachtungsobjekt (S) hindurchgetretene Objektlicht zu der Bildaufnahmeebene geleitet wird, zum Einstellen einer Fourier-Transformationsbeziehung zwischen dem Beobachtungsobjekt (S) und der Bildaufnahmeebene in der ersten Richtung und Einstellen einer zueinander konjugierten Beziehung zwischen dem Beobachtungsobjekt (S) und der Bildaufnahmeebene in der zweiten Richtung, und wobei
das Objektlicht und das Referenzlicht koaxial zueinander auf die Bildaufnahmeebene einfallend sind, und
die Analyseeinheit (50) für jede von einer Vielzahl von Positionen und einer Vielzahl von Bestrahlungsrichtungen ein komplexes Differentialinterferenzbild erzeugt, wenn basierend auf den Zeitreihendaten des Interferenzintensitätsbildes eine fokussierte Bestrahlung des Objektlichts auf das Beobachtungsobjekt (S) durch die Bestrahlungsoptik (24) durchgeführt wird, und ein dreidimensionales Phasenbild des Beobachtungsobjekts (S) basierend auf dem komplexen Differentialinterferenzbild erzeugt.

2. Beobachtungseinrichtung (1B), umfassend:
ein interferenzoptisches System zum Aufteilen von von einer Lichtquelle ausgegebenem Licht in Objektlicht und Referenzlicht, zum Bestrahlen eines sich entlang einer ersten Richtung bewegenden Beobachtungsobjekts (S) mit dem Objektlicht und zum Kombinieren und Ausgeben des durch das Beobachtungsobjekt (S) hindurchgetretenen Objektlichts und des Referenzlichts;
eine Bildaufnahmeeinheit (40), die eine Bildaufnahmeebene zum Empfangen des von dem interferenzoptischen System ausgegebenen Objektlichts und Referenzlichts aufweist, und zum Abbilden eines durch Interferenz zwischen dem Objektlicht und dem Referenzlicht erzeugten Interferenzintensitätsbildes auf der Bildaufnahmeebene und zum Ausgeben von Zeitreihendaten des Interferenzintensitätsbildes; und
eine Analyseeinheit (50) zum Durchführen einer Analyse basierend auf den Zeitreihendaten des Interferenzintensitätsbildes, wobei
das interferenzoptische System Folgendes einschließt:
eine Bestrahlungsoptik (24), wenn das Beobachtungsobjekt (S) mit dem Objektlicht bestrahlt wird, zum Fokussieren des Objektlichts und Bestrahlen eines sich in einer zweiten Richtung senkrecht zu der ersten Richtung erstreckenden linienförmigen Bereichs in dem Beobachtungsobjekt (S) mit dem Objektlicht; und
eine Abbildungsoptik (28), wenn das durch das Beobachtungsobjekt (S) hindurchgetretene Objektlicht zu der Bildaufnahmeebene geleitet wird, zum Einstellen einer Fourier-Transformationsbeziehung zwischen dem Beobachtungsobjekt und der Bildaufnahmeebene in der ersten Richtung und Einstellen einer zueinander konjugierten Beziehung zwischen dem Beobachtungsobjekt und der Bildaufnahmeebene in der zweiten Richtung, und wobei
das Objektlicht und das Referenzlicht aus Richtungen, die voneinander verschieden sind, auf die Bildaufnahmeebene einfallend sind, und
die Analyseeinheit (50) für jede von einer Vielzahl von Positionen und einer Vielzahl von Bestrahlungsrichtungen ein komplexes Differentialinterferenzbild erzeugt, wenn basierend auf den Zeitreihendaten des Interferenzintensitätsbildes eine fokussierte Bestrahlung des Objektlichts auf das Beobachtungsobjekt (S) durch die Bestrahlungsoptik (24) durchgeführt wird, und ein dreidimensionales Phasenbild des Beobachtungsobjekts (S) basierend auf dem komplexen Differentialinterferenzbild erzeugt.

3. Beobachtungseinrichtung (1) nach Anspruch 1 oder 2, wobei die Analyseeinheit (50) Folgendes einschließt:
eine Interferenzintensitätsbild-Erfassungseinheit zum Erfassen der Zeitreihendaten des Interferenzintensitätsbildes von der Bildaufnahmeeinheit;
eine erste Erzeugungseinheit für komplexe Amplitudenbilder zum Erzeugen, für jede der Vielzahl von Bestrahlungsrichtungen, eines komplexen Amplitudenbildes basierend auf den Zeitreihendaten des Interferenzintensitätsbildes;
eine zweite Erzeugungseinheit für komplexe Amplitudenbilder zum Erzeugen, für jede der Vielzahl von Bestrahlungsrichtungen, eines komplexen Amplitudenbildes an jeder der Vielzahl von Positionen basierend auf dem von der ersten Erzeugungseinheit für komplexe Amplitudenbilder erzeugten komplexen Amplitudenbild;
eine Erzeugungseinheit für zweidimensionale Phasenbilder zum Erzeugen, für jede der Vielzahl von Positionen, des komplexen Differentialinterferenzbildes jeder der Vielzahl von Bestrahlungsrichtungen basierend auf dem komplexen Amplitudenbild jeder der Vielzahl von Bestrahlungsrichtungen und zum Erzeugen eines zweidimensionalen Phasenbildes basierend auf dem komplexen Differentialinterferenzbild jeder der Vielzahl von Bestrahlungsrichtungen; und
eine Erzeugungseinheit für dreidimensionale Phasenbilder zum Erzeugen des dreidimensionalen Phasenbildes basierend auf dem zweidimensionalen Phasenbild an jeder der Vielzahl von Positionen.

4. Beobachtungseinrichtung (1) nach Anspruch 1 oder 2, wobei die Analyseeinheit (50) Folgendes einschließt:
eine Interferenzintensitätsbild-Erfassungseinheit zum Erfassen der Zeitreihendaten des Interferenzintensitätsbildes von der Bildaufnahmeeinheit;
eine erste Erzeugungseinheit für komplexe Amplitudenbilder zum Erzeugen, für jede der Vielzahl von Bestrahlungsrichtungen, eines komplexen Amplitudenbildes basierend auf den Zeitreihendaten des Interferenzintensitätsbildes;
eine zweite Erzeugungseinheit für komplexe Amplitudenbilder zum Erzeugen, für jede der Vielzahl von Bestrahlungsrichtungen, eines komplexen Amplitudenbildes an jeder der Vielzahl von Positionen basierend auf dem von der ersten Erzeugungseinheit für komplexe Amplitudenbilder erzeugten komplexen Amplitudenbild;
eine Erzeugungseinheit für zweidimensionale Phasenbilder zum Aufteilen, für jede der Vielzahl von Positionen, des komplexen Amplitudenbildes jeder der Vielzahl von Bestrahlungsrichtungen in eine Vielzahl von Batches, zum Korrigieren einer Phase des in dem Batch eingeschlossenen komplexen Amplitudenbildes basierend auf der Bestrahlungsrichtung für jede der Vielzahl von Batches, und dann zum Erzeugen eines komplexen Amplitudensummationsbildes, das eine Summation der komplexen Amplitudenbilder nach der Korrektur darstellt, zum Erzeugen des komplexen Differentialinterferenzbildes jedes der Vielzahl von Batches basierend auf dem komplexen Amplitudensummationsbild jedes der Vielzahl von Batches und zum Erzeugen eines zweidimensionalen Phasenbildes basierend auf dem komplexen Differentialinterferenzbild jedes der Vielzahl von Batches; und
eine Erzeugungseinheit für dreidimensionale Phasenbilder zum Erzeugen des dreidimensionalen Phasenbildes basierend auf dem zweidimensionalen Phasenbild an jeder der Vielzahl von Positionen.

5. Beobachtungseinrichtung (1) nach Anspruch 1 oder 2, wobei die Analyseeinheit (50) Folgendes einschließt:
eine Interferenzintensitätsbild-Erfassungseinheit zum Erfassen der Zeitreihendaten des Interferenzintensitätsbildes von der Bildaufnahmeeinheit;
eine erste Erzeugungseinheit für komplexe Amplitudenbilder zum Erzeugen, für jede der Vielzahl von Bestrahlungsrichtungen, eines komplexen Amplitudenbildes basierend auf den Zeitreihendaten des Interferenzintensitätsbildes;
eine zweite Erzeugungseinheit für komplexe Amplitudenbilder zum Erzeugen, für jede der Vielzahl von Bestrahlungsrichtungen, eines komplexen Amplitudenbildes an jeder der Vielzahl von Positionen basierend auf dem komplexen Amplitudenbild;
eine Phasenkonjugationsoperationseinheit zum Durchführen, vor, während oder nach einem Verarbeitungsschritt durch die zweite Erzeugungseinheit für komplexe Amplitudenbilder, einer Phasenkonjugationsoperation an dem komplexen Amplitudenbild jeder der Vielzahl von Bestrahlungsrichtungen, um ein komplexes Amplitudenbild jeder der Vielzahl von Bestrahlungsrichtungen zu erzeugen, wenn eine Beziehung zwischen Lichtbestrahlung und Bildaufnahme für das Beobachtungsobjekt (S) umgekehrt wird;
eine Erzeugungseinheit für zweidimensionale Phasenbilder zum Erzeugen, für jede der Vielzahl von Positionen, des komplexen Differentialinterferenzbildes jeder der Vielzahl von Bestrahlungsrichtungen basierend auf dem komplexen Amplitudenbild jeder der Vielzahl von Bestrahlungsrichtungen, das von der zweiten Erzeugungseinheit für komplexe Amplitudenbilder oder der Phasenkonjugationsoperationseinheit erzeugt wird, und zum Erzeugen eines zweidimensionalen Phasenbildes basierend auf dem komplexen Differentialinterferenzbild jeder der Vielzahl von Bestrahlungsrichtungen; und
eine Erzeugungseinheit für dreidimensionale Phasenbilder zum Erzeugen des dreidimensionalen Phasenbildes basierend auf dem zweidimensionalen Phasenbild an jeder der Vielzahl von Positionen, wobei
wenn ein basierend auf dem komplexen Amplitudenbild vor dem Durchführen der Operation durch die Phasenkonjugationsoperationseinheit erzeugtes Phasenbild als erstes Phasenbild eingestellt wird und ein basierend auf dem durch Durchführen der Operation durch die Phasenkonjugationsoperationseinheit erhaltenen komplexen Amplitudenbild erzeugtes Phasenbild als zweites Phasenbild eingestellt wird, aus der Vielzahl von Positionen, die Erzeugungseinheit für zweidimensionale Phasenbilder das zweidimensionale Phasenbild an einer Position relativ nahe zu der Bildaufnahmeeinheit hauptsächlich basierend auf dem ersten Phasenbild erzeugt und das zweidimensionale Phasenbild an einer Position relativ weit von der Bildaufnahmeeinheit entfernt hauptsächlich basierend auf dem zweiten Phasenbild erzeugt.

6. Beobachtungseinrichtung (1) nach einem der Ansprüche 3 bis 5, wobei die Analyseeinheit (50) weiter eine Berechnungseinheit für eine Brechungsindexverteilung zum Erhalten einer dreidimensionalen Brechungsindexverteilung des Beobachtungsobjekts (S) basierend auf dem dreidimensionalen Phasenbild einschließt.

7. Beobachtungseinrichtung (1) nach Anspruch 1 oder 2, wobei die Analyseeinheit (50) Folgendes einschließt:
eine Interferenzintensitätsbild-Erfassungseinheit zum Erfassen der Zeitreihendaten des Interferenzintensitätsbildes von der Bildaufnahmeeinheit;
eine erste Erzeugungseinheit für komplexe Amplitudenbilder zum Erzeugen, für jede der Vielzahl von Bestrahlungsrichtungen, eines komplexen Amplitudenbildes basierend auf den Zeitreihendaten des Interferenzintensitätsbildes;
eine zweite Erzeugungseinheit für komplexe Amplitudenbilder zum Erzeugen, für jede der Vielzahl von Bestrahlungsrichtungen, eines komplexen Amplitudenbildes an jeder der Vielzahl von Positionen zwischen einer ersten Position und einer zweiten Position basierend auf einem komplexen Amplitudenbild an der ersten Position in Bezug auf einen Abstand von der Bildaufnahmeeinheit (40) entlang eines Lichtausbreitungswegs;
eine Erzeugungseinheit für zweidimensionale Phasenbilder zum Erzeugen, für jede der Vielzahl von Positionen, des komplexen Differentialinterferenzbildes jeder der Vielzahl von Bestrahlungsrichtungen basierend auf dem komplexen Amplitudenbild jeder der Vielzahl von Bestrahlungsrichtungen, und zum Erzeugen eines zweidimensionalen Phasenbildes basierend auf dem komplexen Differentialinterferenzbild jeder der Vielzahl von Bestrahlungsrichtungen;
eine Erzeugungseinheit für dreidimensionale Phasenbilder zum Erzeugen des dreidimensionalen Phasenbildes zwischen der ersten Position und der zweiten Position basierend auf dem zweidimensionalen Phasenbild an jeder der Vielzahl von Positionen;
eine Berechnungseinheit für eine Brechungsindexverteilung zum Erhalten einer dreidimensionalen Brechungsindexverteilung des Beobachtungsobjekts (S) zwischen der ersten Position und der zweiten Position basierend auf dem dreidimensionalen Phasenbild; und
eine dritte Erzeugungseinheit für komplexe Amplitudenbilder zum Erzeugen, für jede der Vielzahl von Bestrahlungsrichtungen, eines komplexen Amplitudenbildes an der zweiten Position basierend auf dem komplexen Amplitudenbild an der ersten Position und der dreidimensionalen Brechungsindexverteilung, wobei
basierend auf dem von der ersten Erzeugungseinheit für komplexe Amplitudenbilder erzeugten komplexen Amplitudenbild jeweilige Verarbeitungsschritte der zweiten Erzeugungseinheit für komplexe Amplitudenbilder, der Erzeugungseinheit für zweidimensionale Phasenbilder, der Erzeugungseinheit für dreidimensionale Phasenbilder, der Berechnungseinheit für eine Brechungsindexverteilung und der dritten Erzeugungseinheit für komplexe Amplitudenbilder der Reihe nach durchgeführt werden.

8. Beobachtungseinrichtung (1) nach einem der Ansprüche 3 bis 7, wobei die Erzeugungseinheit für zweidimensionale Phasenbilder das zweidimensionale Phasenbild basierend auf einer Summation der komplexen Differentialinterferenzbilder der Vielzahl von Bestrahlungsrichtungen erzeugt.

9. Beobachtungsverfahren, umfassend:
einen Interferenzschritt des Bewirkens, dass Objektlicht und Referenzlicht miteinander interferieren, unter Verwendung eines interferenzoptischen Systems zum Aufteilen von von einer Lichtquelle ausgegebenem Licht in das Objektlicht und das Referenzlicht, des Bestrahlens eines sich entlang einer ersten Richtung bewegenden Beobachtungsobjekts (S) mit dem Objektlicht und des Kombinierens und Ausgebens des durch das Beobachtungsobjekt (S) hindurchgetretenen Objektlichts und des Referenzlichts;
einen Modulationsschritt des Einstellens jeweiliger optischer Frequenzen des Objektlichts und des Referenzlichts, die sich um eine Heterodynfrequenz voneinander unterscheiden, unter Verwendung eines Frequenzverschiebers (30), der auf einem optischen Weg des Objektlichts oder des Referenzlichts vom Aufteilen bis zum Kombinieren in dem interferenzoptischen System bereitgestellt ist;
einen Bildaufnahmeschritt des Abbildens eines durch Interferenz zwischen dem Objektlicht und dem Referenzlicht erzeugten Interferenzintensitätsbildes auf einer Bildaufnahmeebene und des Ausgebens von Zeitreihendaten des Interferenzintensitätsbildes unter Verwendung einer Bildaufnahmeeinheit (40), die eine Bildaufnahmeebene zum Empfangen des von dem interferenzoptischen System ausgegebenen Objektlichts und Referenzlichts aufweist; und
einen Analyseschritt des Durchführens einer Analyse basierend auf den Zeitreihendaten des Interferenzintensitätsbildes, wobei
das interferenzoptische System Folgendes einschließt:
eine Bestrahlungsoptik (24), wenn das Beobachtungsobjekt (S) mit dem Objektlicht bestrahlt wird, zum Fokussieren des Objektlichts und Bestrahlen eines sich in einer zweiten Richtung senkrecht zu der ersten Richtung erstreckenden linienförmigen Bereichs in dem Beobachtungsobjekt mit dem Objektlicht; und
eine Abbildungsoptik (28), wenn das durch das Beobachtungsobjekt (S) hindurchgetretene Objektlicht zu der Bildaufnahmeebene geleitet wird, zum Einstellen einer Fourier-Transformationsbeziehung zwischen dem Beobachtungsobjekt und der Bildaufnahmeebene in der ersten Richtung und Einstellen einer zueinander konjugierten Beziehung zwischen dem Beobachtungsobjekt und der Bildaufnahmeebene in der zweiten Richtung, und wobei
das Objektlicht und das Referenzlicht koaxial zueinander auf die Bildaufnahmeebene einfallend sind, und
der Analyseschritt das Erzeugen eines komplexen Differentialinterferenzbildes für jede von einer Vielzahl von Positionen und einer Vielzahl von Bestrahlungsrichtungen, wenn basierend auf den Zeitreihendaten des Interferenzintensitätsbildes eine fokussierte Bestrahlung des Objektlichts auf das Beobachtungsobjekt (S) durch die Bestrahlungsoptik (24) durchgeführt wird, und das Erzeugen eines dreidimensionalen Phasenbildes des Beobachtungsobjekts (S) basierend auf dem komplexen Differentialinterferenzbild einschließt.

10. Beobachtungsverfahren, umfassend:
einen Interferenzschritt des Bewirkens, dass Objektlicht und Referenzlicht miteinander interferieren, unter Verwendung eines interferenzoptischen Systems zum Aufteilen von von einer Lichtquelle ausgegebenem Licht in das Objektlicht und das Referenzlicht, des Bestrahlens eines sich entlang einer ersten Richtung bewegenden Beobachtungsobjekts (S) mit dem Objektlicht und des Kombinierens und Ausgebens des durch das Beobachtungsobjekt (S) hindurchgetretenen Objektlichts und des Referenzlichts;
einen Bildaufnahmeschritt des Abbildens eines durch Interferenz zwischen dem Objektlicht und dem Referenzlicht erzeugten Interferenzintensitätsbildes auf einer Bildaufnahmeebene und des Ausgebens von Zeitreihendaten des Interferenzintensitätsbildes unter Verwendung einer Bildaufnahmeeinheit (40), die eine Bildaufnahmeebene zum Empfangen des von dem interferenzoptischen System ausgegebenen Objektlichts und Referenzlichts aufweist; und
einen Analyseschritt des Durchführens einer Analyse basierend auf den Zeitreihendaten des Interferenzintensitätsbildes, wobei
das interferenzoptische System Folgendes einschließt:
eine Bestrahlungsoptik (24), wenn das Beobachtungsobjekt (S) mit dem Objektlicht bestrahlt wird, zum Fokussieren des Objektlichts und Bestrahlen eines sich in einer zweiten Richtung senkrecht zu der ersten Richtung erstreckenden linienförmigen Bereichs in dem Beobachtungsobjekt (S) mit dem Objektlicht; und
eine Abbildungsoptik (28), wenn das durch das Beobachtungsobjekt (S) hindurchgetretene Objektlicht zu der Bildaufnahmeebene geleitet wird, zum Einstellen einer Fourier-Transformationsbeziehung zwischen dem Beobachtungsobjekt und der Bildaufnahmeebene in der ersten Richtung und Einstellen einer zueinander konjugierten Beziehung zwischen dem Beobachtungsobjekt und der Bildaufnahmeebene in der zweiten Richtung, und wobei
das Objektlicht und das Referenzlicht aus Richtungen, die voneinander verschieden sind, auf die Bildaufnahmeebene einfallend sind, und
der Analyseschritt das Erzeugen eines komplexen Differentialinterferenzbildes für jede von einer Vielzahl von Positionen und einer Vielzahl von Bestrahlungsrichtungen einschließt, wenn basierend auf den Zeitreihendaten des Interferenzintensitätsbildes eine fokussierte Bestrahlung des Objektlichts auf das Beobachtungsobjekt (S) durch die Bestrahlungsoptik (24) durchgeführt wird, und das Erzeugen eines dreidimensionalen Phasenbildes des Beobachtungsobjekts (S) basierend auf dem komplexen Differentialinterferenzbild einschließt.

11. Beobachtungsverfahren nach Anspruch 9 oder 10, wobei der Analyseschritt Folgendes einschließt:
einen Interferenzintensitätsbild-Erfassungsschritt des Erfassens der Zeitreihendaten des Interferenzintensitätsbildes von der Bildaufnahmeeinheit;
einen ersten Erzeugungsschritt für komplexe Amplitudenbilder des Erzeugens, für jede der Vielzahl von Bestrahlungsrichtungen, eines komplexen Amplitudenbildes basierend auf den Zeitreihendaten des Interferenzintensitätsbildes;
einen zweiten Erzeugungsschritt für komplexe Amplitudenbilder des Erzeugens, für jede der Vielzahl von Bestrahlungsrichtungen, eines komplexen Amplitudenbildes an jeder der Vielzahl von Positionen basierend auf dem von dem ersten Erzeugungsschritt für komplexe Amplitudenbilder erzeugten komplexen Amplitudenbild;
einen Erzeugungsschritt für zweidimensionale Phasenbilder des Erzeugens, für jede der Vielzahl von Positionen, des komplexen Differentialinterferenzbildes jeder der Vielzahl von Bestrahlungsrichtungen basierend auf dem komplexen Amplitudenbild jeder der Vielzahl von Bestrahlungsrichtungen, und zum Erzeugen eines zweidimensionalen Phasenbildes basierend auf dem komplexen Differentialinterferenzbild jeder der Vielzahl von Bestrahlungsrichtungen; und
einen Erzeugungsschritt für dreidimensionale Phasenbilder des Erzeugens des dreidimensionalen Phasenbildes basierend auf dem zweidimensionalen Phasenbild an jeder der Vielzahl von Positionen.

12. Beobachtungsverfahren nach Anspruch 9 oder 10, wobei der Analyseschritt Folgendes einschließt:
einen Interferenzintensitätsbild-Erfassungsschritt des Erfassens der Zeitreihendaten des Interferenzintensitätsbildes von der Bildaufnahmeeinheit;
einen ersten Erzeugungsschritt für komplexe Amplitudenbilder des Erzeugens, für jede der Vielzahl von Bestrahlungsrichtungen, eines komplexen Amplitudenbildes basierend auf den Zeitreihendaten des Interferenzintensitätsbildes;
einen zweiten Erzeugungsschritt für komplexe Amplitudenbilder des Erzeugens, für jede der Vielzahl von Bestrahlungsrichtungen, eines komplexen Amplitudenbildes an jeder der Vielzahl von Positionen basierend auf dem von dem ersten Erzeugungsschritt für komplexe Amplitudenbilder erzeugten komplexen Amplitudenbild;
einen Erzeugungsschritt für zweidimensionale Phasenbilder des Aufteilens, für jede der Vielzahl von Positionen, des komplexen Amplitudenbildes jeder der Vielzahl von Bestrahlungsrichtungen in eine Vielzahl von Batches, des Korrigierens einer Phase des in dem Batch eingeschlossenen komplexen Amplitudenbildes basierend auf der Bestrahlungsrichtung für jede der Vielzahl von Batches, und dann zum Erzeugen eines komplexen Amplitudensummationsbildes, das eine Summation der komplexen Amplitudenbilder nach der Korrektur darstellt, zum Erzeugen des komplexen Differentialinterferenzbildes jedes der Vielzahl von Batches basierend auf dem komplexen Amplitudensummationsbild jedes der Vielzahl von Batches und zum Erzeugen eines zweidimensionalen Phasenbildes basierend auf dem komplexen Differentialinterferenzbild jedes der Vielzahl von Batches; und
einen Erzeugungsschritt für dreidimensionale Phasenbilder des Erzeugens des dreidimensionalen Phasenbildes basierend auf dem zweidimensionalen Phasenbild an jeder der Vielzahl von Positionen.

13. Beobachtungsverfahren nach Anspruch 9 oder 10, wobei der Analyseschritt Folgendes einschließt:
einen Interferenzintensitätsbild-Erfassungsschritt des Erfassens der Zeitreihendaten des Interferenzintensitätsbildes von der Bildaufnahmeeinheit;
einen ersten Erzeugungsschritt für komplexe Amplitudenbilder des Erzeugens, für jede der Vielzahl von Bestrahlungsrichtungen, eines komplexen Amplitudenbildes basierend auf den Zeitreihendaten des Interferenzintensitätsbildes;
einen zweiten Erzeugungsschritt für komplexe Amplitudenbilder des Erzeugens, für jede der Vielzahl von Bestrahlungsrichtungen, eines komplexen Amplitudenbildes an jeder der Vielzahl von Positionen basierend auf dem komplexen Amplitudenbild;
einen Phasenkonjugationsoperationsschritt des Durchführens, vor, während oder nach einem Verarbeitungsschritt durch den zweiten Erzeugungsschritt für komplexe Amplitudenbilder, einer Phasenkonjugationsoperation an dem komplexen Amplitudenbild jeder der Vielzahl von Bestrahlungsrichtungen, um ein komplexes Amplitudenbild jeder der Vielzahl von Bestrahlungsrichtungen zu erzeugen, wenn eine Beziehung zwischen Lichtbestrahlung und Bildaufnahme für das Beobachtungsobjekt (S) umgekehrt wird;
einen Erzeugungsschritt für zweidimensionale Phasenbilder des Erzeugens, für jede der Vielzahl von Positionen, des komplexen Differentialinterferenzbildes jeder der Vielzahl von Bestrahlungsrichtungen basierend auf dem komplexen Amplitudenbild jeder der Vielzahl von Bestrahlungsrichtungen, das von dem zweiten Erzeugungsschritt für komplexe Amplitudenbilder oder dem Phasenkonjugationsoperationsschritt erzeugt wird, und zum Erzeugen eines zweidimensionalen Phasenbildes basierend auf dem komplexen Differentialinterferenzbild jeder der Vielzahl von Bestrahlungsrichtungen; und
einen Erzeugungsschritt für dreidimensionale Phasenbilder des Erzeugens des dreidimensionalen Phasenbildes basierend auf dem zweidimensionalen Phasenbild an jeder der Vielzahl von Positionen, wobei
wenn ein basierend auf dem komplexen Amplitudenbild vor dem Durchführen der Operation durch den Phasenkonjugationsoperationsschritt erzeugtes Phasenbild als erstes Phasenbild eingestellt wird und ein basierend auf dem durch Durchführen der Operation durch den Phasenkonjugationsoperationsschritt erhaltenen komplexen Amplitudenbild erzeugtes Phasenbild als zweites Phasenbild eingestellt wird, aus der Vielzahl von Positionen, der Erzeugungsschritt für zweidimensionale Phasenbilder das Erzeugen des zweidimensionalen Phasenbildes an einer Position relativ nahe zu der Bildaufnahmeeinheit hauptsächlich basierend auf dem ersten Phasenbild und das Erzeugen des zweidimensionalen Phasenbildes an einer Position relativ weit von der Bildaufnahmeeinheit entfernt hauptsächlich basierend auf dem zweiten Phasenbild einschließt.

14. Beobachtungsverfahren nach einem der Ansprüche 11 bis 13, wobei der Analyseschritt weiter einen Berechnungsschritt für eine Brechungsindexverteilung des Erhaltens einer dreidimensionalen Brechungsindexverteilung des Beobachtungsobjekts (S) basierend auf dem dreidimensionalen Phasenbild einschließt.

15. Beobachtungsverfahren nach Anspruch 9 oder 10, wobei der Analyseschritt Folgendes einschließt:
einen Interferenzintensitätsbild-Erfassungsschritt des Erfassens der Zeitreihendaten des Interferenzintensitätsbildes von der Bildaufnahmeeinheit;
einen ersten Erzeugungsschritt für komplexe Amplitudenbilder des Erzeugens, für jede der Vielzahl von Bestrahlungsrichtungen, eines komplexen Amplitudenbildes basierend auf den Zeitreihendaten des Interferenzintensitätsbildes;
einen zweiten Erzeugungsschritt für komplexe Amplitudenbilder des Erzeugens, für jede der Vielzahl von Bestrahlungsrichtungen, eines komplexen Amplitudenbildes an jeder der Vielzahl von Positionen zwischen einer ersten Position und einer zweiten Position basierend auf einem komplexen Amplitudenbild an der ersten Position in Bezug auf einen Abstand von der Bildaufnahmeeinheit (40) entlang eines Lichtausbreitungswegs;
einen Erzeugungsschritt für zweidimensionale Phasenbilder des Erzeugens, für jede der Vielzahl von Positionen, des komplexen Differentialinterferenzbildes jeder der Vielzahl von Bestrahlungsrichtungen basierend auf dem komplexen Amplitudenbild jeder der Vielzahl von Bestrahlungsrichtungen, und zum Erzeugen eines zweidimensionalen Phasenbildes basierend auf dem komplexen Differentialinterferenzbild jeder der Vielzahl von Bestrahlungsrichtungen;
einen Erzeugungsschritt für dreidimensionale Phasenbilder des Erzeugens des dreidimensionalen Phasenbildes zwischen der ersten Position und der zweiten Position basierend auf dem zweidimensionalen Phasenbild an jeder der Vielzahl von Positionen;
einen Berechnungsschritt für eine Brechungsindexverteilung des Erhaltens einer dreidimensionalen Brechungsindexverteilung des Beobachtungsobjekts (S) zwischen der ersten Position und der zweiten Position basierend auf dem dreidimensionalen Phasenbild; und
einen dritten Erzeugungsschritt für komplexe Amplitudenbilder des Erzeugens, für jede der Vielzahl von Bestrahlungsrichtungen, eines komplexen Amplitudenbildes an der zweiten Position basierend auf dem komplexen Amplitudenbild an der ersten Position und der dreidimensionalen Brechungsindexverteilung, wobei
basierend auf dem von dem ersten Erzeugungsschritt für komplexe Amplitudenbilder erzeugten komplexen Amplitudenbild jeweilige Verarbeitungsschritte des zweiten Erzeugungsschritts für komplexe Amplitudenbilder, des Erzeugungsschritts für zweidimensionale Phasenbilder, des Erzeugungsschritts für dreidimensionale Phasenbilder, des Berechnungsschritts für eine Brechungsindexverteilung und des dritten Erzeugungsschritts für komplexe Amplitudenbilder der Reihe nach durchgeführt werden.

16. Beobachtungsverfahren nach einem der Ansprüche 11 bis 15, wobei der Erzeugungsschritt für zweidimensionale Phasenbilder das Erzeugen des zweidimensionalen Phasenbildes basierend auf einer Summation der komplexen Differentialinterferenzbilder der Vielzahl von Bestrahlungsrichtungen einschließt.

17. Programm zum Veranlassen der Beobachtungseinrichtung (1A) nach Anspruch 1, die Schritte des Beobachtungsverfahrens nach Anspruch 9 oder einem ihrer abhängigen Ansprüche auszuführen, oder zum Veranlassen der Beobachtungseinrichtung (1B) nach Anspruch 2, die Schritte des Beobachtungsverfahrens nach Anspruch 10 oder einem ihrer abhängigen Ansprüche auszuführen.

18. Computerlesbares Aufzeichnungsmedium, auf dem das Programm nach Anspruch 17 aufgezeichnet ist.

## Revendications

1. Appareil d'observation (1A) comprenant :
un système optique d'interférence destiné à séparer une lumière délivrée par une source de lumière en lumière d'objet et en lumière de référence, à irradier, à l'aide de la lumière d'objet, un objet d'observation (S) se déplaçant le long d'une première direction, et à combiner et à délivrer la lumière d'objet ayant traversé l'objet d'observation (S) et la lumière de référence ;
un dispositif de décalage de fréquence (30) disposé sur un trajet optique de la lumière d'objet ou de la lumière de référence de la séparation jusqu'à la combinaison dans le système optique d'interférence, et destiné à définir les fréquences optiques respectives de la lumière d'objet et de la lumière de référence différemment l'une de l'autre par une fréquence hétérodyne ;
une unité d'imagerie (40) présentant un plan d'imagerie destinée à recevoir la lumière d'objet et la lumière de référence délivrées depuis le système optique d'interférence, et à imager, sur le plan d'imagerie, une image d'intensité d'interférence générée par interférence entre la lumière d'objet et la lumière de référence, et à délivrer des données chronologiques de l'image d'intensité d'interférence ; et
une unité d'analyse (50) destinée à effectuer une analyse sur la base des données chronologiques de l'image d'intensité d'interférence, dans lequel
le système optique d'interférence inclut :
un système optique d'irradiation (24) destiné, lorsque l'objet d'observation (S) est irradié à l'aide de la lumière d'objet, à concentrer la lumière d'objet et à irradier, à l'aide de la lumière d'objet, une région en forme de ligne s'étendant dans une deuxième direction perpendiculaire à la première direction dans l'objet d'observation (S) ; et
un système optique d'imagerie (28) destiné, lorsque la lumière d'objet ayant traversé l'objet d'observation (S) est guidée vers le plan d'imagerie, à définir une relation positionnelle de transformée de Fourier entre l'objet d'observation (S) et le plan d'imagerie dans la première direction, et à définir une relation positionnelle mutuellement conjuguée entre l'objet d'observation (S) et le plan d'imagerie dans la deuxième direction, et dans lequel
la lumière d'objet et la lumière de référence sont incidentes sur le plan d'imagerie de manière coaxiale l'une par rapport à l'autre, et
l'unité d'analyse (50) génère une image d'interférence différentielle complexe de chacune d'une pluralité de positions et d'une pluralité de directions d'irradiation lumineuse lors de l'exécution d'une irradiation concentrée de la lumière d'objet sur l'objet d'observation (S) par le système optique d'irradiation (24) sur la base des données chronologiques de l'image d'intensité d'interférence, et génère une image de phase tridimensionnelle de l'objet d'observation (S) sur la base de l'image d'interférence différentielle complexe.

2. Appareil d'observation (1B) comprenant :
un système optique d'interférence destiné à diviser une lumière délivrée par une source de lumière en lumière d'objet et lumière de référence, à irradier, à l'aide de la lumière d'objet, un objet d'observation (S) se déplaçant le long d'une première direction, et à combiner et à délivrer la lumière d'objet ayant traversé l'objet d'observation (S) et la lumière de référence ;
une unité d'imagerie (40) présentant un plan d'imagerie destinée à recevoir la lumière d'objet et la lumière de référence délivrées depuis le système optique d'interférence, et à imager, sur le plan d'imagerie, une image d'intensité d'interférence générée par interférence entre la lumière d'objet et la lumière de référence, et à délivrer des données chronologiques de l'image d'intensité d'interférence ; et
une unité d'analyse (50) destinée à effectuer une analyse sur la base des données chronologiques de l'image d'intensité d'interférence, dans lequel
le système optique d'interférence inclut :
un système optique d'irradiation (24) destiné, lorsque l'objet d'observation (S) est irradié à l'aide de la lumière d'objet, à concentrer la lumière d'objet et à irradier, à l'aide de la lumière d'objet, une région en forme de ligne s'étendant dans une deuxième direction perpendiculaire à la première direction dans l'objet d'observation (S) ; et
un système optique d'imagerie (28) destiné, lorsque la lumière d'objet ayant traversé l'objet d'observation (S) est guidée vers le plan d'imagerie, à définir une relation positionnelle de transformée de Fourier entre l'objet d'observation et le plan d'imagerie dans la première direction, et à définir une relation positionnelle mutuellement conjuguée entre l'objet d'observation et le plan d'imagerie dans la deuxième direction, et dans lequel
la lumière d'objet et la lumière de référence sont incidents sur le plan d'imagerie selon des directions différentes l'une de l'autre, et
l'unité d'analyse (50) génère une image d'interférence différentielle complexe de chacune d'une pluralité de positions et d'une pluralité de directions d'irradiation lumineuse lors de l'exécution d'une irradiation concentrée de la lumière d'objet sur l'objet d'observation (S) par le système optique d'irradiation (24) sur la base des données chronologiques de l'image d'intensité d'interférence, et génère une image de phase tridimensionnelle de l'objet d'observation (S) sur la base de l'image d'interférence différentielle complexe.

3. Appareil d'observation (1) selon la revendication 1 ou la revendication 2, dans lequel l'unité d'analyse (50) inclut :
une unité d'acquisition d'image d'intensité d'interférence destinée à acquérir les données chronologiques de l'image d'intensité d'interférence en provenance de l'unité d'imagerie ;
une première unité de génération d'image d'amplitude complexe destinée à générer, pour chacune de la pluralité de directions d'irradiation lumineuse, une image d'amplitude complexe sur la base des données chronologiques de l'image d'intensité d'interférence ;
une deuxième unité de génération d'image d'amplitude complexe destinée à générer, pour chacune de la pluralité de directions d'irradiation lumineuse, une image d'amplitude complexe à chacune de la pluralité de positions sur la base de l'image d'amplitude complexe générée par la première unité de génération d'image d'amplitude complexe ;
une unité de génération d'image de phase bidimensionnelle destinée à générer, pour chacune de la pluralité de positions,
l'image d'interférence différentielle complexe de chacune de la pluralité de directions d'irradiation lumineuse sur la base de l'image d'amplitude complexe de chacune de la pluralité de directions d'irradiation lumineuse, et à générer une image de phase bidimensionnelle sur la base de l'image d'interférence différentielle complexe de chacune de la pluralité de directions d'irradiation lumineuse ; et
une unité de génération d'image de phase tridimensionnelle destinée à générer l'image de phase tridimensionnelle sur la base de l'image de phase bidimensionnelle à chacune de la pluralité de positions.

4. Appareil d'observation (1) selon la revendication 1 ou la revendication 2, dans lequel l'unité d'analyse (50) inclut :
une unité d'acquisition d'image d'intensité d'interférence destinée à acquérir les données chronologiques de l'image d'intensité d'interférence en provenance de l'unité d'imagerie ;
une première unité de génération d'image d'amplitude complexe destinée à générer, pour chacune de la pluralité de directions d'irradiation lumineuse, une image d'amplitude complexe sur la base des données chronologiques de l'image d'intensité d'interférence ;
une deuxième unité de génération d'image d'amplitude complexe destinée à générer, pour chacune de la pluralité de directions d'irradiation lumineuse, une image d'amplitude complexe à chacune de la pluralité de positions sur la base de l'image d'amplitude complexe générée par la première unité de génération d'image d'amplitude complexe ;
une unité de génération d'image de phase bidimensionnelle destinée à diviser, pour chacune de la pluralité de positions, l'image d'amplitude complexe de chacune de la pluralité de directions d'irradiation lumineuse en une pluralité de lots, à corriger une phase de l'image d'amplitude complexe incluse dans le lot sur la base de la direction d'irradiation lumineuse pour chacun de la pluralité de lots, puis à générer une image de somme d'amplitudes complexes représentant une somme des images d'amplitude complexe après correction, à générer l'image d'interférence différentielle complexe de chacun de la pluralité de lots sur la base de l'image de somme d'amplitudes complexes de chacun de la pluralité de lots et à générer une image de phase bidimensionnelle sur la base de l'image d'interférence différentielle complexe de chacun de la pluralité de lots ; et
une unité de génération d'image de phase tridimensionnelle destinée à générer l'image de phase tridimensionnelle sur la base de l'image de phase bidimensionnelle à chacune de la pluralité de positions.

5. Appareil d'observation (1) selon la revendication 1 ou la revendication 2, dans lequel l'unité d'analyse (50) inclut :
une unité d'acquisition d'image d'intensité d'interférence destinée à acquérir les données chronologiques de l'image d'intensité d'interférence en provenance de l'unité d'imagerie ;
une première unité de génération d'image d'amplitude complexe destinée à générer, pour chacune de la pluralité de directions d'irradiation lumineuse, une image d'amplitude complexe sur la base des données chronologiques de l'image d'intensité d'interférence ;
une deuxième unité de génération d'image d'amplitude complexe destinée à générer, pour chacune de la pluralité de directions d'irradiation lumineuse, une image d'amplitude complexe à chacune de la pluralité de positions sur la base de l'image d'amplitude complexe ;
une unité d'opération de conjugaison de phase destinée à effectuer, avant, pendant ou après une étape de traitement par la deuxième unité de génération d'image d'amplitude complexe, une opération de conjugaison de phase sur l'image d'amplitude complexe de chacune de la pluralité de directions d'irradiation lumineuse pour générer une image d'amplitude complexe de chacune de la pluralité de directions d'irradiation lumineuse lorsqu'une relation entre l'irradiation lumineuse et l'imagerie pour l'objet d'observation (S) est inversée ;
une unité de génération d'image de phase bidimensionnelle destinée à générer, pour chacune de la pluralité de positions, l'image d'interférence différentielle complexe de chacune de la pluralité de directions d'irradiation lumineuse sur la base de l'image d'amplitude complexe de chacune de la pluralité de directions d'irradiation lumineuse générées par la deuxième unité de génération d'image d'amplitude complexe ou l'unité d'opération de conjugaison de phase, et à générer une image de phase bidimensionnelle sur la base de l'image d'interférence différentielle complexe de chacune de la pluralité de directions d'irradiation lumineuse ; et
une unité de génération d'image de phase tridimensionnelle destinée à générer l'image de phase tridimensionnelle sur la base de l'image de phase bidimensionnelle à chacune de la pluralité de positions, dans lequel
lorsqu'une image de phase générée sur la base de l'image d'amplitude complexe avant l'exécution de l'opération par l'unité d'opération de conjugaison de phase est définie comme une première image de phase, et qu'une image de phase générée sur la base de l'image d'amplitude complexe obtenue par l'exécution de l'opération par l'unité d'opération de conjugaison de phase est définie comme une deuxième image de phase, parmi la pluralité de positions, l'unité de génération d'image de phase bidimensionnelle génère l'image de phase bidimensionnelle principalement sur la base de la première image de phase à une position relativement proche de l'unité d'imagerie, et génère l'image de phase bidimensionnelle principalement sur la base de la deuxième image de phase à une position relativement éloignée de l'unité d'imagerie.

6. Appareil d'observation (1) selon l'une quelconque des revendications 3 à 5, dans lequel l'unité d'analyse (50) inclut en outre une unité de calcul de la distribution d'indice de réfraction destinée à obtenir une distribution d'indice de réfraction tridimensionnelle de l'objet d'observation (S) sur la base de l'image de phase tridimensionnelle.

7. Appareil d'observation (1) selon la revendication 1 ou la revendication 2, dans lequel l'unité d'analyse (50) inclut :
une unité d'acquisition d'image d'intensité d'interférence destinée à acquérir les données chronologiques de l'image d'intensité d'interférence en provenance de l'unité d'imagerie ;
une première unité de génération d'image d'amplitude complexe destinée à générer, pour chacune de la pluralité de directions d'irradiation lumineuse, une image d'amplitude complexe sur la base des données chronologiques de l'image d'intensité d'interférence ;
une deuxième unité de génération d'image d'amplitude complexe destinée à générer, pour chacune de la pluralité de directions d'irradiation lumineuse, une image d'amplitude complexe à chacune de la pluralité de positions entre une première position et une deuxième position sur la base d'une image d'amplitude complexe à la première position par rapport à une distance depuis l'unité d'imagerie (40) le long d'un trajet de propagation de lumière ;
une unité de génération d'image de phase bidimensionnelle destinée à générer, pour chacune de la pluralité de positions, l'image d'interférence différentielle complexe de chacune de la pluralité de directions d'irradiation lumineuse sur la base de l'image d'amplitude complexe de chacune de la pluralité de directions d'irradiation lumineuse, et à générer une image de phase bidimensionnelle sur la base de l'image d'interférence différentielle complexe de chacune de la pluralité de directions d'irradiation lumineuse ;
une unité de génération d'image de phase tridimensionnelle destinée à générer l'image de phase tridimensionnelle entre la première position et la deuxième position sur la base de l'image de phase bidimensionnelle à chacune de la pluralité de positions ;
une unité de calcul de distribution d'indice de réfraction destinée à obtenir une distribution d'indice de réfraction tridimensionnelle de l'objet d'observation (S) entre la première position et la deuxième position sur la base de l'image de phase tridimensionnelle ; et
une troisième unité de génération d'image d'amplitude complexe destinée à générer, pour chacune de la pluralité de directions d'irradiation lumineuse, une image d'amplitude complexe à la deuxième position sur la base de l'image d'amplitude complexe à la première position et de la distribution d'indice de réfraction tridimensionnelle, dans lequel
sur la base de l'image d'amplitude complexe générée par la première unité de génération d'image d'amplitude complexe, les étapes de traitement respectives de la deuxième unité de génération d'image d'amplitude complexe, de l'unité de génération d'image de phase bidimensionnelle, de l'unité de génération d'image de phase tridimensionnelle, de l'unité de calcul de distribution d'indice de réfraction et de la troisième unité de génération d'image d'amplitude complexe sont exécutées séquentiellement.

8. Appareil d'observation (1) selon l'une quelconque des revendications 3 à 7, dans lequel l'unité de génération d'image de phase bidimensionnelle génère l'image de phase bidimensionnelle sur la base d'une somme des images d'interférence différentielle complexe de la pluralité de directions d'irradiation lumineuse.

9. Procédé d'observation comprenant :
une étape d'interférence consistant à faire interférer une lumière d'objet et une lumière de référence l'une avec l'autre, en utilisant un système optique d'interférence destiné à séparer la lumière délivrée par une source de lumière en lumière d'objet et en lumière de référence, à irradier, à l'aide de la lumière d'objet, un objet d'observation (S) se déplaçant le long d'une première direction, et à combiner et à délivrer la lumière d'objet ayant traversé l'objet d'observation (S) et la lumière de référence ;
une étape de modulation consistant à définir les fréquences optiques respectives de la lumière d'objet et de la lumière de référence différemment l'une de l'autre par une fréquence hétérodyne, en utilisant un dispositif de décalage de fréquence (30) disposé sur un trajet optique de la lumière d'objet ou de la lumière de référence de la séparation jusqu'à la combinaison dans le système optique d'interférence ;
une étape d'imagerie consistant à imager, sur un plan d'imagerie, une image d'intensité d'interférence générée par interférence entre la lumière d'objet et la lumière de référence, et à délivrer des données chronologiques de l'image d'intensité d'interférence, en utilisant une unité d'imagerie (40) présentant le plan d'imagerie destinée à recevoir la lumière d'objet et la lumière de référence délivrées depuis le système optique d'interférence ; et
une étape d'analyse consistant à effectuer une analyse sur la base des données chronologiques de l'image d'intensité d'interférence, dans lequel
le système optique d'interférence inclut :
un système optique d'irradiation (24) destiné, lorsque l'objet d'observation (S) est irradié à l'aide de la lumière d'objet, à concentrer la lumière d'objet et à irradier, à l'aide de la lumière d'objet, une région en forme de ligne s'étendant dans une deuxième direction perpendiculaire à la première direction dans l'objet d'observation ; et
un système optique d'imagerie (28) destiné, lorsque la lumière d'objet ayant traversé l'objet d'observation (S) est guidée vers le plan d'imagerie, à définir une relation positionnelle de transformée de Fourier entre l'objet d'observation et le plan d'imagerie dans la première direction, et à définir une relation positionnelle mutuellement conjuguée entre l'objet d'observation et le plan d'imagerie dans la deuxième direction, et dans lequel
la lumière d'objet et la lumière de référence sont incidentes sur le plan d'imagerie de manière coaxiale l'une par rapport à l'autre, et
l'étape d'analyse inclut la génération d'une image d'interférence différentielle complexe de chacune d'une pluralité de positions et d'une pluralité de directions d'irradiation lumineuse lors de l'exécution d'une irradiation concentrée de la lumière d'objet sur l'objet d'observation (S) par le système optique d'irradiation (24) sur la base des données chronologiques de l'image d'intensité d'interférence, et la génération d'une image de phase tridimensionnelle de l'objet d'observation (S) sur la base de l'image d'interférence différentielle complexe.

10. Procédé d'observation comprenant :
une étape d'interférence consistant à faire interférer une lumière d'objet et une lumière de référence l'une avec l'autre, en utilisant un système optique d'interférence destiné à séparer la lumière délivrée par une source de lumière en lumière d'objet et en lumière de référence, à irradier, à l'aide de la lumière d'objet, un objet d'observation (S) se déplaçant le long d'une première direction, et à combiner et à délivrer la lumière d'objet ayant traversé l'objet d'observation (S) et la lumière de référence ;
une étape d'imagerie consistant à imager, sur un plan d'imagerie, une image d'intensité d'interférence générée par interférence entre la lumière d'objet et la lumière de référence, et à délivrer des données chronologiques de l'image d'intensité d'interférence, en utilisant une unité d'imagerie (40) présentant le plan d'imagerie destinée à recevoir la lumière d'objet et la lumière de référence délivrées depuis le système optique d'interférence ; et
une étape d'analyse consistant à effectuer une analyse sur la base des données chronologiques de l'image d'intensité d'interférence, dans lequel
le système optique d'interférence inclut :
un système optique d'irradiation (24) destiné, lorsque l'objet d'observation (S) est irradié à l'aide de la lumière d'objet, à concentrer la lumière d'objet et à irradier, à l'aide de la lumière d'objet, une région en forme de ligne s'étendant dans une deuxième direction perpendiculaire à la première direction dans l'objet d'observation (S) ; et
un système optique d'imagerie (28) destiné, lorsque la lumière d'objet ayant traversé l'objet d'observation (S) est guidée vers le plan d'imagerie, à définir une relation positionnelle de transformée de Fourier entre l'objet d'observation et le plan d'imagerie dans la première direction, et à définir une relation positionnelle mutuellement conjuguée entre l'objet d'observation et le plan d'imagerie dans la deuxième direction, et dans lequel
la lumière d'objet et la lumière de référence sont incidentes sur le plan d'imagerie selon des directions différentes l'une de l'autre, et
l'étape d'analyse inclut la génération d'une image d'interférence différentielle complexe de chacune d'une pluralité de positions et d'une pluralité de directions d'irradiation lumineuse lors de l'exécution d'une irradiation concentrée de la lumière d'objet sur l'objet d'observation (S) par le système optique d'irradiation (24) sur la base des données chronologiques de l'image d'intensité d'interférence, et la génération d'une image de phase tridimensionnelle de l'objet d'observation (S) sur la base de l'image d'interférence différentielle complexe.

11. Procédé d'observation selon la revendication 9 ou la revendication 10, dans lequel l'étape d'analyse inclut :
une étape d'acquisition d'image d'intensité d'interférence consistant à acquérir les données chronologiques de l'image d'intensité d'interférence en provenance de l'unité d'imagerie ;
une première étape de génération d'image d'amplitude complexe consistant à générer, pour chacune de la pluralité de directions d'irradiation lumineuse, une image d'amplitude complexe sur la base des données chronologiques de l'image d'intensité d'interférence ;
une deuxième étape de génération d'image d'amplitude complexe consistant à générer, pour chacune de la pluralité de directions d'irradiation lumineuse, une image d'amplitude complexe à chacune de la pluralité de positions sur la base de l'image d'amplitude complexe générée par la première étape de génération d'image d'amplitude complexe ;
une étape de génération d'image de phase bidimensionnelle consistant à générer, pour chacune de la pluralité de positions, l'image d'interférence différentielle complexe de chacune de la pluralité de directions d'irradiation lumineuse sur la base de l'image d'amplitude complexe de chacune de la pluralité de directions d'irradiation lumineuse, et à générer une image de phase bidimensionnelle sur la base de l'image d'interférence différentielle complexe de chacune de la pluralité de directions d'irradiation lumineuse ; et
une étape de génération d'image de phase tridimensionnelle consistant à générer l'image de phase tridimensionnelle sur la base de l'image de phase bidimensionnelle à chacune de la pluralité de positions.

12. Procédé d'observation selon la revendication 9 ou la revendication 10, dans lequel l'étape d'analyse inclut :
une étape d'acquisition d'image d'intensité d'interférence consistant à acquérir les données chronologiques de l'image d'intensité d'interférence en provenance de l'unité d'imagerie ;
une première étape de génération d'image d'amplitude complexe consistant à générer, pour chacune de la pluralité de directions d'irradiation lumineuse, une image d'amplitude complexe sur la base des données chronologiques de l'image d'intensité d'interférence ;
une deuxième étape de génération d'image d'amplitude complexe consistant à générer, pour chacune de la pluralité de directions d'irradiation lumineuse, une image d'amplitude complexe à chacune de la pluralité de positions sur la base de l'image d'amplitude complexe générée par la première étape de génération d'image d'amplitude complexe ;
une étape de génération d'image de phase bidimensionnelle consistant à diviser, pour chacune de la pluralité de positions, l'image d'amplitude complexe de chacune de la pluralité de directions d'irradiation lumineuse en une pluralité de lots, à corriger une phase de l'image d'amplitude complexe incluse dans le lot sur la base de la direction d'irradiation lumineuse pour chacun de la pluralité de lots, puis à générer une image de somme d'amplitudes complexes représentant une somme des images d'amplitude complexe après correction, à générer l'image d'interférence différentielle complexe de chacun de la pluralité de lots sur la base de l'image de somme d'amplitudes complexes de chacun de la pluralité de lots et à générer une image de phase bidimensionnelle sur la base de l'image d'interférence différentielle complexe de chacun de la pluralité de lots ; et
une étape de génération d'image de phase tridimensionnelle consistant à générer l'image de phase tridimensionnelle sur la base de l'image de phase bidimensionnelle à chacune de la pluralité de positions.

13. Procédé d'observation selon la revendication 9 ou la revendication 10, dans lequel l'étape d'analyse inclut :
une étape d'acquisition d'image d'intensité d'interférence consistant à acquérir les données chronologiques de l'image d'intensité d'interférence en provenance de l'unité d'imagerie ;
une première étape de génération d'image d'amplitude complexe consistant à générer, pour chacune de la pluralité de directions d'irradiation lumineuse, une image d'amplitude complexe sur la base des données chronologiques de l'image d'intensité d'interférence ;
une deuxième étape de génération d'image d'amplitude complexe consistant à générer, pour chacune de la pluralité de directions d'irradiation lumineuse, une image d'amplitude complexe à chacune de la pluralité de positions sur la base de l'image d'amplitude complexe ;
une étape d'opération de conjugaison de phase consistant à effectuer, avant, pendant ou après une étape de traitement par la deuxième étape de génération d'image d'amplitude complexe, une opération de conjugaison de phase sur l'image d'amplitude complexe de chacune de la pluralité de directions d'irradiation lumineuse pour générer une image d'amplitude complexe de chacune de la pluralité de directions d'irradiation lumineuse lorsqu'une relation entre l'irradiation lumineuse et l'imagerie pour l'objet d'observation (S) est inversée ;
une étape de génération d'image de phase bidimensionnelle consistant à générer, pour chacune de la pluralité de positions, l'image d'interférence différentielle complexe de chacune de la pluralité de directions d'irradiation lumineuse sur la base de l'image d'amplitude complexe de chacune de la pluralité de directions d'irradiation lumineuse générées par la deuxième étape de génération d'image d'amplitude complexe ou l'étape d'opération de conjugaison de phase, et à générer une image de phase bidimensionnelle sur la base de l'image d'interférence différentielle complexe de chacune de la pluralité de directions d'irradiation lumineuse ; et
une étape de génération d'image de phase tridimensionnelle consistant à générer l'image de phase tridimensionnelle sur la base de l'image de phase bidimensionnelle à chacune de la pluralité de positions, dans lequel
lorsqu'une image de phase générée sur la base de l'image d'amplitude complexe avant l'exécution de l'opération par l'étape d'opération de conjugaison de phase est définie comme une première image de phase, et qu'une image de phase générée sur la base de l'image d'amplitude complexe obtenue par l'exécution de l'opération par l'étape d'opération de conjugaison de phase est définie comme une deuxième image de phase, parmi la pluralité de positions, l'étape de génération d'image de phase bidimensionnelle inclut la génération de l'image de phase bidimensionnelle principalement sur la base de la première image de phase à une position relativement proche de l'unité d'imagerie, et la génération de l'image de phase bidimensionnelle principalement sur la base de la deuxième image de phase à une position relativement éloignée de l'unité d'imagerie.

14. Procédé d'observation selon l'une quelconque des revendications 11 à 13, dans lequel l'étape d'analyse inclut en outre une étape de calcul de la distribution d'indice de réfraction consistant à obtenir une distribution d'indice de réfraction tridimensionnelle de l'objet d'observation (S) sur la base de l'image de phase tridimensionnelle.

15. Procédé d'observation selon la revendication 9 ou la revendication 10, dans lequel l'étape d'analyse inclut :
une étape d'acquisition d'image d'intensité d'interférence consistant à acquérir les données chronologiques de l'image d'intensité d'interférence en provenance de l'unité d'imagerie ;
une première étape de génération d'image d'amplitude complexe consistant à générer, pour chacune de la pluralité de directions d'irradiation lumineuse, une image d'amplitude complexe sur la base des données chronologiques de l'image d'intensité d'interférence ;
une deuxième étape de génération d'image d'amplitude complexe consistant à générer, pour chacune de la pluralité de directions d'irradiation lumineuse, une image d'amplitude complexe à chacune de la pluralité de positions entre une première position et une deuxième position sur la base d'une image d'amplitude complexe à la première position par rapport à une distance depuis l'unité d'imagerie (40) le long d'un trajet de propagation de lumière ;
une étape de génération d'image de phase bidimensionnelle consistant à générer, pour chacune de la pluralité de positions, l'image d'interférence différentielle complexe de chacune de la pluralité de directions d'irradiation lumineuse sur la base de l'image d'amplitude complexe de chacune de la pluralité de directions d'irradiation lumineuse, et à générer une image de phase bidimensionnelle sur la base de l'image d'interférence différentielle complexe de chacune de la pluralité de directions d'irradiation lumineuse ;
une étape de génération d'image de phase tridimensionnelle consistant à générer l'image de phase tridimensionnelle entre la première position et la deuxième position sur la base de l'image de phase bidimensionnelle à chacune de la pluralité de positions ;
une étape de calcul de distribution d'indice de réfraction consistant à obtenir une distribution d'indice de réfraction tridimensionnelle de l'objet d'observation (S) entre la première position et la deuxième position sur la base de l'image de phase tridimensionnelle ; et
une troisième étape de génération d'image d'amplitude complexe consistant à générer, pour chacune de la pluralité de directions d'irradiation lumineuse, une image d'amplitude complexe à la deuxième position sur la base de l'image d'amplitude complexe à la première position et de la distribution d'indice de réfraction tridimensionnelle, dans lequel
sur la base de l'image d'amplitude complexe générée par la première étape de génération d'image d'amplitude complexe, les étapes de traitement respectives de la deuxième étape de génération d'image d'amplitude complexe, de l'étape de génération d'image de phase bidimensionnelle, de l'étape de génération d'image de phase tridimensionnelle, de l'étape de calcul de distribution d'indice de réfraction et de la troisième étape de génération d'image d'amplitude complexe sont exécutées séquentiellement.

16. Procédé d'observation selon l'une quelconque des revendications 11 à 15, dans lequel l'étape de génération d'image de phase bidimensionnelle inclut la génération de l'image de phase bidimensionnelle sur la base d'une somme des images d'interférence différentielle complexe de la pluralité de directions d'irradiation lumineuse.

17. Programme destiné à amener l'appareil d'observation (1A) de la revendication 1 à exécuter les étapes du procédé d'observation selon la revendication 9 ou l'une quelconque de ses revendications dépendantes, ou à amener l'appareil d'observation (1B) de la revendication 2 à exécuter les étapes du procédé d'observation selon la revendication 10 ou l'une quelconque de ses revendications dépendantes.

18. Support d'enregistrement lisible par ordinateur enregistrant le programme selon la revendication 17.
